(19) Europäisches Patentamt
European Patent Office
Office européen des brevets

(11) **EP 4 791 020 A1**

(12) **EUROPEAN PATENT APPLICATION**
published in accordance with Art. 153(4) EPC

(43) Date of publication:
**12.08.2026 Bulletin 2026/33**

(21) Application number: **24874373.4**

(22) Date of filing: **22.08.2024**

(51) International Patent Classification (IPC):
***H04N 25/53*** *(2023.01)* ***G06T 1/40*** *(2006.01)*
***H04N 23/54*** *(2023.01)* ***H04N 23/70*** *(2023.01)*
***H04N 23/95*** *(2023.01)* ***H04N 23/667*** *(2023.01)*
***H04N 25/40*** *(2023.01)* ***H04N 25/70*** *(2023.01)*

(52) Cooperative Patent Classification (CPC):
**G06T 1/20; H04N 23/54; H04N 23/667; H04N 23/70; H04N 23/95; H04N 25/40; H04N 25/53; H04N 25/70**

(86) International application number:
**PCT/JP2024/029744**

(87) International publication number:
**WO 2025/074759 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.10.2023 JP 2023171604**

(71) Applicant: **Sony Group Corporation**
**Tokyo 108-0075 (JP)**

(72) Inventors:
- **SATOH, Ryuta**
  **Atsugi-shi, Kanagawa 243-0014 (JP)**
- **AOKI, Suguru**
  **Atsugi-shi, Kanagawa 243-0014 (JP)**
- **RESHETOUSKI, Ilya**
  **Atsugi-shi, Kanagawa 243-0014 (JP)**

(74) Representative: **Witte, Weller & Partner Patentanwälte mbB**
**Postfach 10 54 62**
**70047 Stuttgart (DE)**

# (54) SENSOR, SENSOR SYSTEM, AND SENSING METHOD

(57) A sensor includes a pixel array section including a plurality of pixels each of which outputs a pixel signal corresponding to an amount of charge accumulated during an exposure period, and a drive unit that drives the pixel array section such that image data of one frame of a scene including a subject is obtained. The drive unit drives the pixel array section such that the plurality of pixels are exposed with an exposure pattern including a plurality of exposure periods in one frame period.

Fig. 1

1
SENSOR
8
SCENE
SUBJECT
9
LIGHT
3
2
PIXEL ARRAY SECTION
Ht
Wd
5
5-1 5-2 5-3 5-4
IMAGE DATA
6
PROCESSING UNIT
PROCESSING RESULT
4
DRIVE UNIT
41
CODE GENERATION SECTION
7
STORAGE SECTION
40
60
BASE FILTER
EXECUTION NW

EP 4 791 020 A1

## Description

Technical Field

The present disclosure relates to a sensor, a sensor system, and a sensing method.

Background Art

PTL 1, for example, discloses a technology for reconstructing a spatiotemporal domain from data of a single encoded image imaged by using an encoding shutter function for each pixel.

Citation List

Patent Literature

PTL 1: JP 2014-511531 A

Non Patent Literature

NPL 1: Dejia Xu, Peihao Wang, Yifan Jiang, Zhiwen Fan, Zhangyang Wang, "Signal Processing for Implicit Neural Representations", online, Dec. 13, 2022, Cornell University, retrieved on Feb. 22, 2023, Internet (URL: https://arxiv.org/pdf/2210.08772.pdf)

Summary

Technical Problem

The processing of image data may include a temporal operation such as a convolution operation in a temporal direction, for example. While temporal operations have been performed on time-series image data, the amount of data handled is large, leading to an increase in calculation cost.
One aspect of the present disclosure suppresses a calculation cost required for a temporal operation.

Solution to Problem

A sensor according to an aspect of the present disclosure includes a pixel array section including a plurality of pixels each configured to output a pixel signal corresponding to an amount of charge accumulated during an exposure period, and a drive unit configured to drive the pixel array section such that image data of one frame of a scene including a subject is obtained. The drive unit drives the pixel array section such that the plurality of pixels are exposed with an exposure period pattern including a plurality of exposure periods in one frame period.
A sensor system according to an aspect of the present disclosure includes a sensor configured to output image data and a processing unit configured to process the image data from the sensor. The sensor includes a pixel array section including a plurality of pixels, each configured to output a pixel signal corresponding to an amount of charge accumulated during an exposure period, and a drive unit configured to drive the pixel array section such that image data of one frame of a scene including a subject is obtained. The drive unit drives the pixel array section such that the pixels are exposed with an exposure period pattern including a plurality of exposure periods in one frame period. The processing by the processing unit includes inputting the image data from the sensor to an execution neural network (NW) configured to perform a spatial operation.
A sensing method according to an aspect of the present disclosure includes driving a pixel array section including a plurality of pixels, each configured to output a pixel signal corresponding to an amount of charge accumulated during an exposure period such that image data of one frame of a scene including a subject is obtained. The driving includes driving the pixel array section such that the pixels are exposed with an exposure period pattern including two or more exposure periods in one frame period.

Brief Description of Drawings

[Fig. 1] Fig. 1 is a diagram depicting an example of a schematic configuration of a sensor 1 according to an

embodiment.

[Fig. 2] Fig. 2 is a diagram depicting an example of multi-exposure imaging.

[Fig. 3] Fig. 3 is a diagram depicting an example of code C.

[Fig. 4] Fig. 4 is a diagram depicting an example of pixel groups.

[Fig. 5] Fig. 5 is a diagram depicting an example of the pixel groups.

[Fig. 6] Fig. 6 is a diagram depicting examples of code C.

[Fig. 7] Fig. 7 is a diagram depicting examples of the code C.

[Fig. 8] Fig. 8 is a diagram depicting an example of a schematic configuration of an execution NW 60.

[Fig. 9] Fig. 9 is a diagram depicting an example of generating the code C.

[Fig. 10] Fig. 10 is a diagram depicting an example of generating the code C.

[Fig. 11] Fig. 11 is a diagram depicting an example of generating the code C.

[Fig. 12] Fig. 12 is a diagram depicting an example of generating the code C.

[Fig. 13] Fig. 13 is a diagram depicting an example of generating the code C.

[Fig. 14] Fig. 14 is a diagram depicting an example of generating the code C.

[Fig. 15] Fig. 15 is a diagram depicting an example of generating the code C.

[Fig. 16] Fig. 16 is a diagram depicting an example of generating the code C.

[Fig. 17] Fig. 17 is a diagram depicting an example of generating the code C.

[Fig. 18] Fig. 18 is a diagram depicting an example of generating the code C.

[Fig. 19] Fig. 19 is a diagram depicting an example of generating the code C.

[Fig. 20] Fig. 20 is a diagram depicting an example of characteristics of an exposure period pattern P.

[Fig. 21] Fig. 21 is a diagram depicting an example of the characteristics of the exposure period pattern P.

[Fig. 22] Fig. 22 is a diagram depicting an example of the characteristics of the exposure period pattern P.

[Fig. 23] Fig. 23 is a diagram depicting an example of the characteristics of the exposure period pattern P.

[Fig. 24] Fig. 24 is a diagram depicting an example of the characteristics of the exposure period pattern P.

[Fig. 25] Fig. 25 is a diagram depicting an example of the characteristics of the exposure period pattern P.

[Fig. 26] Fig. 26 is a diagram depicting an example of the characteristics of the exposure period pattern P.

[Fig. 27] Fig. 27 is a diagram depicting an example of the characteristics of the exposure period pattern P.

[Fig. 28] Fig. 28 is a diagram depicting an example of the characteristics of the exposure period pattern P.

[Fig. 29] Fig. 29 is a diagram depicting an example of kernel weights W.

[Fig. 30] Fig. 30 is a diagram depicting an example of the kernel weights W.

[Fig. 31] Fig. 31 is a diagram depicting an example of the kernel weights W.

[Fig. 32] Fig. 32 is a diagram depicting an example of the kernel weights W.

[Fig. 33] Fig. 33 is a diagram depicting an example of the kernel weights W.

[Fig. 34] Fig. 34 is a diagram depicting an example of the kernel weights W.

[Fig. 35] Fig. 35 is a diagram depicting an example of the kernel weights W.

[Fig. 36] Fig. 36 is a diagram depicting an example of the kernel weights W.

[Fig. 37] Fig. 37 is a diagram depicting examples of a trigger.

[Fig. 38] Fig. 38 is a diagram depicting an example of switching the exposure period pattern P partway through one frame period T.

[Fig. 39] Fig. 39 is a diagram depicting an example of a change in mode.

[Fig. 40] Fig. 40 is a diagram depicting an example of switching processing of a processing unit 6 according to the switching of the exposure period pattern P.

[Fig. 41] Fig. 41 is a diagram depicting the example of switching the processing of the processing unit 6 according to the switching of the exposure period pattern P.

[Fig. 42] Fig. 42 is a diagram depicting an example of switching the processing of the processing unit 6 according to the switching of the exposure period pattern P.

[Fig. 43] Fig. 43 is a diagram depicting an example of switching the processing of the processing unit 6 according to the switching of the exposure period pattern P.

[Fig. 44] Fig. 44 is a diagram depicting an example of the switching of the processing of the processing unit 6 according to the switching of the exposure period pattern P.

[Fig. 45] Fig. 45 is a diagram depicting an example of a schematic configuration of a sensor system 1A according to an embodiment.

[Fig. 46] Fig. 46 is a diagram depicting an example of a schematic configuration of an information processing system 100 according to an embodiment.

[Fig. 47] Fig. 47 is a diagram depicting examples of a schematic configuration of a training target NW 130.

[Fig. 48] Fig. 48 is a diagram depicting an example of machine learning by a training section 13.

[Fig. 49] Fig. 49 is a diagram depicting examples of a generation method of input data 121.

[Fig. 50] Fig. 50 is a diagram depicting an example of the machine learning by the training section 13.

[Fig. 51] Fig. 51 is a diagram depicting examples of the generation method of the input data 121.
[Fig. 52] Fig. 52 is a diagram depicting an example of the machine learning by the training section 13.
[Fig. 53] Fig. 53 is a diagram depicting an example of filter regularization.
[Fig. 54] Fig. 54 is a diagram depicting examples of data augmentation.
[Fig. 55] Fig. 55 is a diagram depicting examples of the data augmentation.
[Fig. 56] Fig. 56 is a diagram depicting an example of generation of the execution NW 60 by a NW generation section 14.
[Fig. 57] Fig. 57 is a diagram depicting an example of the generation of the execution NW 60 by the NW generation section 14.
[Fig. 58] Fig. 58 is a diagram depicting an example of the generation of the execution NW 60 by the NW generation section 14.
[Fig. 59] Fig. 59 is a diagram depicting an example of the generation of the execution NW 60 by the NW generation section 14.
[Fig. 60] Fig. 60 is a diagram depicting an example of the generation of the execution NW 60 by the NW generation section 14.
[Fig. 61] Fig. 61 is a diagram depicting an example of a processing operation (information processing method, sensing method) executed in the information processing system 100.
[Fig. 62] Fig. 62 is a diagram depicting an example of processing operations (information processing method, sensing method) executed in the information processing system 100.
[Fig. 63] Fig. 63 is a diagram depicting a modification of the NW.
[Fig. 64] Fig. 64 is a diagram depicting a modification of the NW.
[Fig. 65] Fig. 65 is a diagram depicting a modification of the NW.
[Fig. 66] Fig. 66 is a diagram depicting an example of a hardware configuration of a device.

## Description of Embodiments

Hereinafter, embodiments of the present disclosure will be described in detail with reference to the drawings. Note that, in each of the following embodiments, the same elements are denoted by the same reference signs, and redundant description thereof will be omitted.

The present disclosure will be described in accordance with the following itemized order.

1. Embodiment of Sensor
2. Embodiment of Sensor System
3. Embodiment of Information Processing System
4. Modifications of NW
5. Example of Hardware Configuration of Device
6. Conclusion

## 1. Embodiment of Sensor

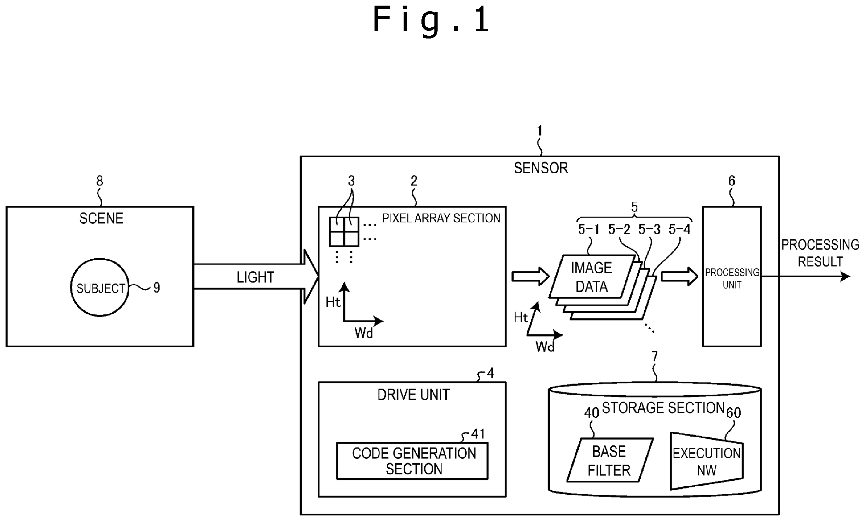

Fig. 1 is a diagram depicting an example of a schematic configuration of a sensor 1 according to an embodiment. In the description below, the sensor 1 is an image sensor (solid-state imaging device) such as a CMOS image sensor or a CCD image sensor.

An imaging target of the sensor 1 is referred to and illustrated as a scene 8. The scene 8 can include one or more subjects 9. The sensor 1 images the scene 8 and generates data of the image (image data). In the following description, the scene 8 and the one or more subjects 9 may be referred to as the scene 8 and the like or the subject 9 and the like.

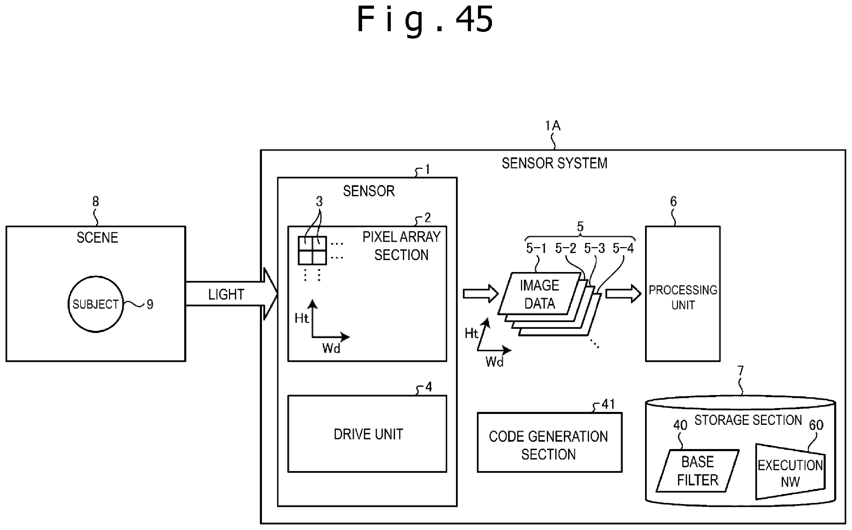

The sensor 1 includes a pixel array section 2, a drive unit 4, a processing unit 6, and a storage section 7. Note that some elements may be provided outside the sensor 1 instead of being included in the sensor 1. This will be further described below with reference to Fig. 45.

The pixel array section 2 includes a plurality of pixels 3. A width and a height of the pixel array section 2 are referred to as a width Wd and a height Ht, and orientations thereof are illustrated by arrows. The plurality of pixels 3 are disposed side by side in a width Wd direction and a height Ht direction (array directions). Light from the scene 8 is incident on each pixel 3 in the pixel array section 2.

Each pixel 3 outputs a pixel signal corresponding to an amount of charge accumulated during an exposure period. The pixel 3 includes a photoelectric conversion section, transistors, and the like. The photoelectric conversion section is, for example, a photodiode, and generates charge corresponding to a light amount of light incident during the exposure period. The transistors are used to extract the charge accumulated in the photoelectric conversion section to convert the charge into a voltage signal (pixel signal) or read out the pixel signal. The photoelectric conversion section, the

transistors, and the like are also referred to as a pixel circuit. Various known pixel circuits may be used.

The drive unit 4 drives the pixel array section 2. More specifically, the drive unit 4 drives each transistor in the pixel circuit of each pixel 3 such that exposure is performed at a desired timing and generation and readout of the pixel signal are performed in each pixel 3. For example, a drive signal is supplied from the drive unit 4 to a control terminal (gate or the like) of the corresponding transistor.

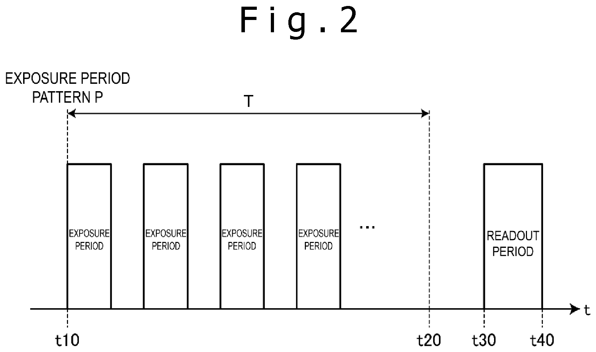

In the present embodiment, the drive unit 4 drives the pixel array section 2 such that the sensor 1 can perform multi-exposure imaging. The multi-exposure imaging will be described with reference to Fig. 2 as well.

Fig. 2 is a diagram depicting an example of the multi-exposure imaging. The horizontal axis represents time t. A period from time t10 to time t20 is a period in which exposure is possible, and this period is referred to as one frame period T. A pattern of the exposure periods included in the one frame period T is referred to as an exposure period pattern P. The exposure period pattern P can be specified by, for example, a start time, a period length, and an end time of each exposure period in the exposure period pattern P.

In the multi-exposure imaging, the exposure period pattern P includes a plurality of the exposure periods. The pixel 3 exposed with the exposure period pattern P outputs a pixel signal corresponding to the charge accumulated over the plurality of exposure periods in the exposure period pattern P. In the example depicted in Fig. 2, the pixel signals are output and read out from time t30 to time t40. An image obtained from the pixel signals thus read out forms an image obtained by superimposing the images corresponding to each of the plurality of exposure periods in the one frame period T.

Returning to Fig. 1, in a case in which the sensor 1 performs multi-exposure imaging, the drive unit 4 drives the pixel array section 2 such that the pixels 3 are exposed with the exposure period pattern P including the plurality of exposure periods in the one frame period T. Note that imaging other than multi-exposure imaging, that is, single-exposure imaging, is also possible. In a case in which the sensor 1 performs single-exposure imaging, the drive unit 4 drives the pixel array section 2 such that the pixels 3 are exposed with the exposure period pattern P including only one exposure period (length may be the same as or shorter than that of one frame period T) in the one frame period T. Unless otherwise specified, the sensor 1 performs multi-exposure imaging.

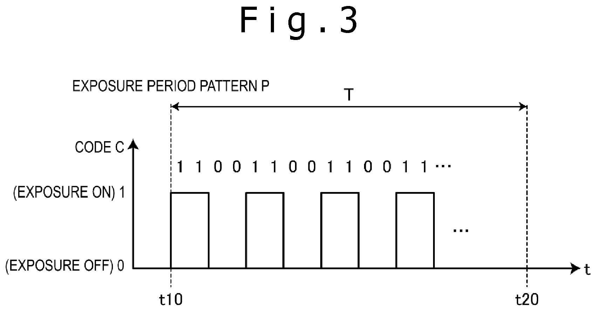

The exposure period pattern P including the plurality of exposure periods in the one frame period T weights an image in the one frame period T in a temporal direction. That is, the exposure period pattern P can correspond to kernel (filter) weights of a temporal operation. An example of the temporal operation is (operation of) convolution in the temporal direction. Unless otherwise specified, the temporal operation is convolution in the temporal direction. Note that "temporal operation" and "convolution in the temporal direction" may be read interchangeably as appropriate, as long as no contradiction arises. In order to obtain the exposure period pattern P for realizing a desired convolution kernel in the temporal direction, a code obtained by binarizing the weights of the convolution kernel in the temporal direction is used in the present embodiment. This code is referred to as code C. This will be described with reference to Fig. 3 as well.

Fig. 3 is a diagram depicting an example of the code C. The code C is described by two values of "1" (exposure on) and "0" (exposure off). "1" indicates a period in which exposure is performed, that is, an exposure period. "0" indicates a period in which exposure is not performed, that is, a non-exposure period. The exemplified code C can define the exposure period pattern P of Fig. 2 described above.

Returning to Fig. 1, the drive unit 4 includes a code generation section 41 that generates such code C as described above. The drive unit 4 drives the pixel array section 2 according to the code C generated by the code generation section 41, that is, such that the pixels 3 are exposed with the exposure period pattern P defined by the code C.

Information of a code that is an original form of the code C is prepared in advance as a base filter 40 (which can also be referred to as base code) and stored in the storage section 7. For example, the code generation section 41 generates the desired code C by changing the base filter 40. An example of the change is a change in duty ratio of "1" and "0" written by the base filter 40. Note that the code generation section 41 may generate the base filter 40 as the code C as is.

When the drive unit 4 drives the pixel array section 2 such that the sensor 1 performs multi-exposure imaging, each pixel 3 outputs a pixel signal corresponding to the charge accumulated across the plurality of exposure periods in the one frame period T. The pixel signal from each pixel 3 is processed by a signal processing circuit or the like (not illustrated), and thus the image data of one frame of the scene 8 is obtained. This image data is referred to as image data 5. The image data 5 is data of an image obtained by superimposing the images corresponding to the plurality of exposure periods in the one frame period T. Note that, similarly to the pixel array section 2, a width and a height with respect to the image data 5 are illustrated as the width Wd and the height Ht.

In one embodiment, the drive unit 4 drives the pixel array section 2 such that a plurality of the image data 5 are obtained for the same frame. In the example depicted in Fig. 1, four image data 5 are obtained at a time. To make the image data 5 distinguishable, the image data 5 are referred to as image data 5-1, image data 5-2, image data 5-3, image data 5-4, and the like. In a case in which the image data are not particularly distinguished from each other, the data is simply referred to as the image data 5.

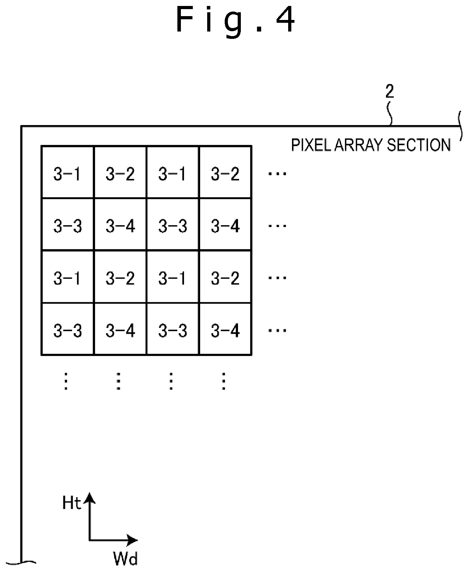

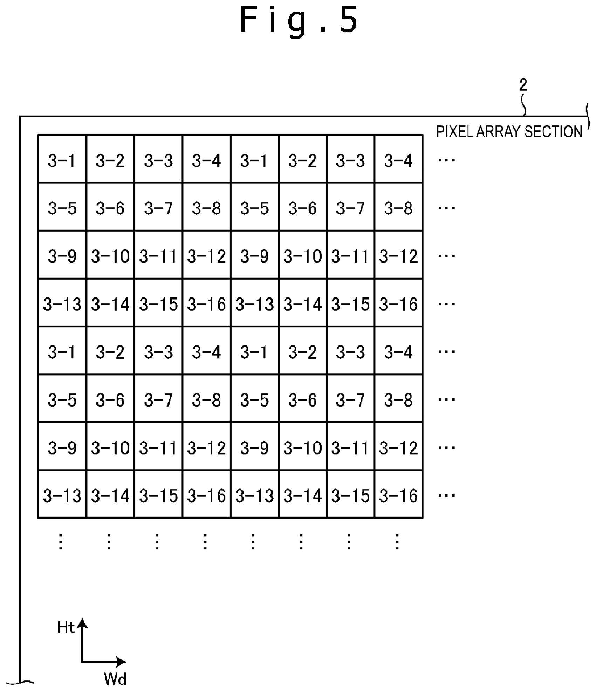

To obtain a plurality of the image data 5, the plurality of pixels 3 of the pixel array section 2 are grouped into a plurality of pixel groups. One pixel group includes at least one pixel 3. This will be described with reference to Fig. 4 and Fig. 5 as well.

Fig. 4 and Fig. 5 are diagrams depicting examples of the pixel groups. The pixels 3 of each pixel group are referred to and illustrated as a pixel 3-1, a pixel 3-2, and the like so as to be distinguished from each other. The pixels 3 denoted by the same reference sign belong to the same pixel group.

In the example depicted in Fig. 4, there are four pixel groups. The pixels 3 of each pixel group are denoted as the pixel 3-1 to the pixel 3-4. 2 x 2 pixel arrays (pixel units), each composed of four pixels 3 belonging to different pixel groups, are disposed side by side in the array directions (width Wd direction and height Ht direction). For example, the image data 5-1 described above is obtained on the basis of the pixel signals from the pixels 3-1. The image data 5-2 is obtained on the basis of the pixel signals from the pixels 3-2. The image data 5-3 is obtained on the basis of the pixel signals from the pixels 3-3. The image data 5-4 is obtained on the basis of the pixel signals from the pixels 3-4.

In the example depicted in Fig. 5, there are 16 pixel groups. The pixels 3 of each pixel group are denoted as the pixel 3-1 to pixel 3-16. 4 x 4 pixel arrays, each composed of 16 pixels 3 belonging to different pixel groups, are disposed side by side in the array directions.

The configuration is not limited to the examples depicted in Fig. 4 and Fig. 5 described above, various numbers of pixel groups may be present (number of pixel groups may even be one), and the pixels 3 may be arranged in various manners. By changing the number of pixel groups, it is possible to adjust the image data 5 obtained at one time. By increasing the number of pixel groups, it is possible to obtain more image data 5. By reducing the number of pixel groups, it is possible to suppress a circuit scale and simplify the configuration, for example.

Returning to Fig. 1, the drive unit 4 drives the pixel array section 2 such that one image data 5 is obtained from one pixel group. For example, the drive unit 4 may drive the pixel array section 2 such that at least the pixels 3 of the same pixel group are exposed with the same exposure period pattern P. Further, the drive unit 4 may drive the pixel array section 2 such that the pixels 3 of different pixel groups are exposed with different exposure period patterns P. Note that the drive unit 4 may drive the pixel array section 2 such that the pixels 3 of the same pixel group are exposed with the exposure period patterns P different from each other.

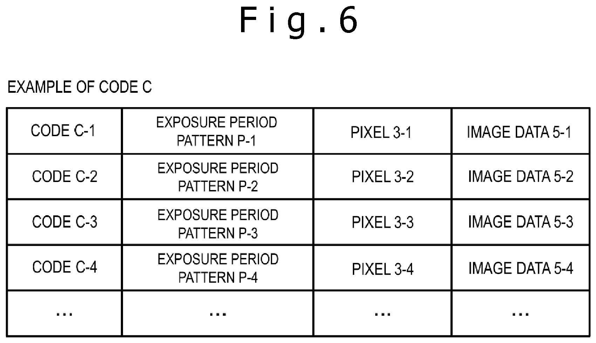

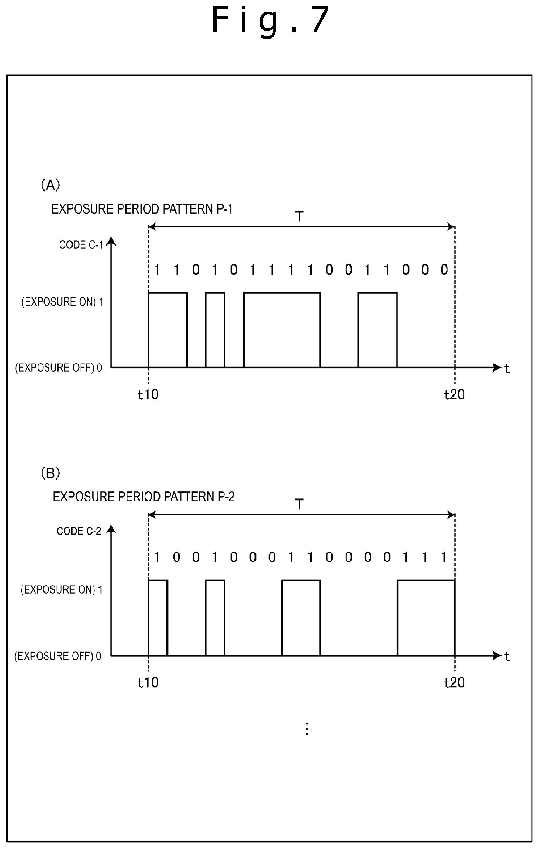

In a case in which the exposure period pattern P is made different for each pixel group, the code generation section 41 generates a plurality of the codes C (same number as number of pixel groups) that define the different exposure period patterns P. The drive unit 4 drives the pixel array section 2 such that the pixels 3 of the corresponding pixel group are exposed with the exposure period pattern P defined by each code C generated by the code generation section 41. This will be described with reference to Fig. 6 and Fig. 7 as well.

Fig. 6 and Fig. 7 are diagrams depicting examples of the code C. In Fig. 6, as the plurality of codes C generated by the code generation section 41, code C-1 to code C-4 are exemplified. The code C-1 to the code C-4 define an exposure period pattern P-1 to an exposure period pattern P-4.

The drive unit 4 drives the pixel array section 2 such that the pixels 3-1 are exposed with the exposure period pattern P-1 defined by the code C-1. As a result, the image data 5-1 is obtained. The drive unit 4 drives the pixel array section 2 such that the pixels 3-2 are exposed with the exposure period pattern P-2 defined by the code C-2. As a result, the image data 5-2 is obtained. The drive unit 4 drives the pixel array section 2 such that the pixels 3-3 are exposed with the exposure period pattern P-3 defined by the code C-3. As a result, the image data 5-3 is obtained. The drive unit 4 drives the pixel array section 2 such that the pixels 3-4 are exposed with the exposure period pattern P-4 defined by the code C-4. As a result, the image data 5-4 is obtained.

(A) of Fig. 7 depicts a specific example of the code C-1. (B) of Fig. 7 depicts a specific example of the code C-2. The code C-1 and the code C-2 differ from each other and define the exposure period patterns P that differ from each other accordingly. Although not illustrated, the same applies to not only the code C-1 and the code C-2, but also the code C-3 and the code C-4.

The exposure period pattern P defined by the code C can be imparted with various characteristics. For example, by shortening the exposure period, it is possible to lessen the likelihood of blurring, even in the scene 8 and the like with motion. By lengthening the exposure period, it is possible to handle a dark scene 8 (having low brightness) and the like. By using a combination of a plurality of the codes C having different arrangements of exposure periods and non-exposure periods, it is possible to suppress acquisition omission (loss) of information of the scene 8 in the one frame period T.

Returning to Fig. 1, the pixels 3 of each pixel group are exposed with the exposure period pattern P defined by the code C as described above, for example, and the corresponding image data 5, in this example, the image data 5-1 to the image data 5-4, are obtained. As described above, the code C is obtained by binarizing the weights of the convolution kernel in the temporal direction. The image data 5 obtained by the exposure period pattern P defined by such code C is data of an image after convolution (operation) in the temporal direction. Note that the convolution in the temporal direction means extraction of a feature amount in the temporal direction, and thus the image data 5 can also be said to be data of an image obtained by extracting the feature amount in the temporal direction.

The processing unit 6 processes the image data 5. Any processing related to an image may be executed. An example of the processing is image recognition processing. Examples of the image recognition include recognition of the subject 9 and the like, and recognition of motion or movement of the subject 9 and the like. Note that the recognition may be interpreted to mean specification, identification, differentiation, and the like, and these may be read interchangeably as

appropriate, as long as no contradiction arises. Another example of the processing is moving image generation processing.

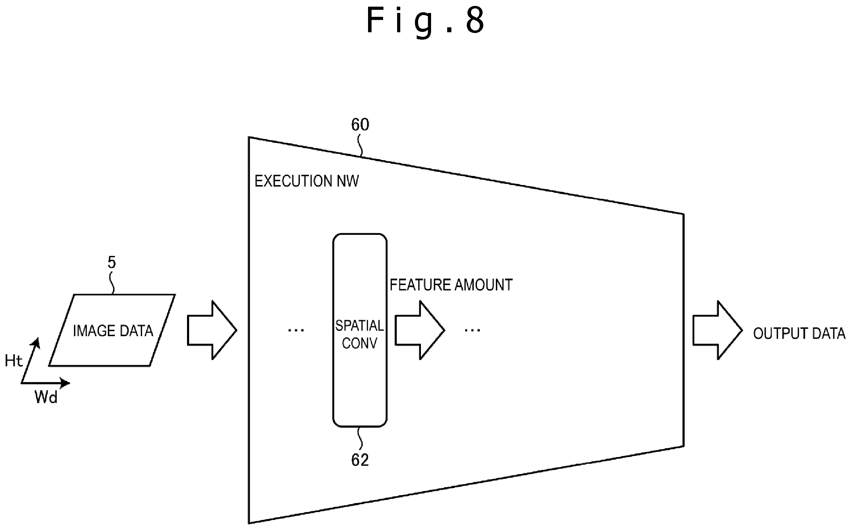

In the present embodiment, the processing unit 6 processes the image data 5 by using a trained model, for example, a neural network (NW). Note that the trained model is not limited to the NW. For example, a trained model that has a function similar to that of the NW described in the present disclosure or can be generated by using similar machine learning may be used. Further, application of technologies such as trained models that may be developed in the future is not excluded. Further, in the following, description is made under the assumption that the trained model is the NW. The NW used by the processing unit 6 is referred to and illustrated as an execution NW 60. The execution NW 60 is generated in advance by machine learning and stored in the storage section 7 such that output data is output when the image data 5 is input. The output data of the execution NW 60 may include any data that can be obtained from the image data 5. For example, the output data of the execution NW 60 can be data indicating a result of the image recognition processing or data indicating a result of the moving image generation processing described above. The execution NW 60 will be described with reference to Fig. 8 as well.

Fig. 8 is a diagram depicting an example of a schematic configuration of the execution NW 60. The execution NW 60 is configured so as to perform a spatial operation. The execution NW 60 may include a computation layer that performs the spatial operation. Examples of the computation layer include a convolutional layer (convolution layer), a full connection layer, and a self-attention layer. The convolutional layer is a layer that performs a convolution operation. The full connection layer is a layer that connects all nodes to each other. The self-attention layer is a layer that extracts a relationship between input data. The details of the convolutional layer, the full connection layer, and the self-attention layer can be understood by those skilled in the art, and description herein will be omitted. Unless otherwise specified, the spatial operation of the execution NW 60 is (operation of) convolution in a spatial direction, and the computation layer thereof is the convolutional layer. Note that "spatial operation" and "convolution in the spatial direction" may be read interchangeably as appropriate, as long as no contradiction arises. The computation layer of the execution NW 60 is referred to and illustrated as a spatial convolutional layer 62.

The spatial convolutional layer 62 performs convolution in the spatial direction of the image data 5. Specifically, the image data 5 is input to the spatial convolutional layer 62 directly or via another layer. The spatial convolutional layer 62 convolutes the input image data 5 in the spatial direction, more specifically, in a two-dimensional spatial direction of the width Wd direction and the height Ht direction, and extracts a feature amount in each direction.

The execution NW 60 need not include a convolutional layer that performs convolution in the temporal direction. This is because the image data 5 is data of an image after convolution in the temporal direction as described above. The execution NW 60 can also be said to be a trained model that outputs output data when the image data 5 convolved in the temporal direction (subjected to temporal operation) is input.

Returning to Fig. 1, the processing unit 6 processes the image data 5 by using the execution NW 60 described above. The processing unit 6 inputs the image data 5 to the execution NW 60. The execution NW 60 outputs the output data. The processing unit 6 acquires the output data output by the execution NW 60. The processing unit 6 outputs the acquired output data or data based on the output data as a processing result.

As described above, the image data 5 input to the execution NW 60 is the data of an image after convolution in the temporal direction. When this image data is input to the execution NW 60, the convolution in the spatial direction by the spatial convolutional layer 62 is performed. As a result, in the sensor 1, all convolutions in the three-dimensional directions of the temporal direction and the spatial direction (width Wd direction and height Ht direction) are performed on the image data 5.

It should be noted that the convolution in the temporal direction is realized by the driving of the pixel array section 2 by the drive unit 4, not by the execution NW 60 used by the processing unit 6. It can also be said that the convolution in the temporal direction is realized by hardware. The execution NW 60 need not include a convolutional layer for performing convolution in the temporal direction. It can be said that the convolution in the temporal direction need not be performed by software. This makes it possible to suppress a calculation cost required for convolution in the temporal direction (temporal operation) accordingly. This also makes it possible to suppress power consumption.

Examples of Generation of Code C

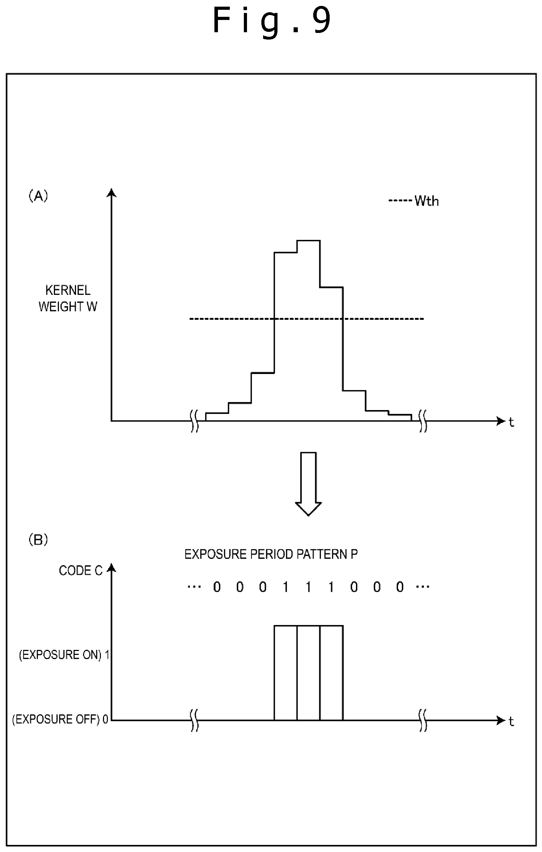

Several examples of the generation of the code C will now be described with reference to Fig. 9 to Fig. 19. In the following description, the weights of the convolution kernel (filter) in the temporal direction are also referred to as kernel weights W. This code C subsequently exemplified may be included in the base filter 40 or may be generated by the code generation section 41 on the basis of the base filter 40.

Fig. 9 to Fig. 19 are diagrams depicting examples of the generation of the code C. (A) in each drawing depicts the given kernel weights W (scalar values thereof). (B) of each drawing depicts the code C generated by binarization of the kernel weights W.

In the examples depicted in Fig. 9 to Fig. 12, the code C is generated by using threshold processing. The

threshold set for the kernel weights W is referred to as a threshold Wth. For example, the kernel weights W equal to or greater than the threshold Wth are converted into "1" (exposure on), and the kernel weights W less than the threshold Wth are converted into "0" (exposure off).

In the example depicted in Fig. 9, the threshold Wth is fixed. The kernel weights W can be binarized by a simple operation.

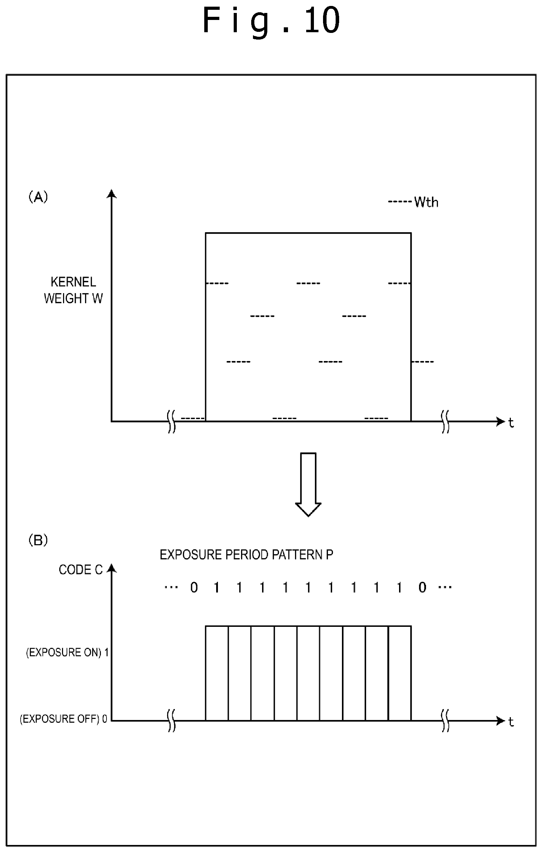

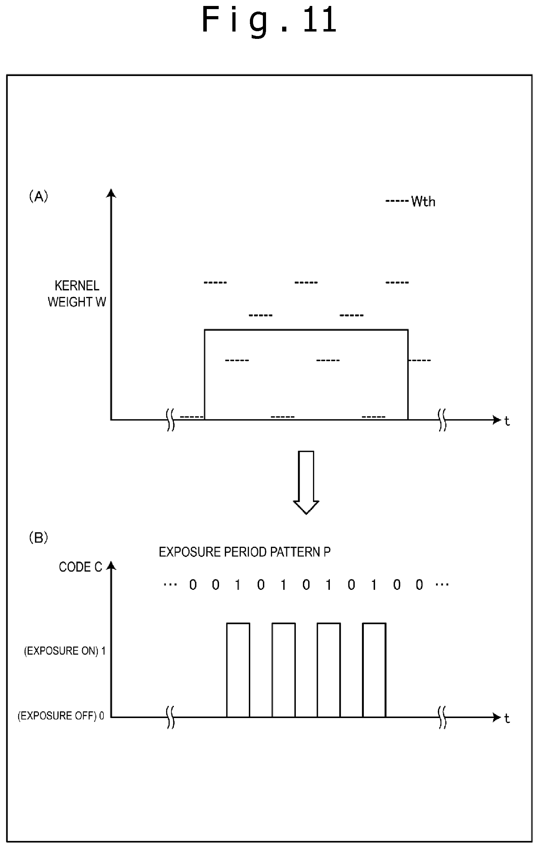

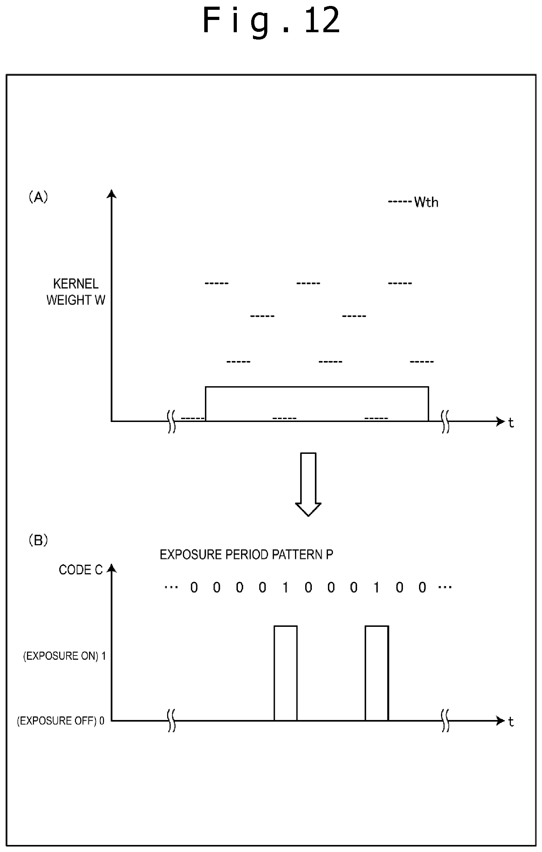

In the examples depicted in Fig. 10 to Fig. 12, the dither method is used. The value of the threshold Wth can vary depending on the time (dither threshold). For example, as depicted in (A) of Fig. 10, (A) of Fig. 11, and (A) of Fig. 12, even in a case in which the kernel weights W are constant, different codes C are obtained depending on a magnitude of the kernel weight W and the set threshold Wth. Specifically, in the code C depicted in (B) of Fig. 10, "1" is continuously written. In the code C depicted in (B) of Fig. 11, "0" and "1" are alternately written. In the code C depicted in (B) of Fig. 12, these values are written such that the number of "0"s is greater than the number of "1"s. For example, even in a case in which the kernel weights W are constant, it is possible to prevent "1" from being continuous or "0" from being continuous.

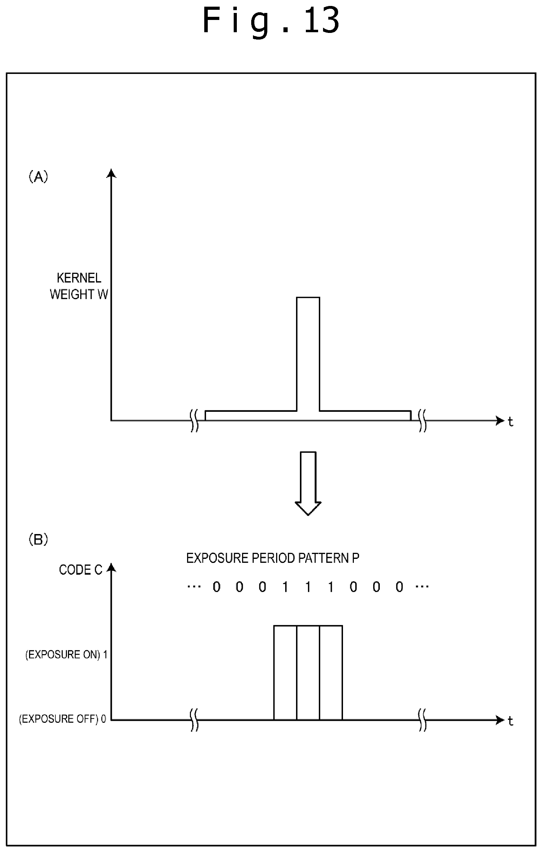

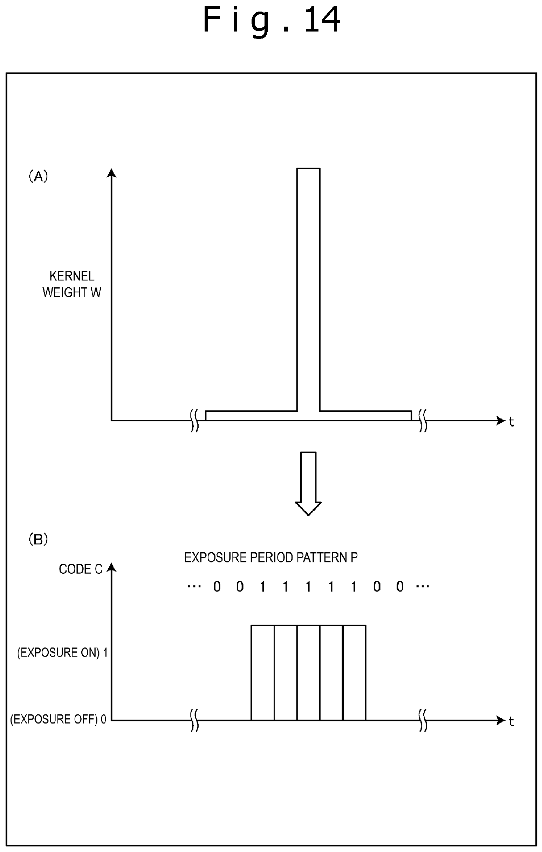

In the examples depicted in Fig. 13 and Fig. 14, "1" is continuously written in a quantity corresponding to the magnitude (peak height) of the kernel weights W. For example, as depicted in (A) of Fig. 13, in a case in which the kernel weight W at a certain time is very large, "1" is written in the code C obtained therefrom over three consecutive periods including that time, as depicted in (B) of Fig. 13. The kernel weights W depicted in (A) of Fig. 14 are even larger, and "1" is written over five consecutive periods in the code C obtained therefrom, as depicted in (B) of Fig. 14.

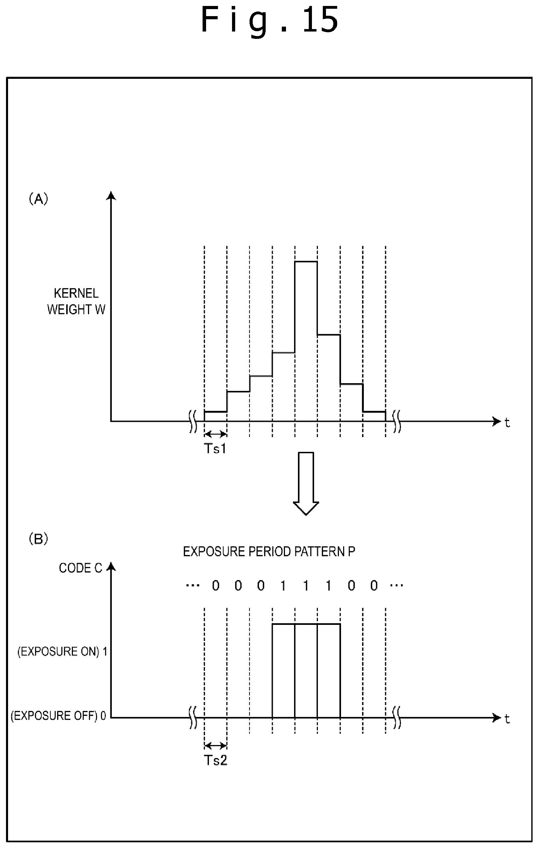

Examples of samplings are depicted in Fig. 15 to Fig. 19. A sampling cycle of the kernel weights W is referred to as a sampling cycle Ts1. The reciprocal of the sampling cycle Ts1 is a sampling frequency of the kernel weights W.

The sampling cycle of the code C is referred to as a sampling cycle Ts2. The sampling cycle Ts2 is a minimum unit of the exposure period (exposure cycle) that can be defined by the code C. The reciprocal of the sampling cycle Ts2 is a sampling frequency of the code C, and is the reciprocal of the exposure cycle (also describable as operating frequency of exposure).

In the example depicted in Fig. 15, the sampling cycle Ts1 of the kernel weights W is the same as the sampling cycle Ts2 of the code C (Ts1 = Ts2). In other words, the sampling frequency of the convolution kernel is the same as the operating frequency of the exposure. The kernel weights W are binarized by the threshold processing described above.

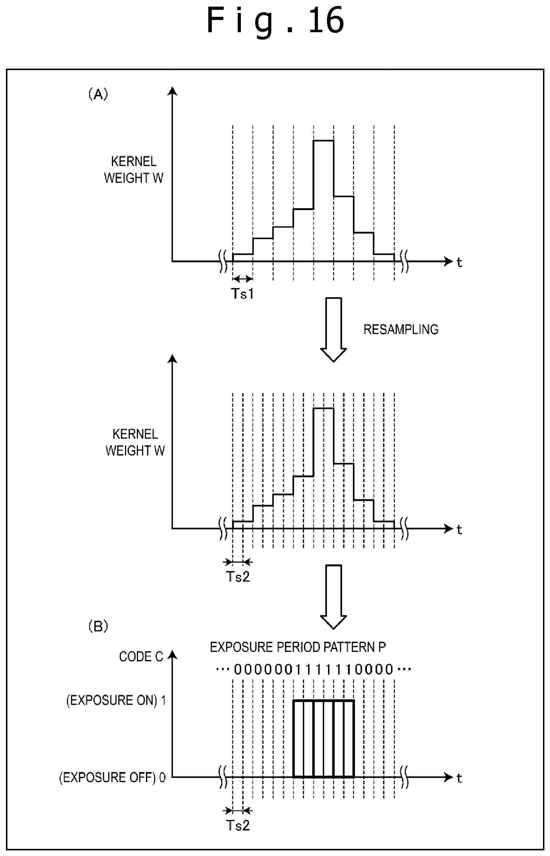

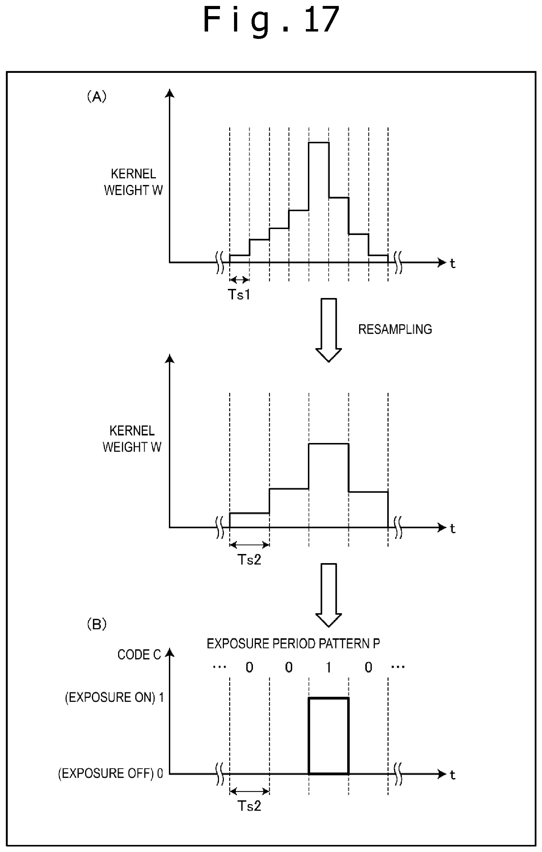

In the examples depicted in Fig. 16 and Fig. 17, the sampling cycle Ts1 of the kernel weights W and the sampling cycle Ts2 of the code C differ from each other. In this case, the kernel weights W are resampled (subsampled) at the sampling cycle Ts2 of the code C and then binarized. In the example depicted in Fig. 16, the sampling cycle Ts1 of the kernel weights W is longer than the sampling cycle Ts2 of the code C (Ts1 > Ts2). In other words, the sampling frequency of the kernel weights W is lower than the operating frequency of the exposure. In the example depicted in Fig. 17, the sampling cycle Ts1 of the kernel weights W is shorter than the sampling cycle Ts2 of the code C (Ts1 < Ts2). In other words, the sampling frequency of the kernel weight W is higher than the operating frequency of the exposure.

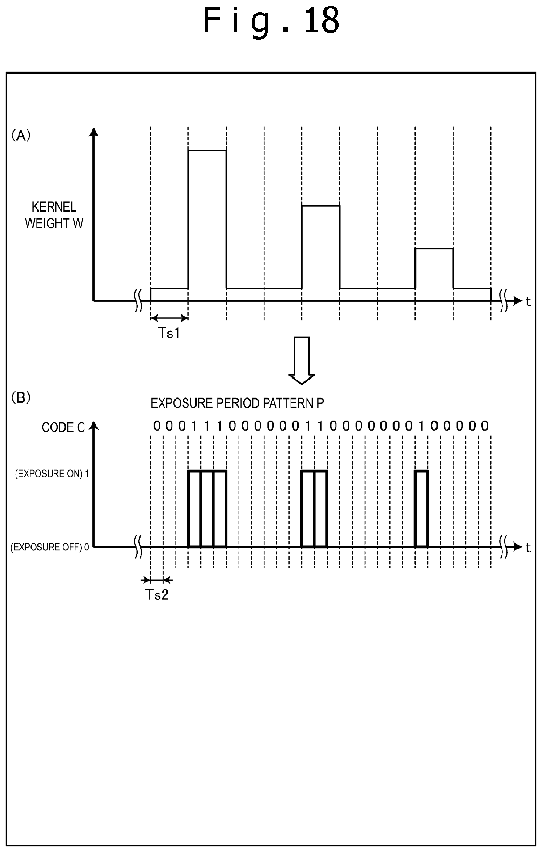

In the example depicted in Fig. 18, the kernel weights W are binarized without performing resampling. For example, as described above with reference to Fig. 13 and Fig. 14, the kernel weights W are binarized in accordance with a peak height.

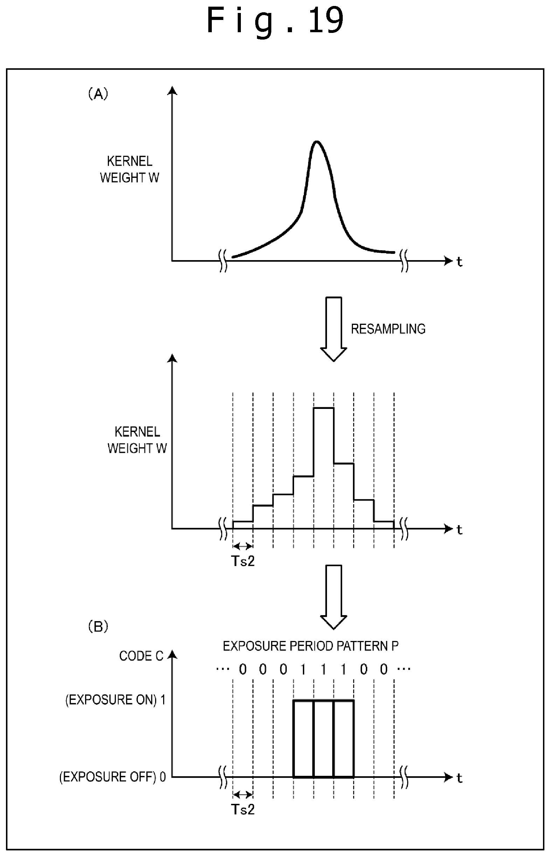

In the example depicted in Fig. 19, a continuous function describing the kernel weights W is given. The kernel weights W described by the continuous function are sampled at the sampling cycle Ts2 of the code C and then binarized.

Example of Characteristics of Exposure Period Pattern P

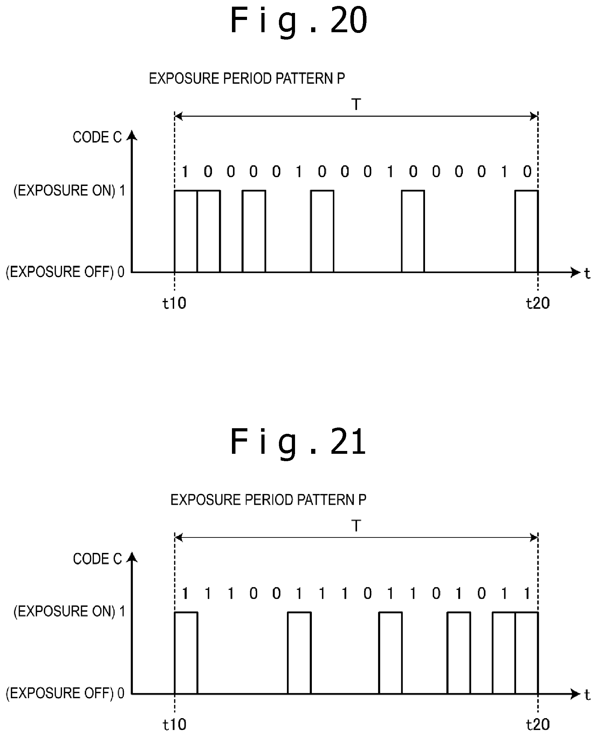

As described above, the code C defining the exposure period pattern P having various characteristics is generated. In other words, the exposure period pattern P is adjusted by the code C such that the exposure period pattern P has various characteristics. Several examples will be described with reference to Fig. 20 to Fig. 28.

Fig. 20 to Fig. 28 are diagrams depicting examples of the characteristics of the exposure period pattern P.

In the examples depicted in Fig. 20 and Fig. 21, the exposure period pattern P is adjusted so as to weigh the exposure periods in a portion of the one frame period T. In the exposure period pattern P exemplified in Fig. 20, the exposure periods in the first half of the one frame period are weighted. The exposure period in the first half of the one frame period T is longer than the exposure period in the second half. In the exposure period pattern P exemplified in Fig. 21, the exposure periods in the second half of the one frame period T are weighted. The exposure period in the second half of the one frame period T is longer than the exposure period in the first half.

The code C defining an exposure period pattern P such as in Fig. 20 and Fig. 21 described above may be generated in accordance with, for example, the characteristics of the sensor 1. As an example, even in a case in which a total exposure period (total period of exposure periods in one frame period T) is the same, if the sensor 1 is such that a signal-to-noise (SN) ratio improves when the exposure period in the first half of the one frame period T is longer than the exposure period in the second half, code C such as in Fig. 20 described above may be generated. Conversely, if the sensor 1 is such that the SN ratio improves when the exposure period of the second half of the one frame period T is longer than the exposure period of the first half, code C such as depicted in Fig. 21 described above may be generated. The image data 5

having a high SN ratio is easily obtained.

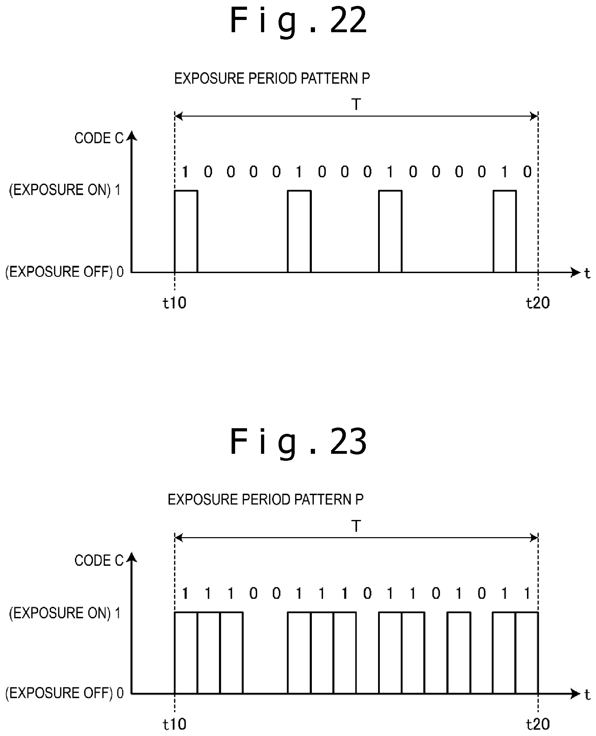

In the examples depicted in Fig. 22 and Fig. 23, the exposure period pattern P is adjusted so as to have a desired total exposure period. The exposure period pattern P exemplified in Fig. 22 is adjusted so as to shorten the total exposure period. The code C is generated such that "0" (exposure off) is written more than "1" (exposure on). The exposure period pattern P exemplified in Fig. 23 is adjusted so as to lengthen the total exposure period. The code C is generated such that "1" (exposure on) is written more than "0" (exposure off).

The code C defining an exposure period pattern P such as in Fig. 22 and Fig. 23 described above may be generated in accordance with a brightness of the scene 8 and the like, for example. As an example, if the scene 8 and the like are bright and the light amount of the light incident on the pixels 3 is large, code C such as in Fig. 22 described above may be generated. This makes it possible to suppress saturation of (photoelectric conversion sections of) the pixels 3 and obtain the appropriate image data 5. If the scene 8 and the like are dark and the light amount of the light incident on the pixels 3 is small, code C such as in Fig. 23 described above may be generated. By lengthening the total exposure period and incorporating light of a large amount, it becomes easy to obtain the image data 5 having a high SN ratio.

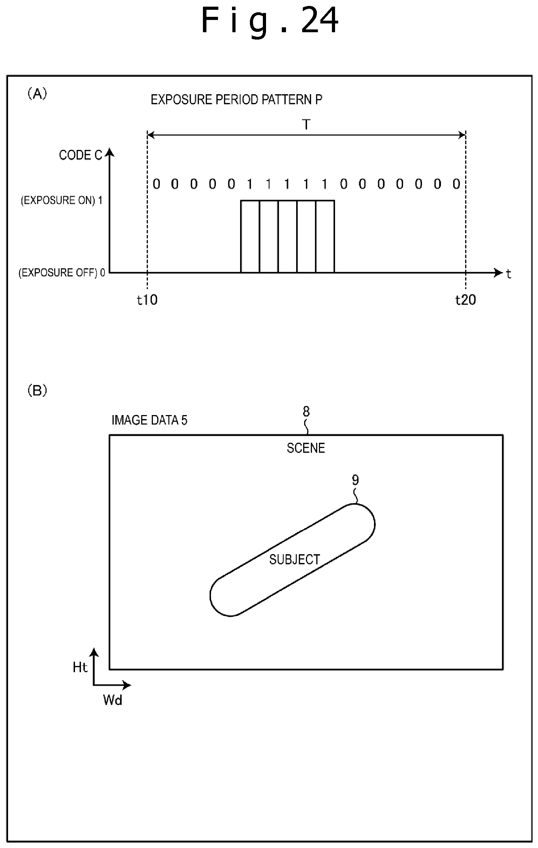

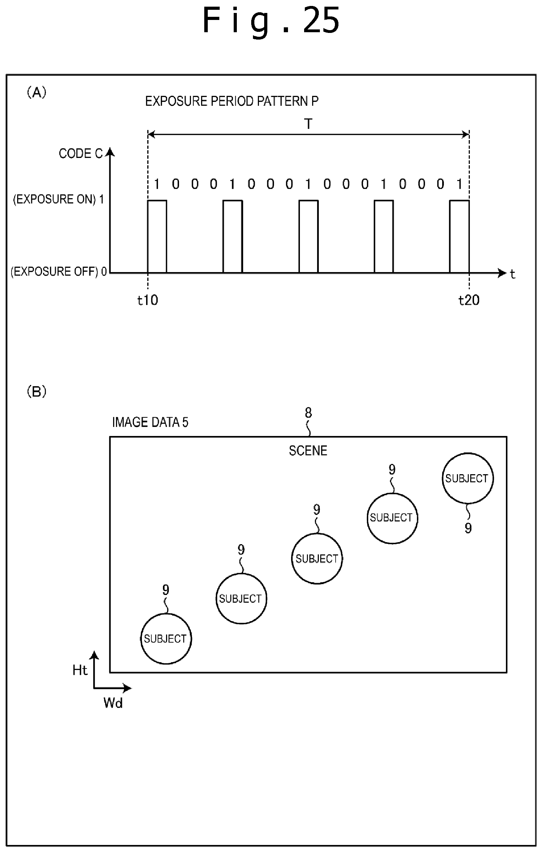

In the examples depicted in Fig. 24 and Fig. 25, the exposure period pattern P is adjusted so as to include exposure periods of a desired sparsity or density.

The exposure period pattern P exemplified in (A) of Fig. 24 is adjusted so as to densely (adjacently, for example) include the plurality of exposure periods on a time axis. In the code C, "1" (exposure on) is written across five consecutive periods. For example, when the scene 8 and the like during movement are imaged, image data 5 such as depicted in (B) in Fig. 24 is obtained. Although it is difficult to recognize the movement of the scene 8 and the like because of blurring, there is an advantage that artifacts such as seen in Fig. 25 below are reduced.

The exposure period pattern P exemplified in (A) of Fig. 25 is adjusted so as to sparsely include the plurality of exposure periods (in a spaced apart manner, for example) on the time axis. In the code C, "1" (exposure on) is written in five periods spaced apart. For example, when the scene 8 including the moving subject 9 is imaged, image data 5 such as depicted in (B) of Fig. 25 is obtained. Although artifacts occur, there is an advantage that the movement of the scene 8 and the like is easily recognized.

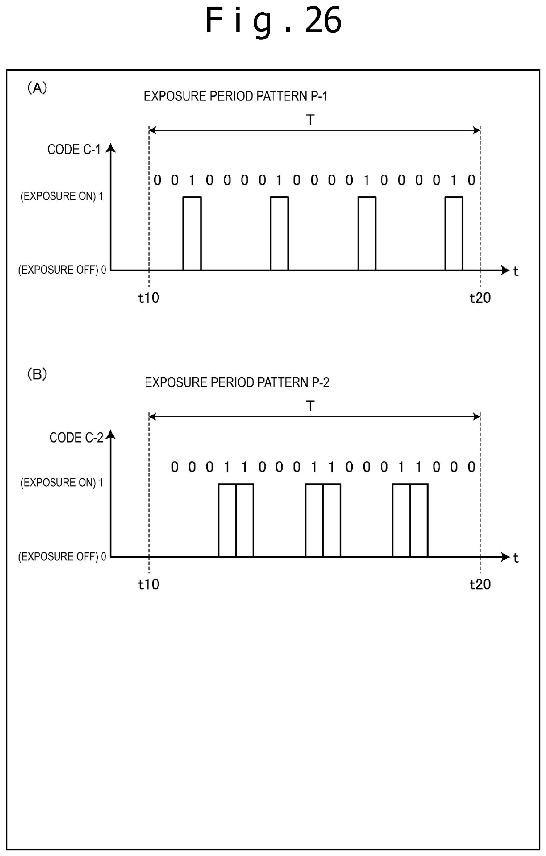

For example, the exposure period patterns P having different characteristics such as in Fig. 24 and Fig. 25 described above may be used together (in combination). This makes it possible to obtain the respective advantages. That is, the pixels 3 of a certain pixel group may be exposed with an exposure period pattern P such as in Fig. 24 described above, and the pixels 3 of another pixel group may be exposed with an exposure period pattern P such as in Fig. 25 described above. Several further examples of combinations of the exposure period patterns P will now be described with reference to Fig. 26 to Fig. 28.

Fig. 26 to Fig. 28 depict examples of combinations of the exposure period patterns P having different characteristics. The exposure period pattern P-1 defined by the code C-1 depicted in (A) of each drawing and the exposure period pattern P-2 defined by the code C-2 depicted in (B) of each drawing are used in combination.

In the example depicted in Fig. 26, the exposure periods of the exposure period pattern P-2 defined by the code C-2 overlap the non-exposure periods of the exposure period pattern P-1 defined by the code C-1 on the time axis. The exposure periods of the exposure period pattern P-2 can also be said to fill at least a portion of each interval (non-exposure period) between the exposure periods of the exposure period pattern P-1. This makes it possible to suppress redundant information acquisition and increase allocation to other exposure period patterns P.

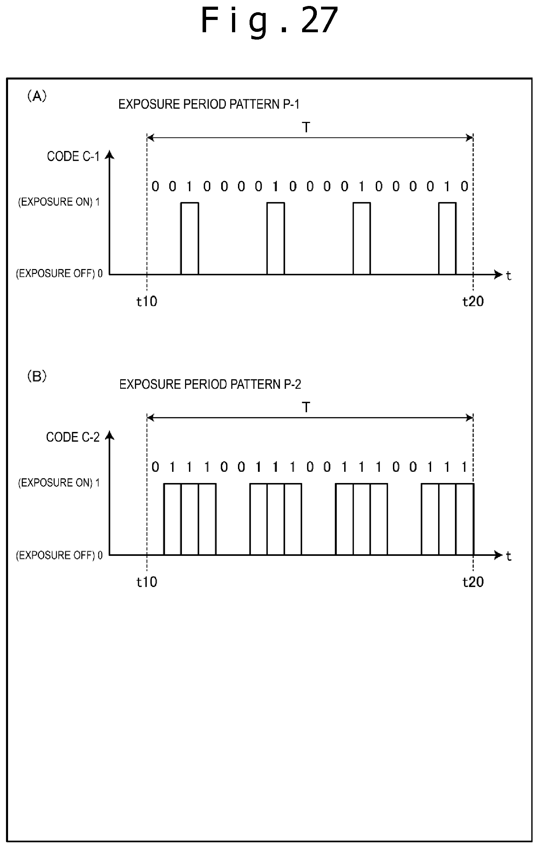

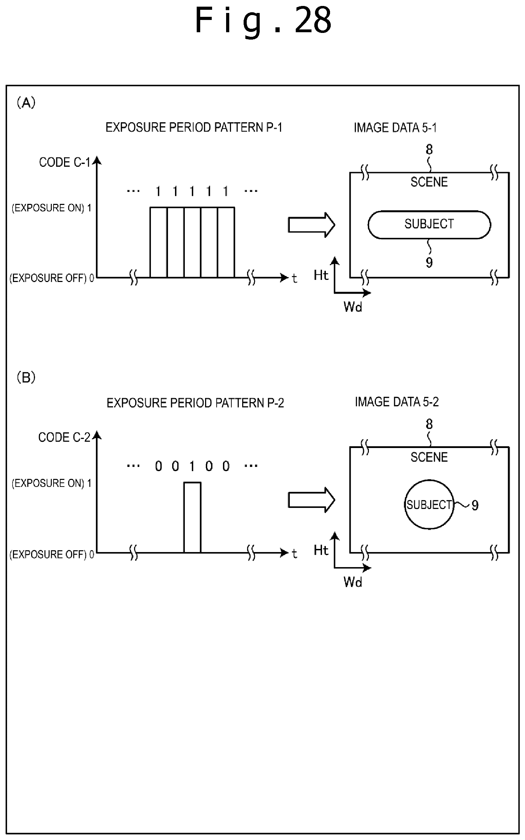

In the example depicted in Fig. 27, the exposure periods of the exposure period pattern P-2 defined by the code C-2 overlap the exposure periods of the exposure period pattern P-1 defined by the code C-1 on the time axis, and also overlap at least a portion of each non-exposure period of the exposure period pattern P-1. To the extent that the overlap is provided, reliability of information acquisition can be improved. Further, the presence or absence of movement of the scene 8 and the like is more easily recognized. This will be described with reference to Fig. 28 as well.

For example, the image data 5-1 depicted in (A) of Fig. 28 is obtained on the basis of the exposure period pattern P-1 depicted in the same drawing. The image data 5-2 depicted in (B) of Fig. 28 is obtained on the basis of the exposure period pattern P-2 depicted in the same drawing. With the two image data 5 of the image data 5-1 and 5-2 being obtained, the movement of the subject 9 and the like is recognized more easily than in a case in which only one thereof is obtained.

Example of Kernel Weights W

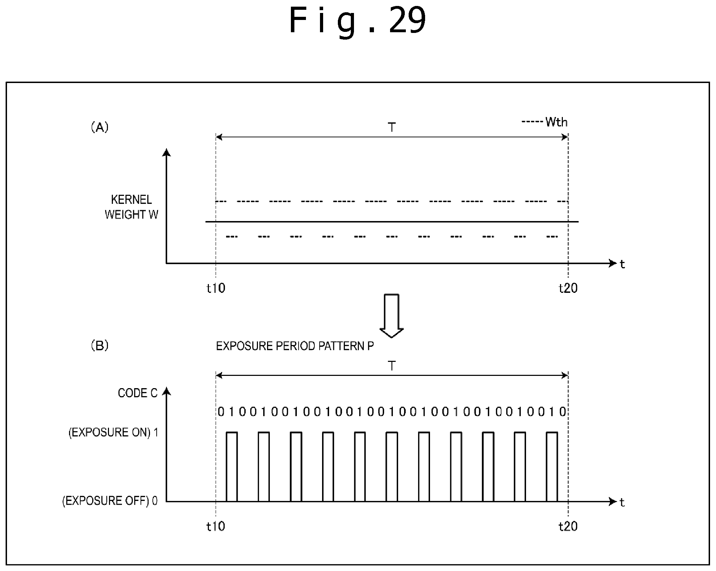

Various kernel weights W used for generation of the code C can exist. For example, a continuous function describing the kernel weights W may be used. Handcrafting of the kernel weights W is also possible. This will be described with reference to Fig. 29 to Fig. 36 as well.

Fig. 29 to Fig. 36 are diagrams depicting examples of the kernel weights W. In the examples depicted in Fig. 29 to Fig. 31, the kernel weights W are described by a continuous function having a constant value.

With use of the dither method described above, kernel weights W such as depicted in (A) of Fig. 29 are binarized, and the code C defining an exposure period pattern P such as depicted in (B) in Fig. 29 is generated. As described above,

even when the kernel weights W are constant, it is possible to prevent consecutive "1"s and consecutive "0"s (write "1"s and "0"s in a balanced manner).

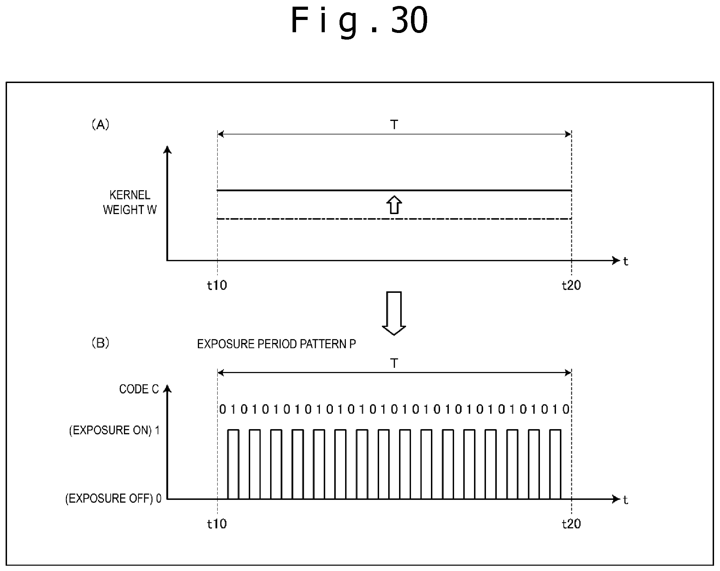

In the example depicted in (A) of Fig. 30, the kernel weights W are greater than the kernel weights W in Fig. 29 described above (illustrated by dashed-dotted line in (A) of Fig. 30). From the kernel weights W, code C such as depicted in (B) of Fig. 30 is generated. In the exposure period pattern P defined by the code C, the exposure periods are denser than those in the exposure period pattern P defined by the code C in (B) of Fig. 29 described above. Further, the total exposure period is long.

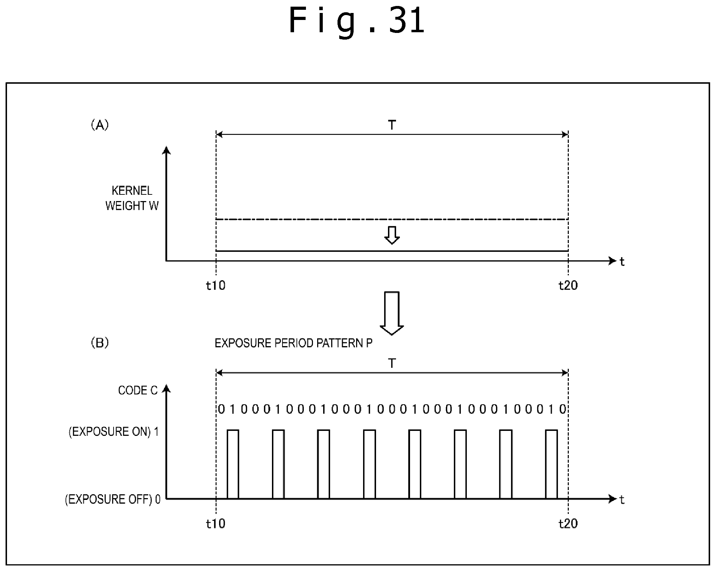

In the example depicted in (A) of Fig. 31, the kernel weights W are less than in Fig. 29 described above. From the kernel weights W, code C such as depicted in (B) of Fig. 31 is generated. In the exposure period pattern P defined by the code C, the exposure periods are sparser than in the exposure period pattern P defined by the code C in (B) of Fig. 29 described above. Further, the total exposure period is shortened.

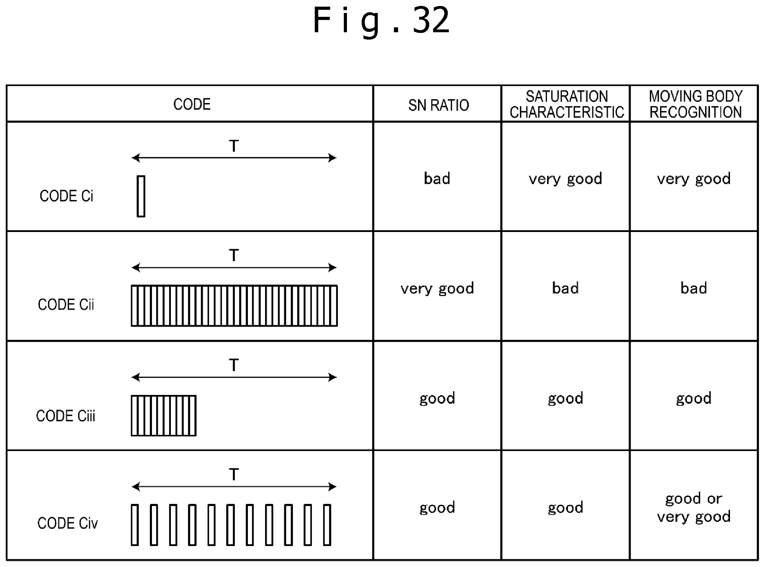

The codes C generated from kernel weights W such as in Fig. 29 to Fig. 31 described above may be selectively used in accordance with the brightness of the scene 8 and the like, for example. The reason is similar to that in Fig. 22 and Fig. 23 described above, and thus the description thereof will not be repeated here. Features of the code C in which "1"s and "0"s are written in a balanced manner as in Fig. 29 to Fig. 31 will now be described with reference to Fig. 32 as well.

Fig. 32 exemplifies four types of codes Ci to Civ. Further, as the features thereof, an SN ratio, a saturation characteristic, and moving object recognition are exemplified. The saturation characteristic herein indicates the difficulty of saturation of (photoelectric conversion section of) the pixel 3. The moving object recognition indicates ease of recognition of movement, motion, and the like of the subject 9 and the like.

The code Ci defines the exposure period pattern P for performing single-exposure imaging. The SN ratio is bad, but the saturation characteristic and the movement recognition are very good. The code Cii defines the plurality of exposure periods that are continuous on the time axis across the one frame period T. The SN ratio is very good, but the saturation characteristic and the movement recognition are bad. The code Ciii defines the plurality of exposure periods that are continuous on the time axis across only a portion (first half in this example) of the one frame period T. With an appropriate exposure period set, the SN ratio, the saturation characteristic, and the movement recognition are all improved. In the code CiV, "1"s and "0"s are written in a balanced manner, similarly to Fig. 29 to Fig. 31 described above. The SN ratio, the saturation characteristic, and the movement recognition are all improved. With regard to the movement recognition, the minimal blur as compared with that of the code Ciii facilitates recognition of the scene 8 and the subject 9 using the execution NW 60 by the processing unit 6 in a subsequent stage, which may result in better improvement than that with the code Ciii. However, artifacts may occur.

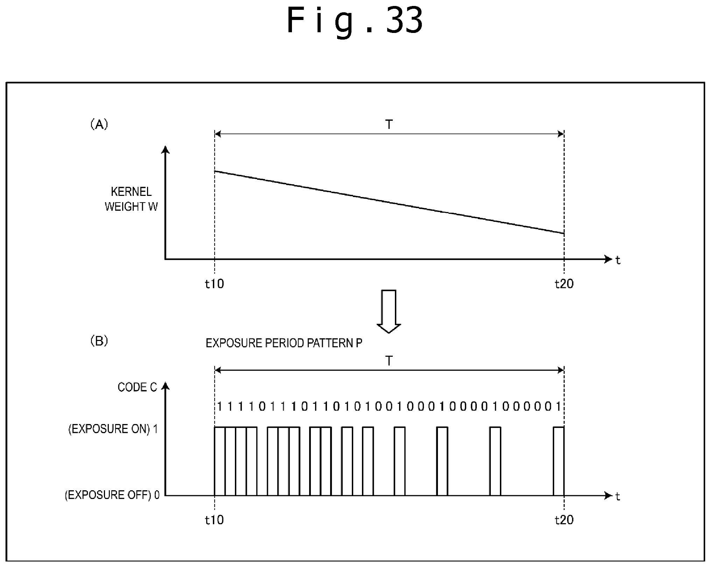

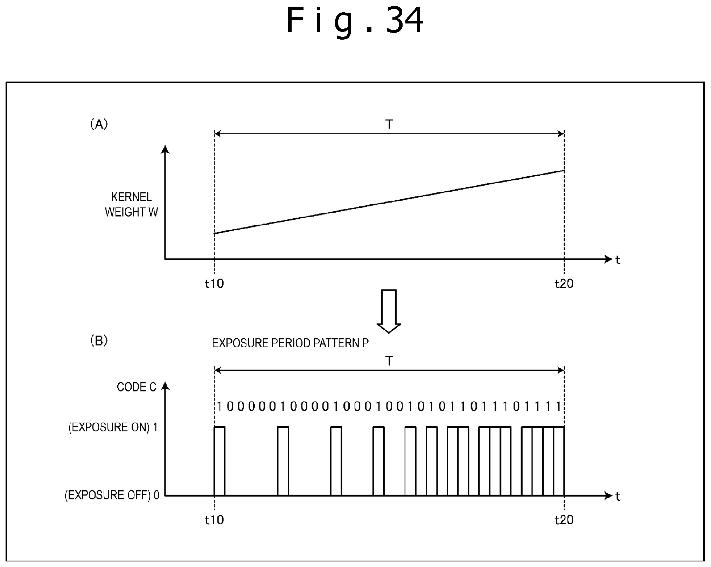

In the examples depicted in Fig. 33 and Fig. 34, the kernel weights W change with a constant slope.

In the example depicted in (A) of Fig. 33, the kernel weights W gradually decrease from the first half to the second half of the one frame period T. From the kernel weights W, code C such as depicted in (B) of Fig. 33 is generated. The exposure periods are weighted in the first half of the one frame period T.

In the example depicted in (A) of Fig. 34, the kernel weights W gradually increase from the first half to the second half of the one frame period T. From the kernel weights W, code C such as depicted in (B) of Fig. 34 is generated. The exposure periods in the second half of the one frame period T are weighted.

Codes C generated from the kernel weights W such as in Fig. 33 and Fig. 34 may be selectively used in accordance with, for example, the characteristics of the sensor 1. The reason is similar to that in Fig. 20 and Fig. 21 described above, and thus the description thereof will not be repeated here.

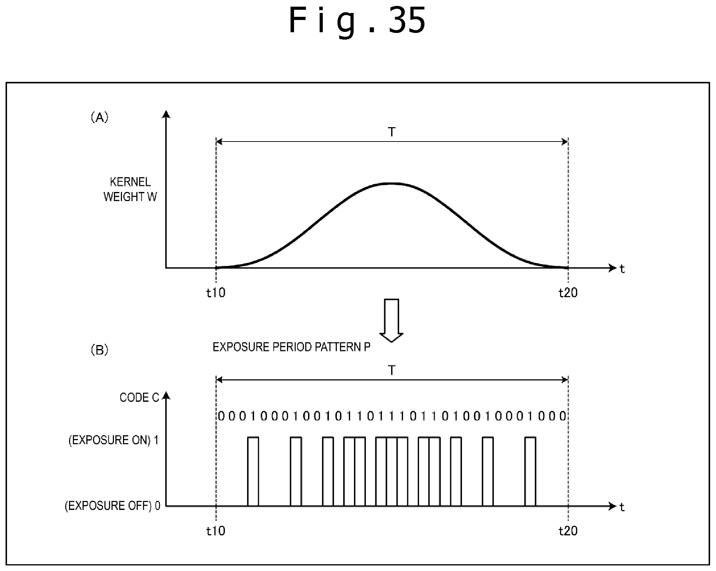

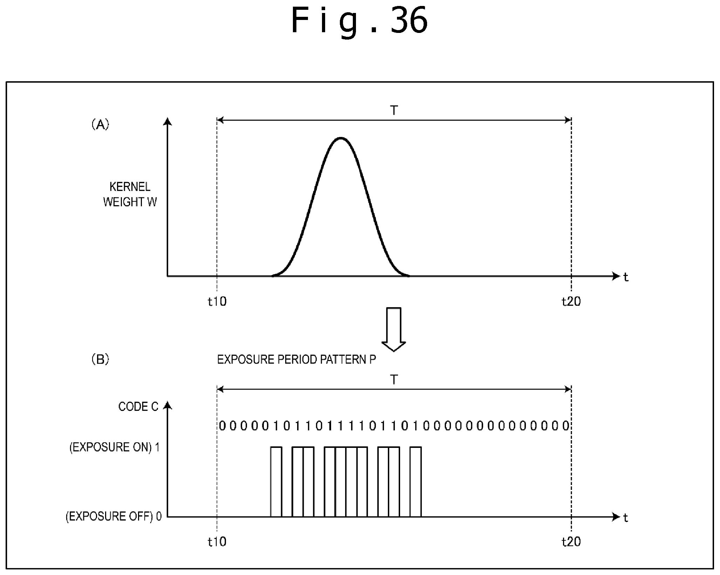

In the examples depicted in Fig. 35 and Fig. 36, the kernel weights W vary so as to have a Gaussian distribution.

In the example depicted in (A) of Fig. 35, the kernel weights W have a relatively wide Gaussian distribution, are maximized at a certain time in the one frame period T, and gradually decreases as a distance therefrom increases. From the kernel weights W, code C such as depicted in (B) of Fig. 35 is generated. The exposure periods are weighted in the vicinity of a certain time of the one frame period T.

In the example depicted in (B) of Fig. 36, the kernel weights W have a relatively narrow Gaussian distribution, reach a maximum at a certain time in the one frame period T, and rapidly decreases as the distance therefrom increases. From the kernel weights W, code C such as depicted in (B) of Fig. 35 is generated. The exposure periods are weighted in the vicinity of a certain time of the one frame period T.

Example of Switching Exposure Period Pattern P

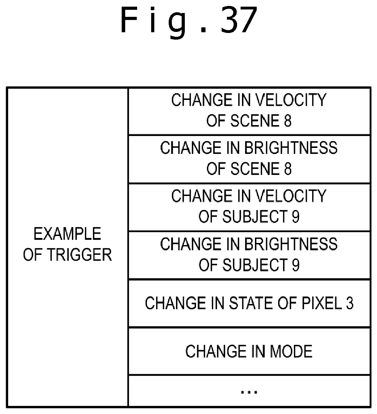

Returning to Fig. 1, in one embodiment, the drive unit 4 may drive the pixel array section 2 such that the exposure period pattern P is switched in accordance with a trigger (condition). For example, the code generation section 41 changes the code C to be generated in response to the trigger. The drive unit 4 drives the pixel array section 2 according to the exposure period pattern P defined by the new code C. By switching the exposure period pattern P in response to various triggers, it is possible to obtain the appropriate image data 5. Several examples of the trigger will now be described with reference to Fig. 37.

Fig. 37 is a diagram depicting examples of the trigger. As the trigger, a change in velocity of the scene 8, a change in brightness of the scene 8, a change in velocity of the subject 9, a change in brightness of the subject 9, a change in state of the pixel 3, and a change in mode are exemplified.

The changes in velocity and brightness of the scene 8 and the like may be estimated by using sensing data from another sensor (not illustrated) or may be estimated from the obtained image data 5, for example. Examples of other sensors are a light detection and ranging (LiDAR) sensor, a radar sensor, an acceleration sensor, and a gyro sensor. The entity performing the estimation may be the drive unit 4, the processing unit 6, or the like, or may be another element of the sensor 1 that does not appear in the drawings.

In a case in which the change in velocity of the scene 8 is used as the trigger, the drive unit 4 may drive the pixel array section 2 such that the pixels 3 are exposed with the exposure period pattern P having a sparsity or density according to the change in velocity of the scene 8 and the like. For example, if the velocity is low, the code C generated by the code generation section 41 and thus the exposure period pattern P may be switched so that the pixels 3 are exposed with the exposure period pattern P in which the exposure periods are dense as in Fig. 24 described above. If the velocity is high, the code C generated by the code generation section 41 and thus the exposure period pattern P may be switched so that the pixels 3 are exposed with the exposure period pattern P in which the plurality of exposure periods are sparse as in Fig. 25 described above. A specific method of determining the magnitude of the velocity is not particularly limited, but threshold determination, for example, may be used. The entity performing the determination may be the drive unit 4, the processing unit 6, or the like, or may be another element of the sensor 1 that does not appear in the drawings.

When the conversion of the brightness of the scene 8 and the like is used as the trigger, the drive unit 4 may drive the pixel array section 2 such that the pixels 3 are exposed with the exposure period pattern P having the total exposure period according to the change in brightness of the scene 8 and the like. For example, if the scene 8 and the like are dark, the code C generated by the code generation section 41 and thus the exposure period pattern P may be switched so that the pixels 3 are exposed with the exposure period pattern P having a short total exposure period as in Fig. 22 described above. If the scene 8 and the like are bright, the code C generated by the code generation section 41 and thus the exposure period pattern P may be switched so that the pixels 3 are exposed with the exposure period pattern P having a long total exposure period as in Fig. 23 described above.

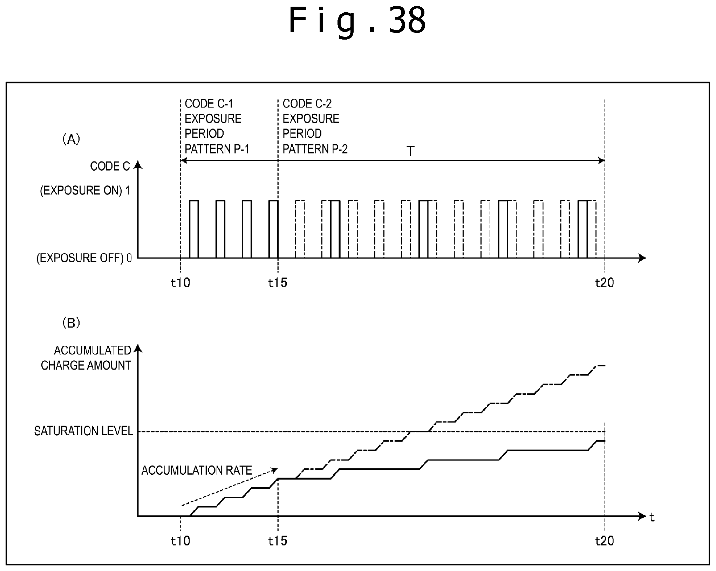

An example of the change in state of the pixel 3 is a change in amount of charge accumulated in the photoelectric conversion section of the pixel 3. This change is detected by, for example, incorporating a detection transistor in the pixel 3. The entity performing the detection may be the drive unit 4, the processing unit 6, or the like, or may be another element of the sensor 1 that does not appear in the drawings. In a case in which such a change in the state of the pixel 3 is used as the trigger, the drive unit 4 may switch the exposure period pattern P partway through the one frame period T so that the photoelectric conversion section of the pixel 3 is not saturated during the one frame period T. This will be described with reference to Fig. 38 as well.

Fig. 38 is a diagram depicting an example of switching the exposure period pattern P partway through the one frame period T. (B) of Fig. 38 schematically depicts the amount of charge accumulated in the photoelectric conversion section of the pixel 3 (accumulated charge amount).

Initially, the code generation section 41 of the drive unit 4 generates the code C-1 defining the exposure period pattern P-1. At time t10, the drive unit 4 drives the pixel array section 2 such that the pixels 3 are exposed with the exposure period pattern P-1. With exposure, charge is accumulated in the photoelectric conversion section of the pixel 3, and the accumulated charge amount increases. When the exposure of the pixel 3 with the exposure period pattern P-1 continues as is, the accumulated charge amount reaches the saturation level before reaching time t20, which is the end of the one frame period T as virtually depicted by a dashed-dotted line in (B) of Fig. 38, and the photoelectric conversion section of the pixel 3 is saturated. Such a problem may occur in a case in which the exposure periods of the exposure period pattern P-1 are too dense or the total exposure period is too long with respect to the brightness of the scene 8 and the like.

To prevent saturation of the photoelectric conversion section of the pixel 3 during the one frame period T, the code generation section 41 generates the code C-2 defining the exposure period pattern P-2 in which the exposure periods are sparser (or total exposure period is shorter) than those in the exposure period pattern P-1. At time t15, the exposure period pattern P-1 is switched to the exposure period pattern P-2. The code generation section 41 of the drive unit 4 drives the pixel array section 2 such that the pixels 3 are exposed with the exposure period pattern P-2. As depicted by the solid line in (B) of Fig. 38, the accumulated charge amount does not reach the saturation level during the one frame period T, and saturation of the photoelectric conversion section of the pixel 3 is avoided.

A technique of predicting saturation partway through the one frame period T (at time t15, for example) as described above will now be described. An accumulation rate of the charge in the photoelectric conversion section of the pixel 3 is measured. The entity performing the measurement may be the drive unit 4, the processing unit 6, or the like, or may be another element of the sensor 1 that does not appear in the drawings. The accumulation rate is a change in accumulated charge amount with respect to a change in time, and corresponds to the inclination of the arrow indicated by a dashed-dotted line in (B) of Fig. 38.

The kernel weights W serving as the basis of the code C are adjusted in accordance with the accumulation rate.

The kernel weights W serving as the basis of the code C-1 defining the exposure period pattern P-1 (time t10 to time t15) are referred to as kernel weights W1, and the kernel weights W serving as the basis of the code C-2 defining the exposure period pattern P-2 (time t15 to time t20) are referred to as kernel weights W2. For example, the code C-2 defining the exposure period pattern P-2 is generated from the kernel weights W2 calculated (adjusted) as in equation (1) below.

W2 = W1 x (maximum accumulation rate without saturation/measured accumulation rate)    Equation 1

On the basis of such kernel weights W2, it is possible to generate the code C-2 defining an exposure period pattern P-2 such as described above and switch from the exposure period pattern P-1 to the exposure period pattern P-2 at an appropriate timing.

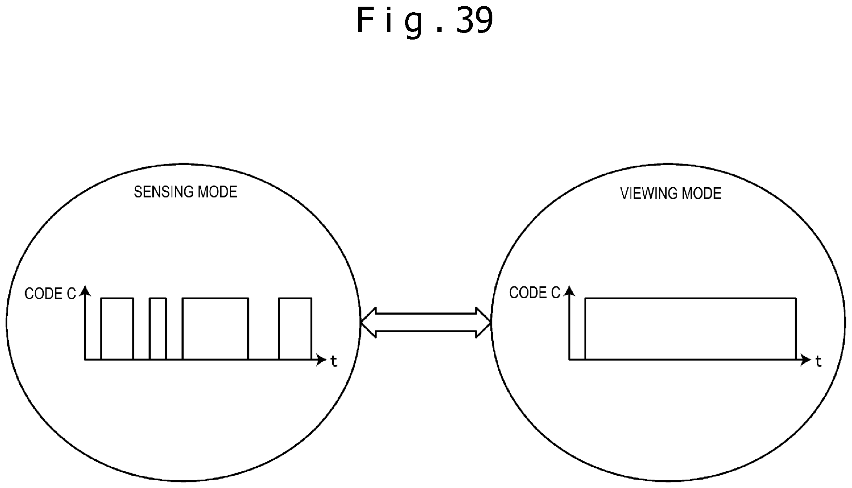

Returning to Fig. 37, an example of the change in mode is a change in imaging mode of the sensor 1. This will be described with reference to Fig. 39 as well.

Fig. 39 is a diagram depicting a change in mode. As the imaging modes of the sensor 1, a sensing mode and a viewing mode are exemplified. The imaging mode of the sensor 1 can be selected so as to transition between these. In the sensing mode, multi-exposure imaging is performed. The pixels 3 are exposed with the various exposure period patterns P described above, and the image data 5 is obtained. The obtained image data 5 is processed by the processing unit 6 by using the execution NW 60. In the viewing mode, single-exposure imaging is performed. The image represented by the image data 5 is immediately displayed to a user via a display or the like (not illustrated). The sensing mode and the viewing mode are changed by being selected automatically or manually by a user operation, for example.

In the sensing mode, the drive unit 4 drives the corresponding pixel 3 such that multi-exposure imaging is performed. As described above, the image data 5 suitable for processing such as image recognition by the processing unit 6 is obtained. In the viewing mode, the drive unit 4 drives the corresponding pixel 3 such that single-exposure imaging is performed. The image data 5 indicating an image easy to view by the user is obtained.

The exposure period pattern P may be switched in response to the various triggers described above, for example.

In one embodiment, the drive unit 4 may output information related to the switching of the exposure period pattern P. Examples of the information include the charge accumulation rate, the switching time (time t15), and the exposure period pattern P-2 after switching described above (may be code C-2 or kernel weights W2 serving as the basis thereof). Only simplified (simple) information indicating that the exposure period pattern P has been switched may be output. The processing unit 6 may process the image data 5 by utilizing such information output from the drive unit 4.

Switching of Processing of Processing Unit 6 According to Switching of Exposure Period Pattern P

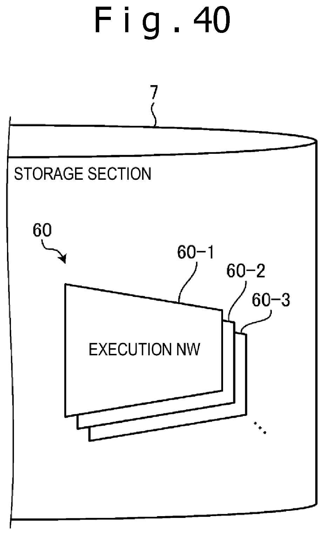

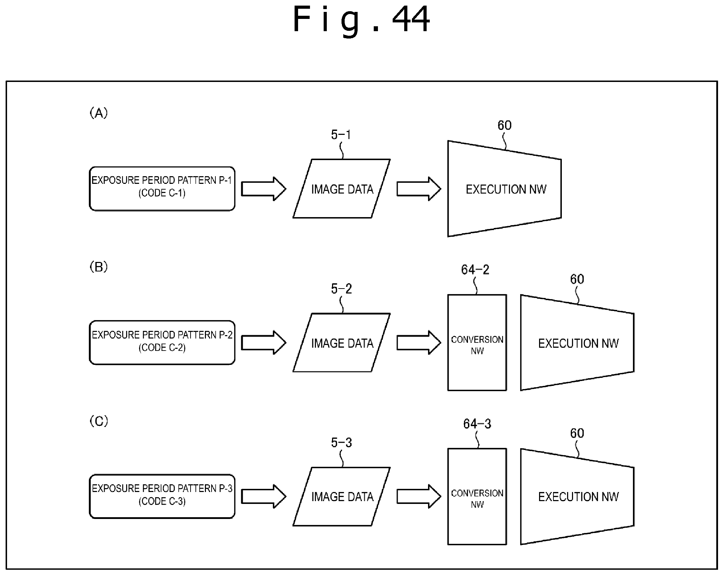

Returning to Fig. 1, the processing of the image data 5 using the execution NW 60 by the processing unit 6 may also be switched in accordance with such switching of the exposure period pattern P as described above. Several examples will be described with reference to Fig. 40 and 44 as well.

Fig. 40 to Fig.44 are diagrams depicting examples of switching the processing of the processing unit 6 according to the switching of the exposure period pattern P.

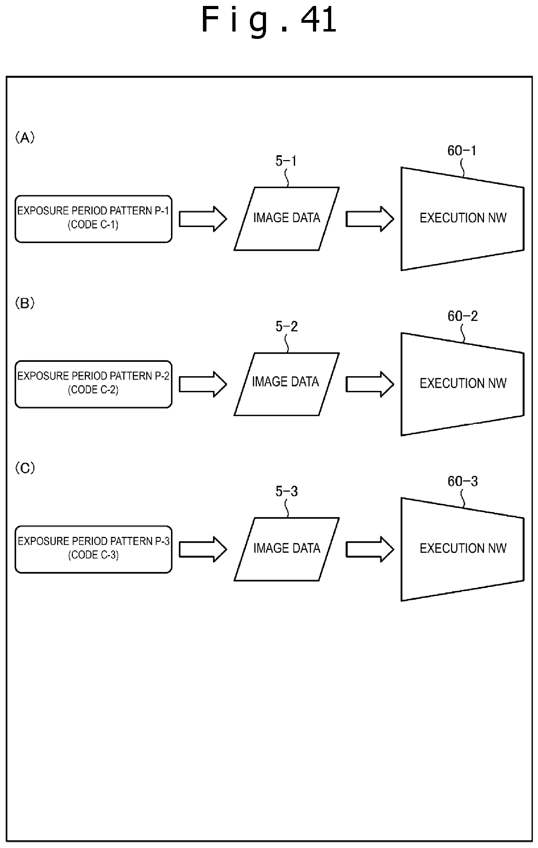

In the example depicted in Fig. 40 and Fig. 41, the execution NW 60 is a plurality of the execution NWs 60, and is prepared in advance and stored in the storage section 7. Each of the plurality of execution NWs 60 is an NW that is machine-learned so as to process the image data 5 obtained by exposure of the pixels 3 with different exposure period patterns P. The execution NWs 60 are referred to as an execution NW 60-1 to an execution NW 60-3 in the drawings so as to be distinguishable from one another. When these are not particularly distinguished from each other, each is simply referred to as the execution NW 60.

The execution NW 60-1 processes the image data 5-1 obtained by the exposure period pattern P-1 defined by the code C-1. The execution NW 60-2 processes the image data 5-2 obtained by exposure of the pixels 3 with the exposure period pattern P-2 defined by the code C-2. The execution NW 60-3 processes the image data 5-3 obtained by exposure period pattern P-3 defined by the code C-3.

The processing unit 6 switches the execution NW 60 to be used in accordance with the exposure period pattern P used to obtain the image data 5 to be processed. The image data 5 obtained by exposure of the pixels 3 with the different exposure period patterns P can thus be appropriately processed.

More specifically, as depicted in (A) of Fig. 41, the processing unit 6 inputs the image data 5-1 obtained by exposure of the pixels 3 with the exposure period pattern P-1 to the execution NW 60-1.

When the exposure period pattern P-1 is switched to the exposure period pattern P-2, the processing unit 6 inputs the image data 5-2 obtained by exposure of the pixels 3 with the exposure period pattern P-2 to the execution NW 60-2 as depicted in (B) of Fig. 41.

When the exposure period pattern P-2 is switched to the exposure period pattern P-3, the processing unit 6 inputs the image data 5-3 obtained by exposure of the pixels 3 with the exposure period pattern P-3 to the execution NW 60-3 as

depicted in (C) of Fig. 41.

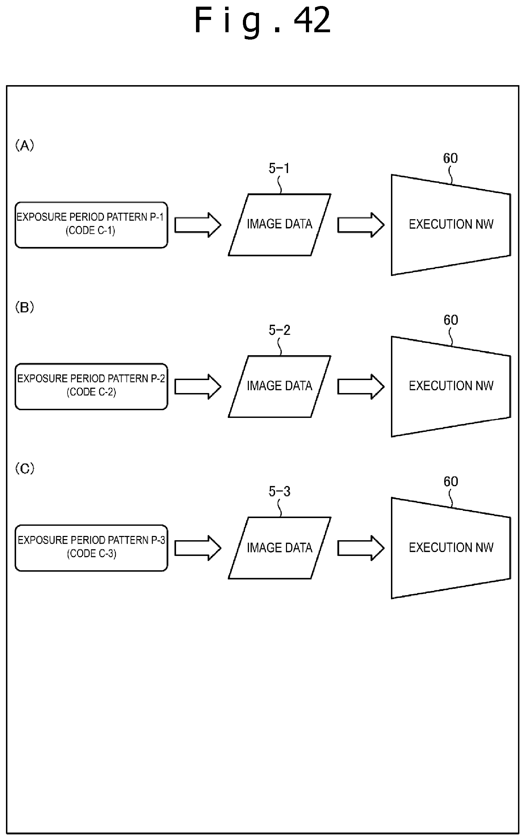

In the example depicted in Fig. 42, one execution NW 60 is machine-learned so as to be able to process the image data 5 obtained by the plurality of different exposure period patterns P. Even when the exposure period pattern P is switched, the processing unit 6 does not switch the execution NW 60 used. Specifically, as depicted in (A) to (C) of Fig. 42, the processing unit 6 inputs the image data 5-1 obtained by exposure of the pixels 3 with the exposure period pattern P-1 to the execution NW 60. The processing unit 6 also inputs the image data 5-2 obtained by exposure of the pixels 3 with the exposure period pattern P-2 to the same execution NW 60. The processing unit 6 also inputs the image data 5-3 obtained by exposure of the pixels 3 with the exposure period pattern P-3 to the same execution NW 60. Preparation of a plurality of the execution NWs 60 as in Fig. 40 and Fig. 41 described above is not necessary.

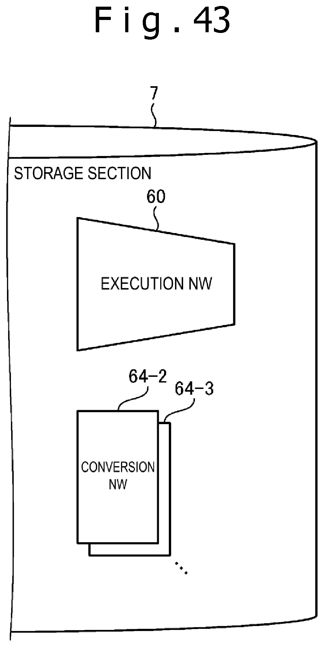

In the examples depicted in Fig. 43 and Fig. 44, the execution NW 60 is machine-learned so as to process the image data 5 obtained by exposure of the pixels 3 with the specific exposure period pattern P. Further, a conversion network 64 that can be used together with this execution NW 60 is generated in advance and stored in the storage section 7. A plurality of the conversion networks 64 may be present, and two conversion networks 64 are exemplified in Fig. 43 as a conversion network 64-2 and a conversion network 64-3. When these are not particularly distinguished from each other, each is simply referred to as the conversion network 64.

The conversion network 64 is generated so as to absorb a difference between the image data 5 obtained by exposure of the pixels 3 with the specific exposure period pattern P and the image data 5 obtained by exposure of the pixels 3 with another exposure period pattern P. Here, the specific exposure period pattern P is assumed to be the exposure period pattern P-1. The conversion network 64-2 is generated so as to absorb a difference between the image data 5-1 obtained by exposure of the pixels 3 with the exposure period pattern P-1 and the image data 5-2 obtained by exposure of the pixels 3 with the exposure period pattern P-2. The conversion network 64-3 is generated so as to absorb a difference between the image data 5-1 obtained by exposure of the pixels 3 with the exposure period pattern P-1 and the image data 5-3 obtained by exposure of the pixels 3 with the exposure period pattern P-3.

The processing unit 6 inputs the image data 5-1 obtained by exposure of the pixels 3 with the exposure period pattern P-1 to the execution NW 60. On the other hand, the execution NW 60 inputs the image data 5 obtained by the exposure period pattern P other than the exposure period pattern P-1 to the execution NW 60 via the corresponding conversion network 64.

Specifically, as depicted in (A) of Fig. 44, the processing unit 6 directly inputs the image data 5-1 obtained by exposure of the pixels 3 with the exposure period pattern P-1 to the execution NW 60.

When the exposure period pattern P-1 is switched to the exposure period pattern P-2, the processing unit 6 inputs the image data 5-2 obtained by exposure of the pixels 3 with the exposure period pattern P-2 to the execution NW 60 via the conversion network 64-2 as depicted in (B) of Fig. 44.

When the exposure period pattern P-2 is switched to the exposure period pattern P-3, the processing unit 6 inputs the image data 5-3 obtained by exposure with the exposure period pattern P-3 to the execution NW 60 via the conversion network 64-3 as depicted in (C) of Fig. 44.

By thus using the execution NW 60 and the conversion network 64 in combination, it is possible to appropriately process the image data 5 obtained by exposure of the pixels 3 with the different exposure period patterns P. Preparation of a plurality of the execution NWs 60 as in Fig. 40 and Fig. 41 described above is not necessary.

## 2. Embodiment of Sensor System

Some elements of the sensor 1 described above may be provided outside the sensor 1. This will be described with reference to Fig. 45.

Fig. 45 is a diagram depicting an example of a schematic configuration of a sensor system 1A according to an embodiment. The sensor system 1A differs from the sensor 1 (Fig. 1) described above in that some elements are provided outside the sensor 1.

In this example, the code generation section 41, the processing unit 6, and the storage section 7 are provided outside the sensor 1. The sensor 1 includes the pixel array section 2 and the drive unit 4 (excluding code generation section 41). The sensor system 1A includes the sensor 1, the code generation section 41, the processing unit 6, and the storage section 7. For example, an application processor that utilizes the sensor 1 functions as the code generation section 41 and the processing unit 6. The storage section 7 may be a storage device such as a memory that stores information used by such an application processor.

By providing the code generation section 41, the processing unit 6, and the storage section 7 outside the sensor 1, it is possible to simplify the configuration of the sensor 1 and reduce a processing load of the sensor 1 to a greater extent than in a case of provision thereof inside the sensor 1. This can contribute to a reduction in size, a reduction in cost, and the like of the sensor 1. Further, to the extent that the processing unit 6, the code generation section 41, and the storage section 7 can be designed separately from the sensor 1, advantages such as an increase in a degree of freedom of design are achieved.

Note that the elements provided outside the sensor 1 are not limited to those in the example described above. For example, a configuration in which the code generation section 41 is included in the drive unit 4 in the sensor 1, and only the processing unit 6 and the storage section 7 are provided outside the sensor 1 is also possible.

3. Embodiment of Information Processing System

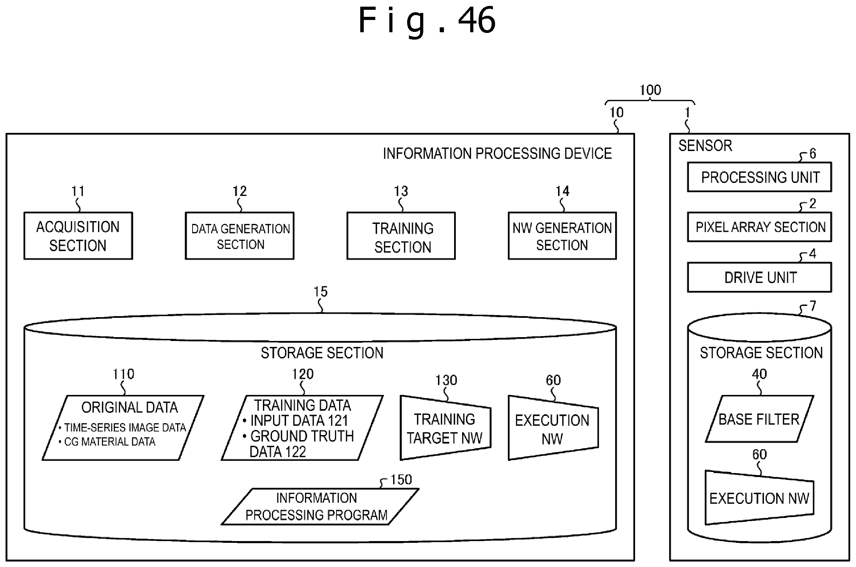

Fig. 46 is a diagram depicting an example of a schematic configuration of an information processing system 100 according to an embodiment. The information processing system 100 includes an information processing device 10 and the sensor 1 described above. Note that the sensor 1 depicted in Fig. 46 may be the sensor system 1A described above with reference to Fig. 45.

The information processing device 10 generates the execution NW 60. The information processing device 10 includes an acquisition section 11, a data generation section 12, a training section 13, an NW generation section 14, and a storage section 15.

The acquisition section 11 acquires original data 110. The original data 110 is given data used for generating training data 120 described below. As the original data 110, time-series image data and computer graphics (CG) material data are exemplified. The time-series image data is, for example, data of a series of images (natural images) obtained by imaging real scenes. The CG material data is material data that can be used to generate a CG image of a scene including various subjects, and includes asset data of buildings, cars, and people, for example.

A mode of acquisition of the original data 110 by the acquisition section 11 is not particularly limited. For example, the original data 110 may be acquired by the user of the information processing device 10 preparing (collecting or the like) and inputting the original data 110. Any data that can be acquired via an external network (such as the Internet) may be acquired as the original data 110. The acquired original data 110 is stored in the storage section 15.

The data generation section 12 generates the training data 120 by using the original data 110. The training data 120 is training data to be used in subsequent machine learning, and is a set of pairs (data set) of input data 121 and ground truth data 122. The generated training data 120 is stored in the storage section 15.

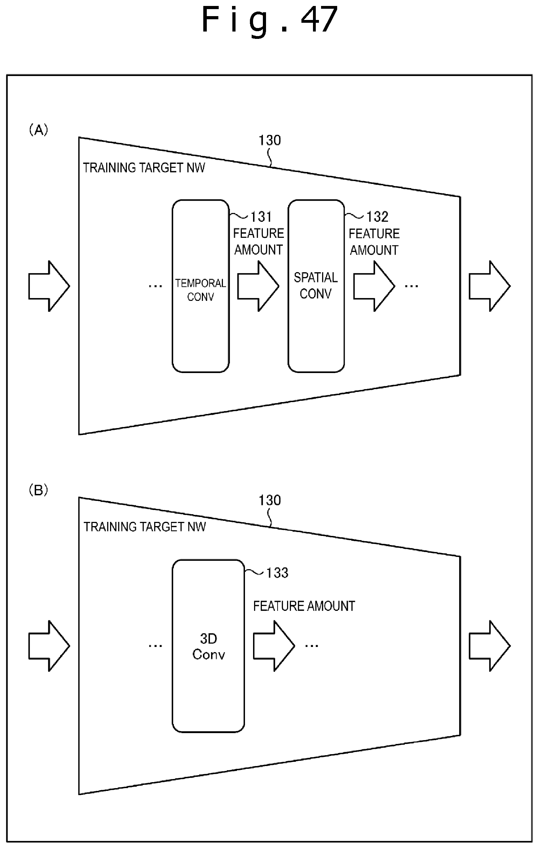

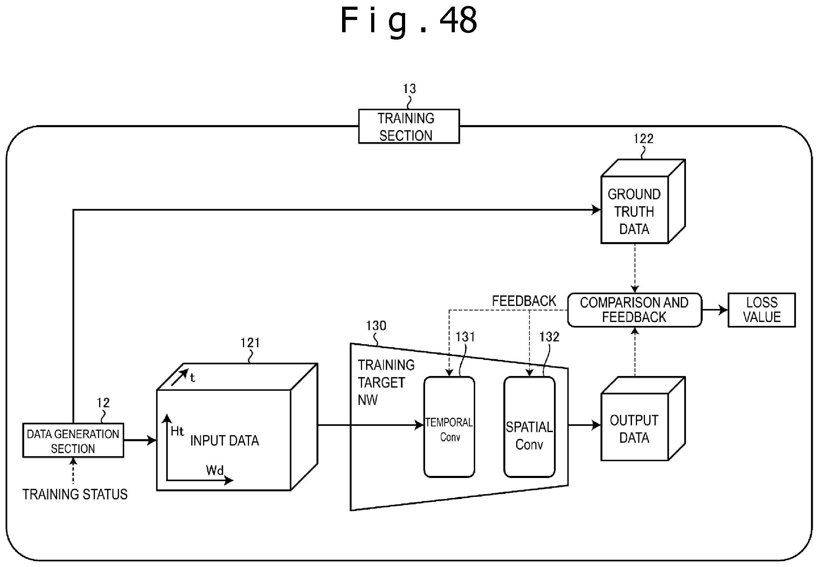

The training section 13 performs machine learning on the NW by using the training data 120. The NW subjected to the machine learning by the training section 13 is referred to as a training target NW 130. The training target NW 130 is stored in the storage section 15. The training target NW 130 and the machine learning thereof will be described with reference to Fig. 47 and Fig. 48 as well.

Fig. 47 is a diagram depicting examples of schematic configurations of the training target NW 130. The training target NW 130 is configured so as to perform a temporal operation and a spatial operation. For example, the training target NW 130 includes a computation layer that performs the temporal operation and the spatial operation. Unless otherwise specified, the computation layer of the training target NW 130 is assumed to be a convolutional layer. In Fig. 47, two types of configurations are exemplified as the configuration of the training target NW 130.

In the example depicted in (A) of Fig. 47, the training target NW 130 includes a temporal convolutional layer 131 and a spatial convolutional layer 132 as a computation layer that performs the temporal operation and a computation layer that performs the spatial operation. The temporal convolutional layer 131 performs convolution in the temporal direction. A feature amount in the temporal direction is extracted. The spatial convolutional layer 132 performs convolution in the spatial direction, similarly to the spatial convolutional layer 62 (Fig. 8) of the execution NW 60 described above. A feature amount in the spatial direction is extracted.

In the example depicted in (B) of Fig. 47, the training target NW 130 includes, as the computation layer, a 3D computation layer that performs the temporal operation and the spatial operation. An example of the 3D computation layer is referred to and illustrated as a 3D convolutional layer 133. The 3D convolutional layer 133 has both of the functions of the temporal convolutional layer 131 and the spatial convolutional layer 132 described above. The feature amounts in the temporal direction and the spatial direction are extracted.

Fig. 48 is a diagram depicting an example of machine learning by the training section 13. In this example, backpropagation is used. Note that, in the following description, the error may be referred to as a loss.

The training section 13 retrieves (fetches) one pair of the input data 121 and the ground truth data 122 from the training data 120 generated by the data generation section 12. In this example, the input data 121 is time-series image data and has the three dimensions of the temporal direction and the spatial direction (two-dimensional spatial direction). The input data 121 has a density in the temporal direction so as to include time-series image data corresponding to a kernel size (number of taps) of the temporal convolutional layer 131. Further, each image data has a density in the two-dimensional spatial direction (width Wd direction and height Ht direction) so as to include data corresponding to a kernel size of the spatial convolutional layer 132. The ground truth data 122 is data of a model of the output data of the training target NW 130. The ground truth data 122 is also referred to as teacher data or the like.

The training section 13 inputs the input data 121 of the pair extracted from the training data 120 to the training target NW 130. The training section 13 inputs the input data 121 to the training target NW 130 so that the input data 121 is convolved in the temporal direction by the temporal convolutional layer 131 of the training target NW 130 and convolved in

the spatial direction by the spatial convolutional layer 132. In this example, the input data 121 is directly or indirectly input to the temporal convolutional layer 131 so that the input data 121 is convolved in order by the temporal convolutional layer 131 and the spatial convolutional layer 132. In response to the input of the input data 121, the training target NW 130 outputs output data.

The training section 13 compares the output data with the ground truth data 122. Specifically, the training section 13 calculates a loss value of the output data with respect to the ground truth data 122 by using a loss function. Then, the training section 13 adjusts (feeds back) parameters of the training target NW 130 including the temporal convolutional layer 131 and the spatial convolutional layer 132 so as to reduce the loss value. Specifically, the training section 13 updates the training target NW 130 by backpropagation or the like by utilizing a differential slope obtained from the loss function. The training target NW 130 is machine-learned by repeating the series of processing operations.

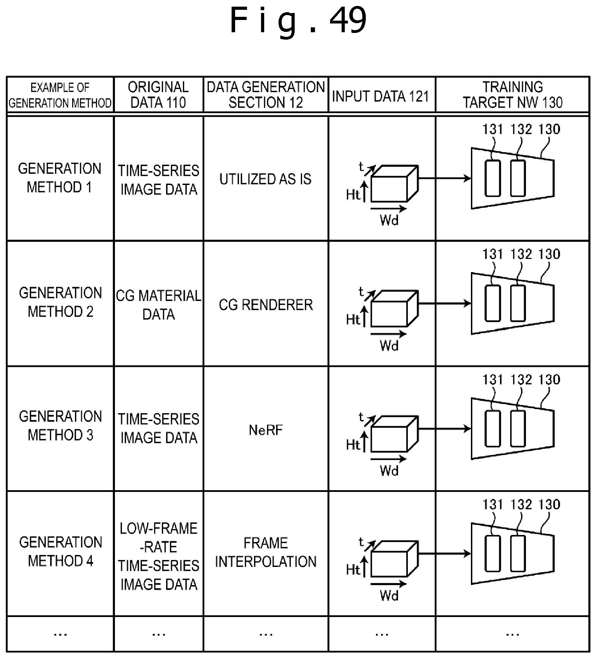

Generation of the input data 121 used in the machine learning in Fig. 48 described above will now be described with reference to Fig. 49 as well.

Fig. 49 is a diagram depicting examples of a generation method of the input data 121. Four types of generation methods are exemplified.

In generation method 1, the data generation section 12 utilizes the time-series image data included in the original data 110 as the input data 121 as is.

In generation method 2, the data generation section 12 generates the input data 121 by using the CG material data included in the original data 110 and CG renderer technology. Various known CG rendering engines and the like may be used.

In generation method 3, the data generation section 12 generates the input data 121 by using the time-series image data included in the original data 110 and neural radiance fields (NeRF) technology. The data of the images of the scene 8 and the like viewed from various angles can be generated. Generation of data obtained by removing blurring is also possible. Data of an image with blurring may be intentionally learned. For example, blurring can be applied by generating and averaging a plurality of images in time series or by utilizing a blurring kernel.

In generation method 4, the time-series image data included in the original data 110 is time-series image data having a frame rate (FPS) lower than a frame rate of the input data. The data generation section 12 generates the input data 121 by using such low-frame-rate time-series image data and frame interpolation technology. Various known frame interpolation technologies may be used. This is effective in a case in which the kernel size of the temporal convolutional layer 131 is large, or the like. The original data 110 may be time-series image data of a low frame rate, making it possible to reduce the data capacity and simplify the corresponding HW configuration accordingly.

Returning to Fig. 48, in this example, the data generation section 12 can generate the input data 121 in accordance with a machine-learning status (training status) of the training target NW 130. For example, the input data 121 including image data for which machine learning is insufficient is generated by the data generation section 12. By generating the input data 121 by feeding back the status of the machine learning, it is possible to perform more appropriate machine learning of the training target NW 130.

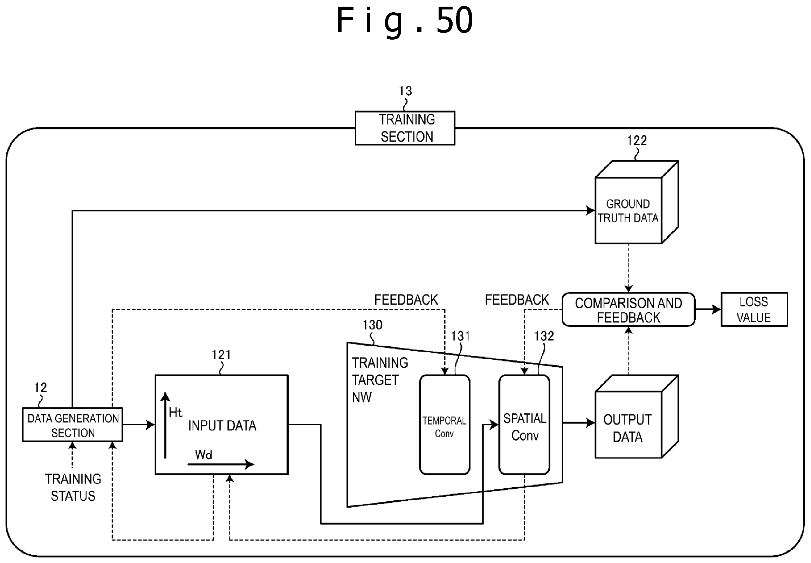

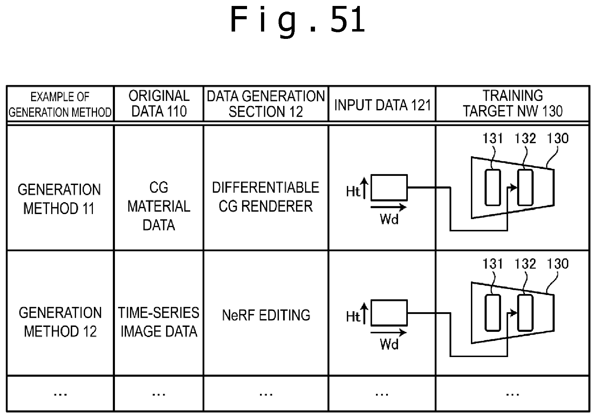

In the above description, a case is described in which the input data 121 is time-series image data having density in the temporal direction and the spatial direction. In one embodiment, the input data 121 may be image data convolved in the temporal direction (subjected to temporal operation). In this case, the input data 121 is image data having density only in the spatial direction. This will be described with reference to Fig. 50 and Fig. 51.

Fig. 50 is a diagram depicting an example of machine learning by the training section 13. The data generation section 12 generates, as the input data 121, image data after convolution in the temporal direction is performed. The input data 121 is data of one image having density in the width Wd direction and the height Ht direction. The input data 121 here is generated in a differentiable manner, and a specific example thereof will be described below.

The training section 13 inputs the input data 121 to the training target NW 130 so that the input data 121 is not convolved in the temporal direction (not subjected to temporal operation) by the temporal convolutional layer 131 of the training target NW 130 and is convolved in the spatial direction (subjected to spatial operation) by the spatial convolutional layer 132. In this example, the input data 121 is input directly or indirectly to the spatial convolutional layer 132. In response to the input of the input data 121, the training target NW 130 outputs output data.

The training section 13 compares the output data with the ground truth data 122 and calculates a loss value. Then, the training section 13 adjusts (feeds back) parameters of the training target NW 130 including the temporal convolutional layer 131 and the spatial convolutional layer 132 so as to reduce the loss value.

Unlike Fig. 48 described above, feedback to the temporal convolutional layer 131 is performed via the data generation section 12. This is because the convolution in the temporal direction is substantially performed at the stage of generating the input data 121 by the data generation section 12. In the example depicted in Fig. 50, feedback to the temporal convolutional layer 131 is performed via the spatial convolutional layer 132, the input data 121, and the data generation section 12. The input data 121 is generated by the data generation section 12 in a differentiable manner, and thus can be back-propagated to the temporal convolutional layer 131 by backpropagation.

Note that, similarly to Fig. 48 described above, the input data 121 may be generated in accordance with the status

of the machine learning (training status) of the training target NW 130.

Generation of the input data 121 used in the machine learning of Fig. 50 described above will now be described with reference to Fig. 51 as well.

Fig. 51 is a diagram depicting examples of the generation method of the input data 121. Two types of generation methods are exemplified.

In generation method 11, the data generation section 12 generates the input data 121 by using the CG material data included in the original data 110 and differentiable CG renderer technology. Various known CG rendering engines and the like may be used. With use of the differentiable CG renderer technology, feedback to the temporal convolutional layer 131 by backpropagation is possible as described above.

In generation method 12, the data generation section 12 generates the input data 121 by using the time-series image data included in the original data 110 and NeRF editing technology. NeRF editing is technology for obtaining desired image data by rearranging the contents of a NeRF neural network in a black box manner. For details, refer to NPL 1, for example. NeRF technology edited to obtain image data obtained by convolving the time-series image data serving as the original data 110 in the temporal direction is also possible, and a differentiable convolution operation may be used as the convolution in the temporal direction of the NeRF technology. With use of such NeRF technology, feedback to the temporal convolutional layer 131 by backpropagation is possible as described above.

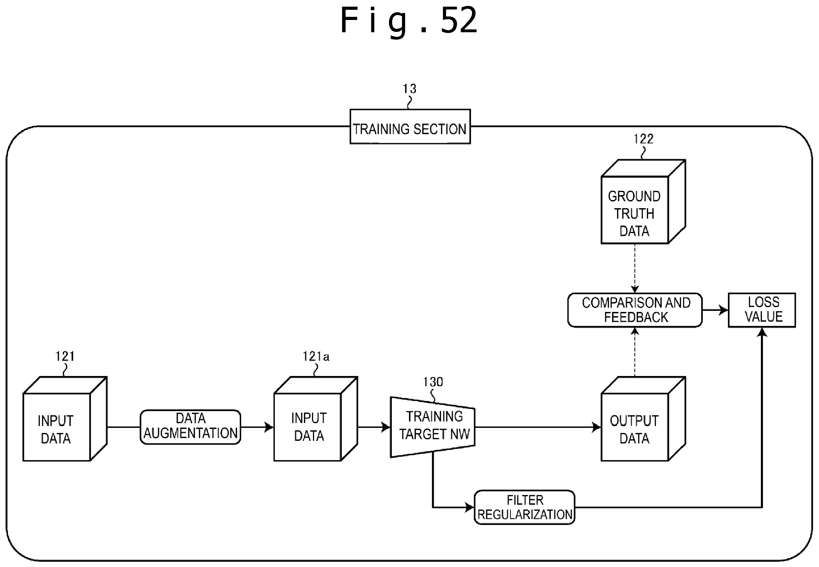

In one embodiment, some processing operations may be added to the machine learning depicted in Fig. 48 and Fig. 50 described above. This will be described with reference to Fig. 52.

Fig. 52 is a diagram depicting an example of the machine learning by the training section 13. As compared with Fig. 48 and Fig. 50 described above, this example differs in that two processing operations, filter regularization and data augmentation, are included. These processing operations are known, and thus the following description will mainly describe portions unique to the present embodiment.

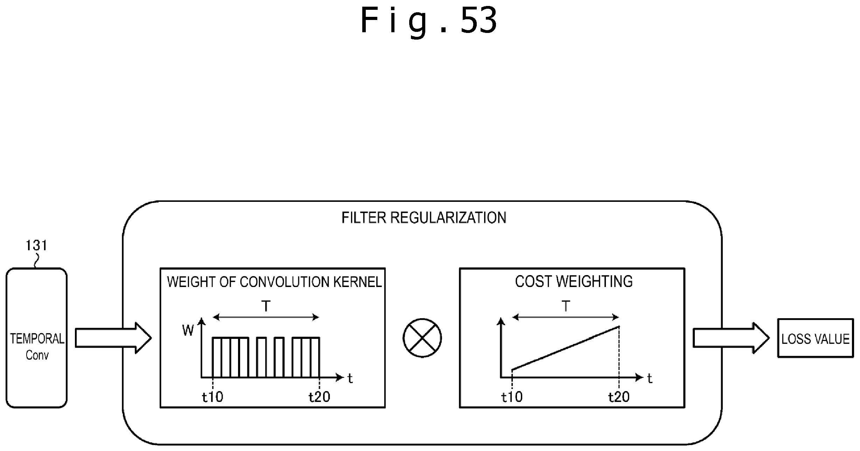

The filter regularization may be regularization of the kernel weights of the temporal convolutional layer 131 of the training target NW 130. For example, the kernel weights W (that is, weights of exposure period) at each time from the start (time t10) to the end (time t20) of the one frame period T can be adjusted. This can be applied to machine learning for processing the image data 5 obtained by the exposure period pattern P that weighs the first half or the second half of the one frame period T. This will be described with reference to Fig. 53 as well.

Fig. 53 is a diagram depicting an example of the filter regularization. The kernel weights of the temporal convolutional layer 131 of the training target NW 130 are referred to as the kernel weights W, as in the previous embodiment of the sensor. A cost function (cost weighting function) that weighs the kernel weights W of each time is defined. The loss value is calculated on the basis of the kernel weights W and the cost function. Specifically, the loss value calculated by convolving the cost function with the kernel weights W is reflected in the loss value in Fig. 52. The parameters of the training target NW 130 are updated so as to reduce this loss value, thereby adjusting the kernel weights W from the start (time t10) to the end (time t20) of the one frame period T.

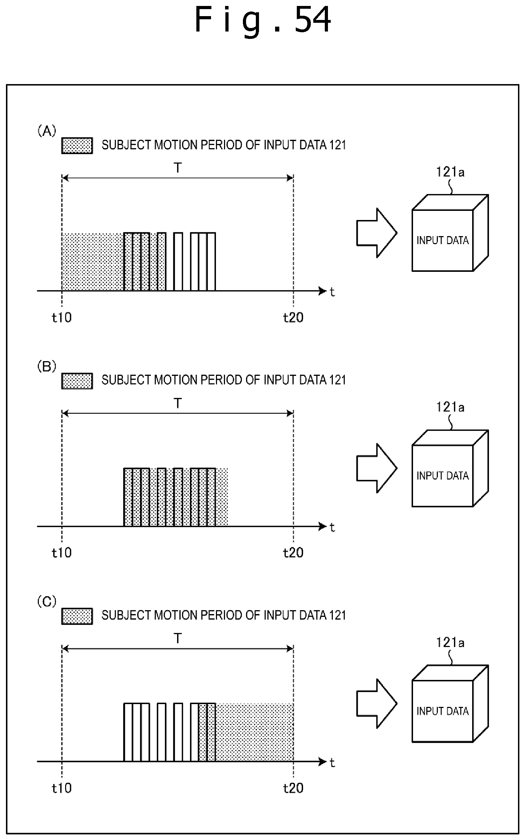

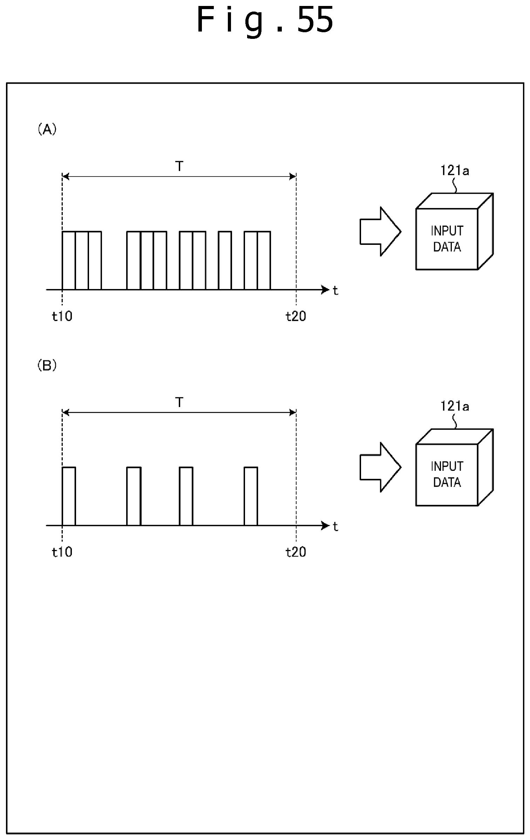

Returning to Fig. 52, the data augmentation will now be described. The input data 121 is augmented, and thus more input data is obtained. In this example, the data generation section 12 generates new input data by augmenting the generated input data 121. The new input data is referred to as input data 121a. Typically, the input data 121a is obtained by changing a color or a size of the image represented by the input data 121. Data augmentation in accordance with the design of the sensor 1 (Fig. 46) is also possible, and this will be described with reference to Fig. 54 and Fig. 55.

Fig. 54 and Fig. 55 are diagrams depicting examples of the data augmentation.

In the example depicted in Fig. 54, the input data 121a is generated by shifting the motion period of the subject 9 and the like (subject motion period) of the input data 121. For example, as depicted in (A) of Fig. 54 to (C) of Fig. 54, the subject motion period is shifted a bit at a time with respect to the one frame period T, thereby generating the input data 121a different from the input data 121.

In the example depicted in Fig. 55, a pattern of the convolution kernel in the temporal direction in the input data 121 is changed. The total of the periods that the convolution kernel has weights (corresponding to total exposure period) is maintained. In both a case in which the total of the periods is long as depicted in (A) of Fig. 55 and a case in which the total of the periods is short as depicted in (B) of Fig. 55, various patterns may exist. For example, the input data 121a different from the input data 121 is generated by randomly setting each period in the one frame period T without changing the total of the periods. Even if the patterns are the same, the input data 121a different from the input data 121 can be generated by differentiating the way of blurring of the scene 8 and the like indicated in the input data 121.

Returning to Fig. 52, for example, at least one processing operation of filter regularization and data augmentation such as described above may be added to the machine learning of the training target NW 130 by the training section 13. Other processing operations may also be added. An example of the other processing operations is a processing operation of calculating an additional loss value. For example, an evaluation NW that outputs Inception loss may be separately provided to calculate an additional loss value.

Returning to Fig. 46, the training target NW 130 machine-learned by the training section 13 is stored in the storage section 7.

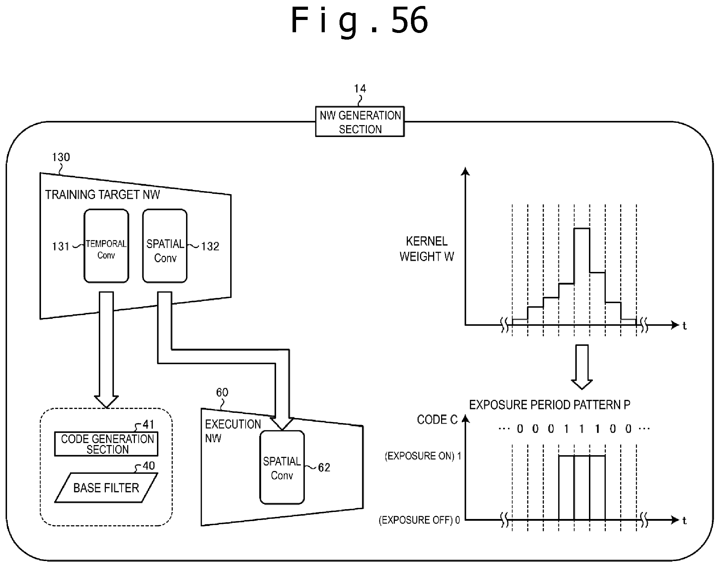

The NW generation section 14 generates the execution NW 60 on the basis of the training target NW 130. The NW generation section 14 may generate the execution NW 60 by converting a portion of the training target NW 130 or the like, or may generate the training target NW 130 as the execution NW 60 as is. This will be described with reference to Fig. 56 to Fig. 60.

Fig. 56 to Fig. 60 are diagrams depicting examples of the generation of the execution NW 60 by the NW generation section 14. In addition to the execution NW 60 of the sensor 1, the base filter 40 and the code generation section 41 will also be described.

In the example depicted in Fig. 56, the training target NW 130 includes the temporal convolutional layer 131 and the spatial convolutional layer 132. As a configuration corresponding to this training target NW 130, the base filter 40, the code generation section 41, and the execution NW 60 of the sensor 1 (Fig. 46) or the sensor system 1A (Fig. 45) are depicted.

The function of the temporal convolutional layer 131 of the training target NW 130 is incorporated into the base filter 40 and the code generation section 41. That is, the function of generating the code C defining the exposure period pattern P corresponding to the convolution in the temporal direction by the temporal convolutional layer 131 is implemented in the sensor 1 (Fig. 46) or is implemented in the sensor system 1A (Fig. 45) as the base filter 40 and the code generation section 41. For example, the base filter 40 and the code generation section 41 are designed such that the code generation section 41 can generate the code C corresponding to the kernel weights W of a temporal convolutional layer 131 such as depicted on the right side of Fig. 56.

The function of the spatial convolutional layer 132 of the training target NW 130 is incorporated into the spatial convolutional layer 62 of the execution NW 60. That is, the NW generation section 14 generates the execution NW 60 by reflecting the function of the spatial operation of the spatial convolutional layer 132 in the spatial convolutional layer 62 of the execution NW 60 (reflecting function in spatial operation of execution NW 60). For example, the execution NW 60 is obtained by removing the temporal convolutional layer 131 from the training target NW 130.

Here, the base filter 40 of the sensor 1 (or code C that can be generated by code generation section 41) may be more restricted than the convolution kernel (hereinafter, also referred to as filter) in the temporal direction used during the machine learning of the training target NW 130. For example, the number of filters of the base filters 40 is less than the number of filters during machine learning. Further, while the filter during machine learning can include positive and negative values, the base filter 40 can only include positive values. To address such a problem, the filters during machine learning may be integrated or divided.

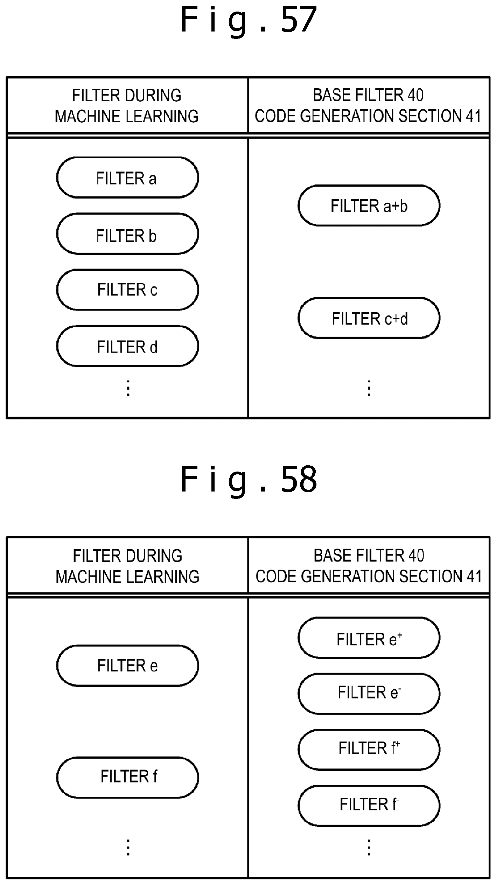

An example of filter integration is depicted in Fig. 57. The number of base filters 40 (or codes C that can be generated by code generation section 41) is less than the number of filters during machine learning. Therefore, the filters during machine learning are integrated (consolidated). For example, various known re-parameterization technologies may be used.

Specifically, in Fig. 57, a filter a, a filter b, a filter c, and a filter d are exemplified as the filters during machine learning. The filter a and the filter b are integrated to obtain a filter a + b. The filter c and the filter d are integrated to obtain a filter c + d. The obtained filters a + b and c + d are used as the base filter 40 or generated by the code generation section 41. The number of filters used in the sensor 1 can be reduced to less than the number of filters during machine learning.

Fig. 58 depicts an example of filter division. The filter during machine learning includes a positive value and a negative value. On the other hand, the filter that can be generated by the base filter 40 or the code generation section 41 can include only a positive value. For this reason, the filter during machine learning is divided into a plurality of filters including only positive values.

Specifically, in Fig. 58, a filter e and a filter f are exemplified as the filters during machine learning. The filter e is divided to obtain a filter $e^+$ and a filter $e^-$. For example, the filter $e^+$ corresponds to a filter obtained by separating the positive value portion from the filter e. The filter $e^-$ is a filter obtained by separating the negative value portion from the filter e and is a filter converted so as to include only positive values. Similarly, the filter f is divided to obtain a filter $f^+$ and a filter $f^-$.

The obtained filter $e^+$ and filter $e^-$, and filter $f^+$ and filter $f^-$ are used as the base filter 40, or generated by the code generation section 41. In a case in which the filter $e^+$ and the filter $e^-$ are used in the sensor 1, data after passing through the filter $e^-$ is subtracted from data after passing through the filter $e^+$, for example. This subtraction may be a digital operation or may be an analog operation. The same applies to the filter $f^+$ and the filter $f^-$.

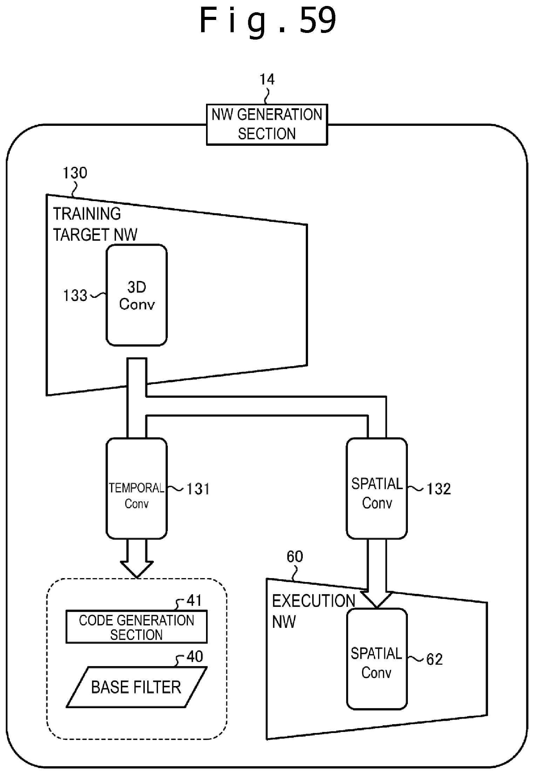

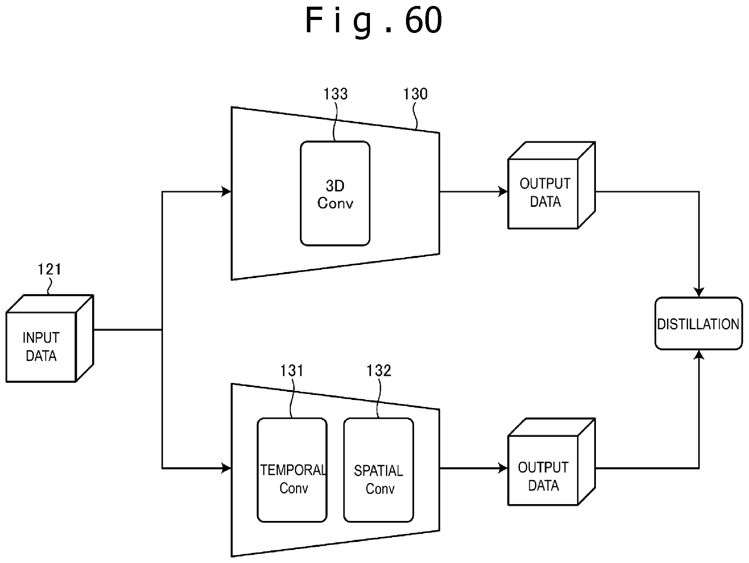

As depicted in (B) of Fig. 47 described above, the training target NW 130 may include the 3D convolutional layer 133. In this case, the NW generation section 14 generates the execution NW 60 by reflecting the convolution function in the spatial direction of the 3D convolutional layer 133 of the training target NW 130 in the spatial convolutional layer 62 of the execution NW 60. This will be described with reference to Fig. 59 and Fig. 60.

In the example depicted in Fig. 59, the training target NW 130 includes the 3D convolutional layer 133. 140 decomposes the 3D convolutional layer 133 of the training target NW 130 into the temporal convolutional layer 131 and the spatial convolutional layer 132. The 3D convolutional layer 133 is decomposed by, for example, averaging temporal channels. Of the obtained temporal convolutional layer 131 and spatial convolutional layer 132, the spatial convolutional layer 132 is used as the spatial convolutional layer 62 of the execution NW 60.

In the example illustrated in Fig. 60, the temporal convolutional layer 131 and the spatial convolutional layer 132 are obtained from the 3D convolutional layer 133 of the training target NW 130 by distillation of the NW. Separately from the training target NW 130, an NW including a temporal convolutional layer and a spatial convolutional layer (corresponding to temporal convolutional layer 131 and spatial convolutional layer 132 after distillation) is prepared. The same input data 121 is input to these two NWs. The temporal convolutional layer and the spatial convolutional layer of the prepared NW are adjusted such that the output data of each of the two NWs is the same, and are obtained as the temporal convolutional layer 131 and the spatial convolutional layer 132. Of the obtained temporal convolutional layer 131 and spatial convolutional layer 132, the spatial convolutional layer 132 is used as the spatial convolutional layer 62 of the execution NW 60.

Returning to Fig. 46, the execution NW 60 obtained by the conversion by the NW generation section 14 is stored in the storage section 15. Note that, for a configuration in which the training target NW 130 includes the spatial convolutional layer 132 but does not include the temporal convolutional layer 131, for example, the training target NW 130 may be stored in the storage section 15 as the execution NW 60 as is.

The storage section 15 stores information used by the information processing device 10. As the information stored in the storage section 15, an information processing program 150 is exemplified in addition to the original data 110, the training data 120, the training target NW 130, and the execution NW 60 described above. The information processing program 150 is a program (software, application, or the like) for causing a computer to function as the information processing device 10.

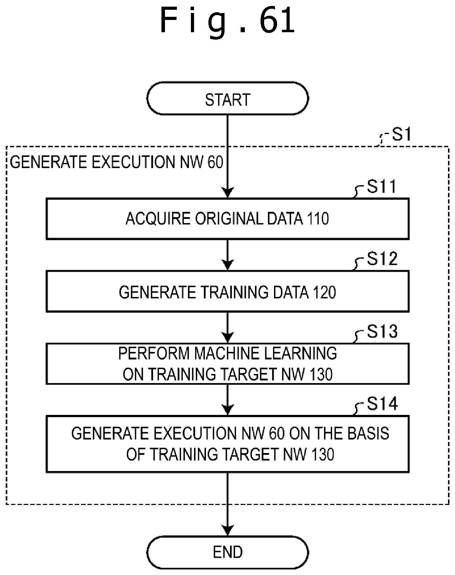

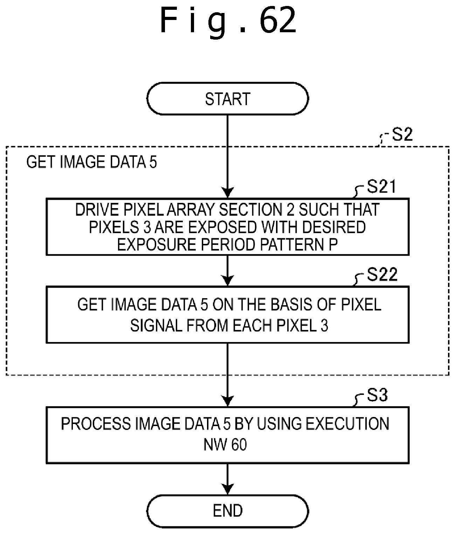

For example, the execution NW 60 can be generated by the information processing device 10 described above. In the sensor 1, the image data 5 is acquired and processed by using the execution NW 60 as described above. Several flows of processing operations will now be described with reference to Fig. 61 and Fig. 62.

Fig. 61 and Fig. 62 are diagrams depicting examples of the processing operations (information processing method, sensing method) executed in the information processing system 100. Description of content overlapping with above descriptions will be omitted as appropriate.

Training Phase

In Fig. 61, the processing operation executed until the execution NW 60 is generated is depicted as step S1. The processing operation of this step S1 is executed in the information processing device 10. Some related processing operations are depicted as step S11 to step S14.

In step S11, the original data 110 is acquired. This processing operation is executed by the acquisition section 11 of the information processing device 10. In step S12, the training data 120 is generated. This processing operation is executed by the data generation section 12 of the information processing device 10. In step S13, machine learning is performed on the training target NW 130. This processing operation is executed by the training section 13 of the information processing device 10. In step S14, the execution NW 60 is generated on the basis of the training target NW 130. This processing operation is executed by the NW generation section 14 of the information processing device 10.

For example, the execution NW 60 generated as described above is installed in the sensor 1 or the sensor system 1A (stored in storage section 7) and used.

Inference Phase

In Fig. 62, the processing operation executed when the execution NW 60 is used is depicted as step S2 and step S3. The processing operations of step S2 and step S3 are executed in the sensor 1 or the sensor 1A.

In step S2, the image data 5 is obtained. Some related processing operations are depicted as step S21 and step S22. In step S21, the pixel array section 2 is driven such that the pixels 3 are exposed with the desired exposure period pattern P. That is, the drive unit 4 of the sensor 1 drives the pixel array section 2 including the plurality of pixels 3 each of which outputs a pixel signal corresponding to an amount of charge accumulated during the exposure period, such that the image data 5 of one frame of the scene 8 including the subject 9 is obtained. This driving includes driving the pixel array section 2 such that the pixels 3 are exposed with the exposure period pattern P including two or more exposure periods in one frame period. Further details are as described in the previous embodiment of the sensor 1. In step S22, the image data 5 is obtained on the basis of the pixel signal from each pixel 3.

In step S3, the image data 5 is processed by using the execution NW 60. The processing unit 6 of the sensor 1 or the sensor system 1A processes the image data 5 obtained in the previous step S2 by using the execution NW 60 generated in the previous step S1.

The inference phase (Fig. 61) and the training phase (Fig. 62) described above may be phases implemented at different times, locations, or the like. However, this does not prevent inference and training from being implemented in the same phase. For example, the execution NW 60 generated through the training phase may be further machine-learned while being installed on the sensor 1 or the sensor system 1A for use (during inference phase). The training data 120 used in the machine learning may be data obtained in accordance with a usage environment of the sensor 1 or the sensor

system 1A, making it possible to customize (update) the execution NW 60 in accordance with a user environment.

4. Modifications of NW

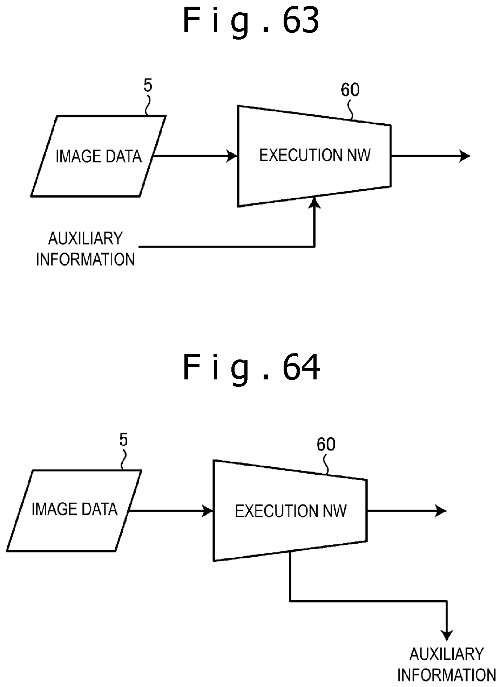

Several modifications of the NW will now be described with reference to Fig. 63 to Fig. 65.

Fig. 63 to Fig. 65 are diagrams depicting modifications of the NW. Here, the execution NW 60 will be described as an example.

In the example depicted in Fig. 63, not only the image data 5 but also auxiliary information is input to the execution NW 60. Examples of the input auxiliary information include information related to the exposure period pattern P (total exposure period, for example), and information related to the code C generated or switched by the code generation section 41.

In the example depicted in Fig. 64, the execution NW 60 outputs the auxiliary information. Examples of the output auxiliary information include information designating the exposure period pattern P and information designating generation, switching, and the like of the code C by the code generation section 41.

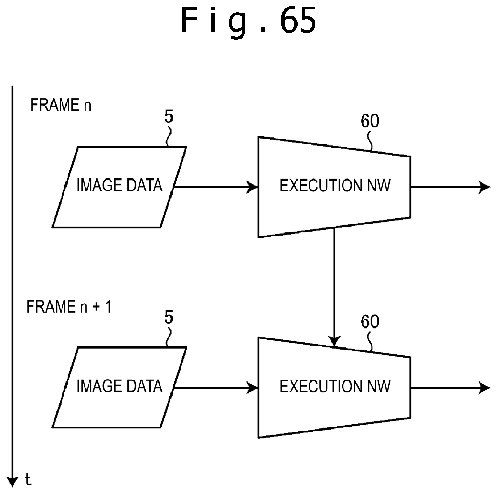

In the example depicted in Fig. 65, a recurrent connection may be used. The time-series information is held across frames. Two consecutive frames are referred to as a frame n and a frame n + 1. As illustrated, the internal state of the execution NW 60 at frame n is carried and input to the execution NW 60 at the next n + 1 frame.

Of course, a modification similar to that of the execution NW 60 described above may be applied to the training target NW 130 as well.

5. Example of Hardware Configuration of Device

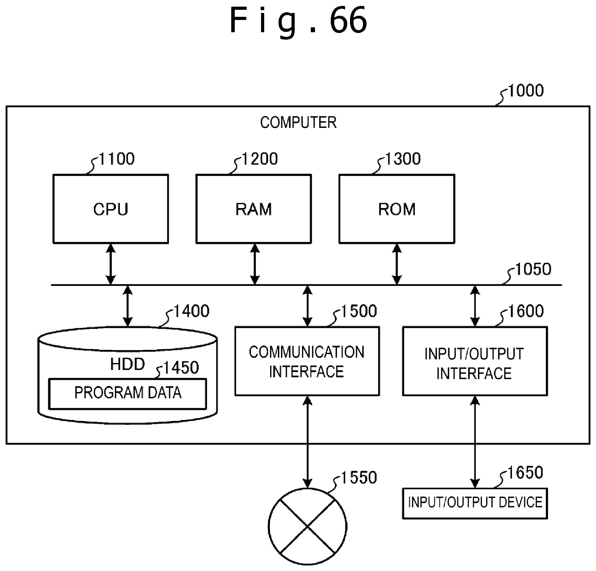

Fig. 66 is a diagram depicting an example of a hardware configuration of a device. For example, a portion of the sensor 1, a portion of the sensor system 1A, and at least a portion of the information processing device 10 described above may be implemented by a computer 1000 depicted in Fig. 66.

The computer 1000 includes a central processing unit (CPU) 1100, a random access memory (RAM) 1200, a read only memory (ROM) 1300, a hard disk drive (HDD) 1400, a communication interface 1500, and an input/output interface 1600. The units of the computer 1000 are connected together via a bus 1050.

The CPU 1100 operates on the basis of programs stored in the ROM 1300 or the HDD 1400 to control the units. For example, the CPU 1100 loads the programs stored in the ROM 1300 or the HDD 1400 to the RAM 1200 and executes processing operations corresponding to various programs. An example of the program is the information processing program 150 described above with reference to Fig. 46. Another example of the program is a program for causing the computer 1000 to function as the processing unit 6 or the like of the sensor 1 or the sensor system 1A.

The ROM 1300 stores a boot program such as a basic input output system (BIOS) executed by the CPU 1100 at the time of activating the computer 1000, a program depending on the hardware of the computer 1000, and the like.

The HDD 1400 is a computer-readable recording medium that non-temporarily stores programs executed by the CPU 1100, data used by such programs, and the like. Specifically, the HDD 1400 is a recording medium that records a program for the information processing method according to the present disclosure, which is an example of program data 1450.

The communication interface 1500 is an interface for the computer 1000 to connect to an external network 1550 (for example, the Internet). For example, the CPU 1100 receives data from another apparatus and transmits data generated by the CPU 1100 to another apparatus via the communication interface 1500.

The input/output interface 1600 is an interface for connecting an input/output device 1650 and the computer 1000. For example, the CPU receives data from an input device such as a keyboard or a mouse via the input/output interface 1600. The CPU 1100 also sends data to an output device such as a display, a speaker, or a printer via the input/output interface 1600. The input/output interface 1600 may also function as a media interface that reads a program or the like recorded on a predetermined computer-readable recording medium (media). Examples of the media include an optical recording medium such as a digital versatile disc (DVD) or a phase change rewritable disk (PD), a magneto-optical recording medium such as a magneto-optical disk (MO), a tape medium, a magnetic recording medium, and a semiconductor memory.

For example, in a case in which the computer 1000 functions as the information processing device 10 described above, the CPU 1100 of the computer 1000 can execute programs loaded onto the RAM 1200 to realize the functions of the acquisition section 11, the data generation section 12, the training section 13, the NW generation section 14, and the like. The programs may be stored in the HDD 1400. When the computer 1000 functions as the sensor 1 or a portion of the sensor system 1A described above, the CPU 1100 of the computer 1000 can execute the program loaded onto the RAM 1200 to achieve a function of the processing unit 6. The programs (also referred to as sensing programs or the like) may be stored in the HDD 1400. Note that the CPU 1100 reads the program data 1450 from the HDD 1400 and executes the program data 1450, but as another example, the CPU 1100 may acquire a program from another apparatus via the external network

1550.

6. Conclusion

The technologies described above are specified as follows, for example. One of the disclosed technologies is the sensor 1. As described with reference to Fig. 1 to Fig. 8 and the like, the sensor 1 includes the pixel array section 2 including the plurality of pixels 3 each of which outputs a pixel signal corresponding to an amount of charge accumulated during an exposure period, and the drive unit 4 that drives the pixel array section 2 such that the image data 5 of one frame of the scene 8 including the subject 9 is obtained. The drive unit 4 drives the pixel array section 2 such that the plurality of pixels 3 are exposed with the exposure period pattern P including the plurality of exposure periods in one frame period.

According to the sensor 1 described above, the drive unit 4 drives the pixel array section 2 such that the pixels 3 are exposed with the exposure period pattern P including the plurality of exposure periods in the one frame period, and thus the image data 5 subjected to a temporal operation (convolved in temporal direction, for example) is obtained. By thus realizing the temporal operation, it is possible to suppress the calculation cost required for the operation. This also makes it possible to suppress power consumption.

As described with reference to Fig. 1, Fig. 8, and the like, the image data 5 is input to the execution NW 60 that performs a spatial operation. For example, the execution NW may include a computation layer that performs the spatial operation, and the computation layer of the execution NW may include at least one of a convolutional layer (spatial convolutional layer 62, for example), a full connection layer, and a self-attention layer. This makes it possible to realize the processing of the image data 5 including both the temporal operation and the spatial operation.

As described with reference to Fig. 1, Fig. 4 to Fig. 7, and the like, the plurality of pixels 3 of the pixel array section 2 may be grouped into a plurality of pixel groups, and the drive unit 4 may drive the pixel array section 2 such that one of the image data 5 is obtained from one of the plurality of pixel groups. The drive unit 4 may drive the pixel array section 2 such that, the pixels 3 of the same pixel group are exposed with the same exposure period pattern P. The drive unit 4 may drive the pixel array section 2 such that, the pixels 3 of different pixel groups are exposed with different exposure period patterns P. This makes it possible to obtain a plurality of the image data 5 by exposure of the pixels 3 with different exposure period patterns P.

As described with reference to Fig. 1, Fig. 37 to Fig. 39, and the like, the drive unit 4 may drive the pixel array section 2 such that the exposure period pattern P is switched in accordance with a trigger (condition), and the trigger may include at least one of a change in velocity of at least either the scene 8 or the subject 9, a change in brightness of at least either the scene 8 or the subject 9, a change in state of the pixel 3, and a change in mode. By switching the exposure period pattern P in response to various triggers, it is possible to obtain the appropriate image data 5.

As described with reference to Fig. 1, Fig. 24, Fig. 25, Fig. 37, and the like, the trigger may include the change in velocity of at least either the scene 8 or the subject 9, and the drive unit 4 may drive the pixel array section 2 such that the plurality of pixels 3 are exposed with the exposure period pattern P having a sparsity or density according to the change in velocity. Thus, even in a case in which the scene 8 moves or is in motion, it is possible to obtain the image data 5 in which the scene 8 and the like can be easily recognized.

As described with reference to Fig. 1, Fig. 22, Fig. 23, Fig. 37, and the like, the trigger may include the change in brightness of at least either the scene 8 or the subject 9, and the drive unit 4 may drive the pixel array section 2 such that the plurality of pixels 3 are exposed with the exposure period pattern P having a total exposure period according to the change in brightness. Thus, even in a case in which the scene 8 and the like are bright or dark, it is possible to obtain the image data 5 in which the scene 8 and the like are easily recognized.

As described with reference to Fig. 1, Fig. 37, Fig. 38, and the like, the trigger may include the change in state of the pixel 3, the change in state of the pixel 3 may include a change in an amount of charge accumulated in a photoelectric conversion section of the pixel 3, and the drive unit 4 may switch the exposure period pattern P partway through the one frame period T so that the photoelectric conversion section of the pixel 3 is not saturated in the one frame period T. This makes it possible to suppress saturation of the pixel 3 and obtain the appropriate image data 5.

As described with reference to Fig. 1, Fig. 37, Fig. 39, and the like, the trigger may include the change in mode, and the mode may include a sensing mode in which the drive unit 4 drives the pixel array section 2 such that the plurality of pixels 3 are exposed with the exposure period pattern P including the plurality of exposure periods in the one frame period T, and a viewing mode in which the drive unit 4 drives the pixel array section 2 such that the plurality of pixels 3 are exposed with the exposure period pattern P including only one exposure period in the one frame period T. This makes it possible to acquire the image data 5 convolved in the temporal direction by the sensing mode, and the image data 5 suitable for display to the user by the viewing mode.

As described with reference to Fig. 1, Fig. 3, Fig. 6, Fig. 7, Fig. 9 to Fig. 19, and the like, the drive unit 4 may include the code generation section 41 that generates the code C defining the exposure period pattern P, and the drive unit 4 may drive the pixel array section 2 according to the code generated by the code generation section 41. The code C may be a code obtained by binarizing the kernel weights of a temporal operation (kernel weights W). This makes it possible to obtain

the image data 5 subjected to a desired temporal operation.

As described with reference to Fig. 1, Fig. 8, and the like, the sensor 1 may include the processing unit 6 that processes the image data 5 by using the execution NW 60 that performs a spatial operation. This makes it possible to realize, on the sensor 1, the processing of the image data 5 including both the temporal operation and the spatial operation.

As described with reference to Fig. 1, Fig. 40, Fig. 41, and the like, the execution NW 60 may be a plurality of execution NWs, and the processing unit 6 may switch the execution NW (execution NW 60-1 to execution NW 60-3, for example) to be used in accordance with the exposure period pattern used to obtain the image data 5 (image data 5-1 to image data 5-3, for example) to be processed. This makes it possible to appropriately process the image data 5 obtained by exposure of the pixels 3 with the different exposure period patterns P.

As described with reference to Fig. 1, Fig. 43, Fig. 44, and the like, the processing unit 6 may process the image data 5 (image data 5-1, for example) obtained by exposure of the plurality of pixels 3 with a specific exposure period pattern P (exposure period pattern P-1, for example) by using the execution NW 60, and process image data (image data 5-2 and image data 5-3, for example) obtained by exposure of the plurality of pixels 3 with an exposure period pattern (exposure period pattern P-2 or exposure period pattern P-3, for example)) other than the specific exposure period pattern P by using the execution NW 60 and the conversion network 64 (conversion network 64-2 or conversion network 64-3, for example) that absorbs a difference between the exposure period patterns P. Even in this way, it is possible to appropriately process the image data 5 obtained by exposure of the pixels 3 with the different exposure period patterns P. Further, it is not necessary to prepare a plurality of the execution NWs 60.

The sensor system 1A described with reference to Fig 1 to Fig. 8, Fig. 45, and the like is also one of the disclosed technologies. The sensor system 1A includes the sensor 1 that outputs the image data 5, and the processing unit 6 that processes the image data 5 from the sensor 1. The sensor 1 includes the pixel array section 2 including the plurality of pixels 3 each of which outputs a pixel signal corresponding to an amount of charge accumulated during an exposure period, the drive unit 4 that drives the pixel array section 2 such that the image data 5 of one frame of the scene 8 including the subject 9 is obtained, and the processing unit 6 that processes the image data by using the execution NW 60. The drive unit 4 drives the pixel array section 2 such that the plurality of pixels 3 are exposed with the exposure period pattern P including the plurality of exposure periods in the one frame period T. The processing by the processing unit 6 includes inputting the image data 5 from the sensor 1 to the execution NW 60 that performs a spatial operation. According to such a sensor system 1A as well, it is possible to suppress the calculation cost required for the temporal operation and suppress the power consumption.

The sensing method described with reference to Fig. 1 to Fig. 8, Fig. 62, and the like is also one of the disclosed technologies. The sensing method includes driving the pixel array section 2 including the plurality of pixels 3 each of which outputs a pixel signal corresponding to an amount of charge accumulated during an exposure period, such that the image data 5 of one frame of the scene 8 including the subject 9 is obtained (step S2 and step S21). The driving includes driving the pixel array section such that the plurality of pixels 3 are exposed with the exposure period pattern P including two or more exposure periods in the one frame period T. According to such a sensing method as well, it is possible to suppress the calculation cost required for the temporal operation and suppress the power consumption.

The information processing system 100 (information processing device 10, in particular) described with reference to Fig. 1 to Fig. 8, Fig. 46 to Fig. 60, and the like is also one of the disclosed technologies. The information processing system 100 includes the data generation section 12 that generates the training data of the training target NW 130 that performs a temporal operation and a spatial operation, the training section 13 that performs machine learning on the training target NW 130 by using the training data 120 generated by the data generation section 12, and the NW generation section 14 that generates the execution NW 60 that performs a spatial operation on the basis of the training target NW 130, and output output data when the image data 5 subjected to the temporal operation is input. For example, the training target NW may include a computation layer that performs the temporal operation and the spatial operation, the computation layer may include at least one of a convolutional layer (temporal convolutional layer 131 and spatial convolutional layer 132 or 3D convolutional layer 133, for example), a full connection layer, and a self-attention layer, the execution NW may include a computation layer that performs the spatial operation, and the computation layer may include at least one of a convolutional layer (spatial convolutional layer 62, for example), a full connection layer, and a self-attention layer. According to such an information processing system 100, it is possible to generate the execution NW 60 that can be used with a sensor 1 or a sensor system 1A such as described above, for example.

As described with reference to Fig. 48, Fig. 49, and the like, the training data 120 may include the input data 121 input to the training target NW 130, the input data 121 may include time-series image data, and the training section 13 may input the input data 121 to the training target NW 130 so that the input data 121 is subjected to the temporal operation and the spatial operation by the training target NW 130. For example, the data generation section 12 may generate the input data 121 by using given CG material data (original data 110) and CG renderer technology (generation method 2). The data generation section 12 may generate the input data 121 by using given time-series image data (original data 110) and NeRF technology. The data generation section 12 may generate the input data 121 by using given time-series image data (original data 110 (low frame time-series image data)) and frame interpolation technology. This makes it possible to

perform machine learning on the training target NW 130 by using the training data 120 including such input data 121, for example.

As described with reference to Fig. 50, Fig. 51, and the like, the training data 120 may include the input data 121 input to the training target NW 130, the input data 121 may include image data subjected to the temporal operation, and the training section 13 may input the input data 121 to the training target NW 130 so that the input data 121 is not subjected to the temporal operation but is subjected to the spatial operation by the training target NW 130 (is not convolved by the temporal convolutional layer 131 but is convolved by the spatial convolutional layer 132, for example). For example, the data generation section 12 may generate the input data 121 by using CG material data (original data 110) and differentiable CG renderer technology. The data generation section 12 may generate the input data 121 by using given time-series image data (original data 110) and NeRF technology edited such that image data obtained by convolving the time-series image data in the temporal direction is obtained, and the temporal operation in the edited NeRF technology may be performed by using a differentiable operation. This makes it possible to perform machine learning on the training target NW 130 even by using the training data 120 including such input data 121, for example. With the generation of the input data 121 by the data generation section 12 being performed in a differentiable manner, machine learning utilizing back-propagation is possible.

As described with reference to Fig. 48, Fig. 50, Fig. 52, Fig. 53, and the like, the training data 120 may include the input data 121 input to the training target NW 130 and the ground truth data 122 paired with the input data 121, the training section 13 may perform machine learning on the training target NW 130 such that a loss value of output data output from the training target NW 130 to which the input data 121 is input relative to the ground truth data 122 is reduced, the machine learning by the training section 13 may include regularization of kernel weights (filter regularization) of the temporal operation of the training target NW 130, and the regularization may include calculation of a loss value based on the kernel weights of the temporal operation and a cost weighting function in the one frame period T. For example, this can be used for machine learning for processing the image data 5 obtained by the exposure period pattern P that weights the first half or the second half of the one frame period T.

As described with reference to Fig. 48, Fig. 50, Fig. 52, Fig. 54, Fig. 55, and the like, the training data 120 may include input data 121 input to the training target NW 130, the data generation section 12 may generate new input data 121a by augmenting the generated input data 121, the augmentation by the data generation section 12 may include at least either shifting a motion period of the subject 9 and the like in the generated input data 121, or changing a pattern of a kernel of the temporal operation in the generated input data 121. For example, by an increase in such input data, it is possible to perform machine learning on the training target NW 130 by using more input data.

As described with reference to Fig. 56 and the like, the training target NW 130 may include a temporal operation layer (temporal convolutional layer 131, for example) that performs the temporal operation, and a spatial operation layer (spatial convolutional layer 132, for example) that performs the spatial operation, and the NW generation section 14 may generate the execution NW 60 by reflecting a function of the spatial operation of the spatial operation layer of the training target NW 130 in the spatial operation of the execution NW 60. As described with reference to Fig. 59, Fig. 60, and the like, the training target NW 130 may include a 3D computation layer (convolutional layer 133, for example) that performs the temporal operation and the spatial operation, and the NW generation section 14 may generate the execution NW 60 by reflecting a function of the temporal operation of the 3D computation layer of the training target NW 130 in the spatial operation of the execution NW 60. This makes it possible to generate the execution NW 60 on the basis of the training target NW 130, for example.

The information processing method described with reference to Fig. 1 to Fig. 8, Fig. 46 to Fig. 61, and the like is also one of the disclosed technologies. The information processing method includes generating the training data 120 of the training target NW that performs a temporal operation and a spatial operation (step S1 and step S12), performing machine learning on the training target NW 130 by using the generated training data 120 (step S1 and step S13), and generating the execution NW 60 that performs a spatial operation on the basis of the training target NW 130 and output output data when the image data 5 subjected to the temporal operation is input (step S1 and step S14). According to such an information processing method, it is possible to generate the execution NW 60 that can be used with a sensor 1 such as described above, for example.

The information processing program 150 described above with reference to Fig. 1 to Fig. 8, Fig. 46 to Fig. 61, Fig. 66, and the like is also one of the disclosed technologies. The information processing program 150 causes the computer 1000 to execute generating the training data 120 of the training target NW 130 that performs a temporal operation and a spatial operation, performing machine learning on the training target NW 130 by using the generated training data 120, and generating the execution NW 60 that performs a spatial operation on the basis of the training target NW 130 and output output data when the image data 5 subjected to the temporal operation is input. According to such an information processing program 150 as well, it is possible to generate the execution NW 60 that can be used with a sensor 1 or a sensor system 1A such as described above, for example.

The information processing system 100 including the sensor 1 or the sensor system 1A is also one of the disclosed technologies. As described with reference to Fig. 1 to Fig. 8, Fig. 46 to Fig. 60, and the like, the information

processing system 100 includes the data generation section 12 that generates the training data 120 of the training target NW 130 that performs a temporal operation and a spatial operation, the training section 13 that performs machine learning on the training target NW 130 by using the training data 120 generated by the data generation section 12, the NW generation section 14 that generates the execution NW 60 that performs a spatial operation on the basis of the training target NW 130, and output output data when the image data 5 convolved in the temporal direction is input, the pixel array section 2 including the plurality of pixels 3 each of which outputs a pixel signal corresponding to an amount of charge accumulated during an exposure period, the drive unit 4 that drives the pixel array section 2 such that the image data 5 of one frame of the scene 8 including the subject 9 is obtained, and the processing unit 6 that processes the image data 5 by using the execution NW 60. The drive unit 4 drives the pixel array section 2 such that the plurality of pixels 3 are exposed with the exposure period pattern P including the plurality of exposure periods in the one frame period T. According to such an information processing system 100, it is possible to suppress the calculation cost required for the temporal operation and suppress the power consumption as described above.

Note that the effects described in the present disclosure are mere examples, and are not limited to the disclosed contents. Other effects may be present.

Although the embodiments of the present disclosure have been described above, the technical scope of the present disclosure is not limited to the above-described embodiments alone, and various modifications can be made without departing from the gist of the present disclosure. Furthermore, the constituent elements of different embodiments and modifications may be appropriately combined.

Note that the present technology may adopt configurations such as those described below.

(1) A sensor including:

a pixel array section including a plurality of pixels, each configured to output a pixel signal corresponding to an amount of charge accumulated during an exposure period; and
a drive unit configured to drive the pixel array section such that image data of one frame of a scene including a subject is obtained, in which
the drive unit drives the pixel array section such that the plurality of pixels are exposed with an exposure period pattern including a plurality of exposure periods in one frame period.

(2) The sensor according to (1), in which
the image data is input to an execution neural network (NW) configured to perform a spatial operation.
(3) The sensor according to (2), in which

the execution NW includes a computation layer configured to perform the spatial operation, and
the computation layer of the execution NW includes at least one of a convolutional layer, a full connection layer, and a self-attention layer.

(4) The sensor according to any one of (1) to (3), in which

the plurality of pixels of the pixel array section are grouped into a plurality of pixel groups, and
the drive unit drives the pixel array section such that one of the image data is obtained from one of the plurality of pixel groups.

(5) The sensor according to (4), in which
the drive unit drives the pixel array section such that, among the plurality of pixels, pixels of the same pixel group among the plurality of pixel groups are exposed with the same exposure period pattern.
(6) The sensor according to (4) or (5), in which
the drive unit drives the pixel array section such that, among the plurality of pixels, pixels of different pixel groups among the plurality of pixel groups are exposed with different exposure period patterns.
(7) The sensor according to any one of (1) to (6), in which

the drive unit drives the pixel array section such that the exposure period pattern is switched in response to a trigger, and
the trigger includes at least one of
a change in velocity of at least either the scene or the subject,
a change in brightness of at least either the scene or the subject,
a change in state of a pixel among the plurality of pixels, and
a change in mode.

(8) The sensor according to (7), in which

the trigger includes the change in velocity of the at least either the scene or the subject, and
the drive unit drives the pixel array section such that the pixels are exposed with the exposure period pattern having a sparsity or density according to the change in velocity.

(9) The sensor according to (7) or (8), in which

the trigger includes the change in brightness of the at least either the scene or the subject, and
the drive unit drives the pixel array section such that the pixels are exposed with the exposure period pattern including a total exposure period according to the change in brightness.

(10) The sensor according to any one of (7) to (9), in which

the trigger includes the change in state of the pixel,
the change in state of the pixel includes a change in amount of charge accumulated in a photoelectric conversion section of the pixel, and
the drive unit switches the exposure period pattern partway through the one frame period so that the photoelectric conversion section of the pixel is not saturated in the one frame period.

(11) The sensor according to any one of (7) to (10), in which

the trigger includes the change in mode, and
the mode includes
a sensing mode in which the drive unit drives the pixel array section such that the pixels are exposed with the exposure period pattern including the plurality of exposure periods in the one frame period, and
a viewing mode in which the drive unit drives the pixel array section such that the pixels are exposed with the exposure period pattern including only one exposure period in the one frame period.

(12) The sensor according to any one of (1) to (11), in which

the drive unit includes a code generation section configured to generate a code defining the exposure period pattern, and
the drive unit drives the pixel array section according to the code generated by the code generation section.

(13) The sensor according to (12), in which
the code is a code obtained by binarizing kernel weight of a temporal operation.
(14) The sensor according to any one of (1) to (13), including:
a processing unit configured to process the image data by using an execution NW configured to perform a spatial operation.
(15) The sensor according to (14), in which

the execution NW is a plurality of execution NWs. and
the processing unit switches an execution NW to be used among the plurality of execution NWs in accordance with the exposure period pattern used to obtain the image data to be processed.

(16) The sensor according to (14), in which

the processing unit
processes image data obtained by exposure of the pixels with a specific exposure period pattern by using the execution NW, and
processes image data obtained by exposure of the pixels with an exposure period pattern other than the specific exposure period pattern by using the execution NW and a conversion network configured to absorb a difference between the exposure period patterns.

(17) An information processing system including:

an information processing device including a spatial convolutional layer configured to perform convolution in a

spatial direction, the information processing device being configured to generate an execution NW configured to output output data when image data convolved in a temporal direction is input; and
a sensor, in which
the sensor includes
a pixel array section including a plurality of pixels, each configured to output a pixel signal corresponding to an amount of charge accumulated during an exposure period,
a drive unit configured to drive the pixel array section such that image data of one frame of a scene including a subject is obtained, and
a processing unit configured to process the image data by using the execution NW, and
the drive unit drives the pixel array section such that the pixels are exposed with an exposure period pattern including a plurality of exposure periods in one frame period.

(18) A sensing method including:

driving a pixel array section including a plurality of pixels each configured to output a pixel signal corresponding to an amount of charge accumulated during an exposure period, such that image data of one frame of a scene including a subject is obtained, in which
the driving includes driving the pixel array section such that the pixels are exposed with an exposure period pattern including two or more exposure periods in one frame period.

(101) An information processing system including:

a data generation section configured to generate training data of a training target neural network (NW) configured to perform a temporal operation and a spatial operation;
a training section configured to perform machine learning on the training target NW by using the training data generated by the data generation section; and
an NW generation section configured to generate an execution NW configured to perform a spatial operation on the basis of the training target NW, and output output data when image data subjected to the temporal operation is input.

(102) The information processing system according to (101), in which

the training target NW includes a computation layer configured to perform the temporal operation and the spatial operation,
the computation layer of the training target NW includes at least one of a convolutional layer, a full connection layer, and a self-attention layer,
the execution NW includes a computation layer configured to perform the spatial operation, and
the computation layer of the execution NW includes at least one of a convolutional layer, a full connection layer, and a self-attention layer.

(103) The information processing system according to (101) or (102), in which

the training data includes input data input to the training target NW,
the input data includes time-series image data, and
the training section inputs the input data to the training target NW so that the input data is subjected to the temporal operation and the spatial operation by the training target NW.

(104) The information processing system according to (103), in which
the data generation section generates the input data by using given CG material data and CG renderer technology.
(105) The information processing system according to (103) or (104), in which
the data generation section generates the input data by using given time-series image data and neural radiance fields (NeRF) technology.
(106) The information processing system according to any one of (103) to (105), in which
the data generation section generates the input data by using given time-series image data and frame interpolation technology.
(107) The information processing system according to (101) or (102), in which

the training data includes input data input to the training target NW,

the input data includes image data subjected to the temporal operation, and
the training section inputs the input data to the training target NW so that the input data is not subjected to the temporal operation but is subjected to the spatial operation by the training target NW.

(108) The information processing system according to (107), in which
the data generation section generates the input data by using given CG material data and differentiable CG renderer technology.
(109) The information processing system according to (107) or (108), in which

the data generation section generates the input data by using given time-series image data and NeRF technology edited such that image data obtained by performing a temporal operation on the time-series image data is obtained, and
the temporal operation in the edited NeRF technology is performed by using a differentiable operation.

(110) The information processing system according to any one of (101) to (109), in which

the training data includes input data input to the training target NW and ground truth data paired with the input data,
the training section performs machine learning on the training target NW such that a loss value of output data output from the training target NW to which the input data is input relative to the ground truth data is reduced,
the machine learning by the training section includes regularization of kernel weights of the temporal operation of the training target NW, and
the regularization includes calculation of a loss value based on the kernel weights of the temporal operation and a cost weighting function in one frame period.

(111) The information processing system according to any one of (101) to (110), in which

the training data includes input data input to the training target NW,
the data generation section generates new input data by augmenting the generated input data,
the augmentation by the data generation section includes at least either
shifting a motion period of a subject in the generated input data, or
changing a pattern of a kernel of the temporal operation in the generated input data.

(112) The information processing system according to any one of (101) to (111), in which

the training target NW includes
a temporal operation layer configured to perform the temporal operation, and
a spatial operation layer configured to perform the spatial operation, and
the NW generation section generates the execution NW by reflecting a function of the spatial operation of the spatial operation layer of the training target NW in the spatial operation of the execution NW.

(113) The information processing system according to any one of (101) to (111), in which

the training target NW includes a 3D computation layer configured to perform the temporal operation and the spatial operation, and
the NW generation section generates the execution NW by reflecting a function of the temporal operation of the 3D computation layer of the training target NW in the spatial operation of the execution NW.

(114) An information processing method including:

generating training data of a training target neural network (NW) configured to perform a temporal operation and a spatial operation;
performing machine learning on the training target NW by using the generated training data; and
generating an execution NW configured to perform a spatial operation on the basis of the training target NW, and output output data when image data subjected to the temporal operation is input.

(115) An information processing program causing a computer to execute:

generating training data of a training target neural network (NW) configured to perform a temporal operation and a

spatial operation;
performing machine learning on the training target NW by using the generated training data; and
generating an execution NW configured to perform a spatial operation on the basis of the training target NW, and output output data when image data subjected to the temporal operation is input.

(116) An information processing system including:

a data generation section configured to generate training data of a training target neural network (NW) configured to perform a temporal operation and a spatial operation;
a training section configured to perform machine learning on the training target NW by using the training data generated by the data generation section;
an NW generation section configured to generate an execution NW configured to perform a spatial operation on the basis of the training target NW, and output output data when image data subjected to the temporal operation is input;
a pixel array section including a plurality of pixels, each configured to output a pixel signal corresponding to an amount of charge accumulated during an exposure period;
a drive unit configured to drive the pixel array section such that image data of one frame of a scene including a subject is obtained; and
a processing unit configured to process the image data by using the execution NW, in which
the drive unit drives the pixel array section such that the plurality of pixels are exposed with an exposure period pattern including a plurality of exposure periods in one frame period.

Reference Signs List

1 Sensor
1A Sensor system
2 Pixel array section
3 Pixel
4 Drive unit
40 Base filter
41 Code generation section
5 Image data
6 Processing unit
60 Execution NW
62 Spatial convolutional layer
64 Conversion network
7 Storage section
8 Scene
9 Subject
10 Information processing device
11 Acquisition section
110 Original data
12 Data generation section
120 Training data
121 Input data
121a Input data
122 Ground truth data
13 Training section
130 Training target NW
131 Temporal convolutional layer
132 Spatial convolutional layer
133 3D convolutional layer
14 NW generation section
15 Storage section
150 Information processing program
100 Information processing system

1000 Computer
1050 Bus
1100 CPU
1200 RAM
1300 ROM
1400 HDD
1450 Program data
1500 Communication interface
1600 Input/output interface
1650 Input/output device

## Claims

**1.** A sensor comprising:

a pixel array section including a plurality of pixels each configured to output a pixel signal corresponding to an amount of charge accumulated during an exposure period; and
a drive unit configured to drive the pixel array section such that image data of one frame of a scene including a subject is obtained, wherein
the drive unit drives the pixel array section such that the plurality of pixels are exposed with an exposure period pattern including a plurality of exposure periods in one frame period.

**2.** The sensor according to claim 1, wherein
the image data is input to an execution neural network (NW) configured to perform a spatial operation.

**3.** The sensor according to claim 2, wherein

the execution NW includes a computation layer configured to perform the spatial operation, and
the computation layer of the execution NW includes at least one of a convolutional layer, a full connection layer, and a self-attention layer.

**4.** The sensor according to claim 1, wherein

the plurality of pixels of the pixel array section are grouped into a plurality of pixel groups, and
the drive unit drives the pixel array section such that one of the image data is obtained from one of the plurality of pixel groups.

**5.** The sensor according to claim 4, wherein
the drive unit drives the pixel array section such that, among the plurality of pixels, pixels of the same pixel group among the plurality of pixel groups are exposed with the same exposure period pattern.

**6.** The sensor according to claim 4, wherein
the drive unit drives the pixel array section such that, among the plurality of pixels, pixels of different pixel groups among the plurality of pixel groups are exposed with different exposure period patterns.

**7.** The sensor according to claim 1, wherein

the drive unit drives the pixel array section such that the exposure period pattern is switched in response to a trigger, and
the trigger includes at least one of
a change in velocity of at least either the scene or the subject,
a change in brightness of at least either the scene or the subject,
a change in state of a pixel among the plurality of pixels, and
a change in mode.

**8.** The sensor according to claim 7, wherein

the trigger includes the change in velocity of the at least either the scene or the subject, and
the drive unit drives the pixel array section such that the pixels are exposed with the exposure period pattern having a sparsity or density according to the change in velocity.

**9.** The sensor according to claim 7, wherein

the trigger includes the change in brightness of the at least either the scene or the subject, and
the drive unit drives the pixel array section such that the pixels are exposed with the exposure period pattern including a total exposure period according to the change in brightness.

**10.** The sensor according to claim 7, wherein

the trigger includes the change in state of the pixel,
the change in state of the pixel includes a change in amount of charge accumulated in a photoelectric conversion section of the pixel, and
the drive unit switches the exposure period pattern partway through the one frame period so that the photoelectric conversion section of the pixel is not saturated in the one frame period.

**11.** The sensor according to claim 7, wherein

the trigger includes the change in mode, and
the mode includes
a sensing mode in which the drive unit drives the pixel array section such that the pixels are exposed with the exposure period pattern including the plurality of exposure periods in the one frame period, and
a viewing mode in which the drive unit drives the pixel array section such that the pixels are exposed with the exposure period pattern including only one exposure period in the one frame period.

**12.** The sensor according to claim 1, wherein

the drive unit includes a code generation section configured to generate a code defining the exposure period pattern, and
the drive unit drives the pixel array section according to the code generated by the code generation section.

**13.** The sensor according to claim 12, wherein
the code is a code obtained by binarizing kernel weight of a temporal operation.

**14.** The sensor according to claim 1, comprising:
a processing unit configured to process the image data by using an execution NW configured to perform a spatial operation.

**15.** The sensor according to claim 14, wherein

the execution NW is a plurality of execution NWs, and
the processing unit switches an execution NW to be used among the plurality of execution NWs in accordance with the exposure period pattern used to obtain the image data to be processed.

**16.** The sensor according to claim 14, wherein

the processing unit
processes image data obtained by exposure of the pixels with a specific exposure period pattern by using the execution NW, and
processes image data obtained by exposure of the pixels with an exposure period pattern other than the specific exposure period pattern by using the execution NW and a conversion network configured to absorb a difference between the exposure period patterns.

**17.** A sensor system comprising:

a sensor configured to output image data; and

a processing unit configured to process the image data from the sensor, wherein
the sensor includes
a pixel array section including a plurality of pixels each configured to output a pixel signal corresponding to an amount of charge accumulated during an exposure period, and
a drive unit configured to drive the pixel array section such that image data of one frame of a scene including a subject is obtained,
the drive unit drives the pixel array section such that the pixels are exposed with an exposure period pattern including a plurality of exposure periods in one frame period, and
the processing by the processing unit includes inputting the image data from the sensor to an execution neural network (NW) configured to perform a spatial operation.

**18.** A sensing method comprising:

driving a pixel array section including a plurality of pixels each configured to output a pixel signal corresponding to an amount of charge accumulated during an exposure period, such that image data of one frame of a scene including a subject is obtained, wherein
the driving includes driving the pixel array section such that the pixels are exposed with an exposure period pattern including two or more exposure periods in one frame period.

SCENE
8
SUBJECT
9
LIGHT
SENSOR
1
PIXEL ARRAY SECTION
2
3
Ht
Wd
DRIVE UNIT
4
CODE GENERATION SECTION
41
5
5-1
5-2
5-3
5-4
IMAGE DATA
Ht
Wd
PROCESSING UNIT
6
PROCESSING RESULT
7
STORAGE SECTION
40
BASE FILTER
60
EXECUTION NW

Fig. 1

Fig. 2

EXPOSURE PERIOD
PATTERN P
T
EXPOSURE
PERIOD
EXPOSURE
PERIOD
EXPOSURE
PERIOD
EXPOSURE
PERIOD
...
READOUT
PERIOD
t
t10
t20
t30
t40

# Fig. 3

EXPOSURE PERIOD PATTERN P
T
CODE C
1 1 0 0 1 1 0 0 1 1 0 0 1 1 ···
(EXPOSURE ON) 1
···
(EXPOSURE OFF) 0
t
t10
t20

Fig. 4

2
PIXEL ARRAY SECTION
3-1
3-2
3-1
3-2
3-3
3-4
3-3
3-4
3-1
3-2
3-1
3-2
3-3
3-4
3-3
3-4
Ht
Wd

Fig. 5

2
PIXEL ARRAY SECTION
3-1
3-2
3-3
3-4
3-5
3-6
3-7
3-8
3-9
3-10
3-11
3-12
3-13
3-14
3-15
3-16
Ht
Wd

Fig. 6

EXAMPLE OF CODE C

| CODE C-1 | EXPOSURE PERIOD PATTERN P-1 | PIXEL 3-1 | IMAGE DATA 5-1 |
|---|---|---|---|
| CODE C-2 | EXPOSURE PERIOD PATTERN P-2 | PIXEL 3-2 | IMAGE DATA 5-2 |
| CODE C-3 | EXPOSURE PERIOD PATTERN P-3 | PIXEL 3-3 | IMAGE DATA 5-3 |
| CODE C-4 | EXPOSURE PERIOD PATTERN P-4 | PIXEL 3-4 | IMAGE DATA 5-4 |
| ... | ... | ... | ... |

# Fig. 7

(A)
EXPOSURE PERIOD PATTERN P-1
T
CODE C-1
1 1 0 1 0 1 1 1 1 0 0 1 1 0 0 0
(EXPOSURE ON) 1
(EXPOSURE OFF) 0
t
t10
t20
(B)
EXPOSURE PERIOD PATTERN P-2
T
CODE C-2
1 0 0 1 0 0 0 1 1 0 0 0 0 1 1 1
(EXPOSURE ON) 1
(EXPOSURE OFF) 0
t
t10
t20
⋮

Fig. 8
OUTPUT DATA
FEATURE AMOUNT
60
EXECUTION NW
SPATIAL
CONV
62
5
IMAGE DATA
Ht
Wd

# Fig.9

(A)
-----Wth
KERNEL
WEIGHT W
t
(B)
EXPOSURE PERIOD PATTERN P
CODE C
··· 0 0 0 1 1 1 0 0 0 ···
(EXPOSURE ON) 1
(EXPOSURE OFF) 0
t

# Fig. 10

(A)
-----Wth
KERNEL
WEIGHT W
t
(B)
EXPOSURE PERIOD PATTERN P
CODE C
··· 0 1 1 1 1 1 1 1 1 1 0 ···
(EXPOSURE ON) 1
(EXPOSURE OFF) 0
t

Fig. 11

(A)
-----Wth
KERNEL
WEIGHT W
t
(B)
EXPOSURE PERIOD PATTERN P
CODE C
··· 0 0 1 0 1 0 1 0 1 0 0 ···
(EXPOSURE ON) 1
(EXPOSURE OFF) 0
t

# Fig. 12

(A)
-----Wth
KERNEL
WEIGHT W
t
(B)
EXPOSURE PERIOD PATTERN P
CODE C
··· 0 0 0 0 1 0 0 0 1 0 0 ···
(EXPOSURE ON) 1
(EXPOSURE OFF) 0
t

# Fig. 13

(A)
KERNEL
WEIGHT W
t
(B)
EXPOSURE PERIOD PATTERN P
CODE C
··· 0 0 0 1 1 1 0 0 0 ···
(EXPOSURE ON) 1
(EXPOSURE OFF) 0
t

# Fig. 14

(A)
KERNEL
WEIGHT W
t
(B)
CODE C
EXPOSURE PERIOD PATTERN P
··· 0 0 1 1 1 1 1 0 0 ···
(EXPOSURE ON) 1
(EXPOSURE OFF) 0
t

# Fig. 15

(A)
KERNEL WEIGHT W
t
Ts1
(B)
EXPOSURE PERIOD PATTERN P
CODE C
··· 0 0 0 1 1 1 0 0 ···
(EXPOSURE ON) 1
(EXPOSURE OFF) 0
t
Ts2

# Fig. 16

(A)
KERNEL WEIGHT W
t
Ts1
RESAMPLING
KERNEL WEIGHT W
t
Ts2
(B)
CODE C
EXPOSURE PERIOD PATTERN P
···0000001111110000···
(EXPOSURE ON) 1
(EXPOSURE OFF) 0
t
Ts2

# Fig. 17

(A)
KERNEL WEIGHT W
t
Ts1
RESAMPLING
KERNEL WEIGHT W
t
Ts2
(B)
EXPOSURE PERIOD PATTERN P
CODE C
… 0 0 1 0 …
(EXPOSURE ON) 1
(EXPOSURE OFF) 0
t
Ts2

# Fig. 18

(A)
KERNEL
WEIGHT W
t
Ts1
(B)
EXPOSURE PERIOD PATTERN P
CODE C
0 0 0 1 1 1 0 0 0 0 0 0 0 1 1 0 0 0 0 0 0 0 1 0 0 0 0 0
(EXPOSURE ON) 1
(EXPOSURE OFF) 0
t
Ts2

# Fig. 19

(A)
KERNEL WEIGHT W
t
RESAMPLING
KERNEL WEIGHT W
t
Ts2
(B)
EXPOSURE PERIOD PATTERN P
CODE C
··· 0 0 0 1 1 1 0 0 ···
(EXPOSURE ON) 1
(EXPOSURE OFF) 0
t
Ts2

Fig. 20

EXPOSURE PERIOD PATTERN P
T
CODE C
1 0 0 0 0 1 0 0 0 1 0 0 0 0 1 0
(EXPOSURE ON) 1
(EXPOSURE OFF) 0
t
t10
t20

Fig. 21

EXPOSURE PERIOD PATTERN P
T
CODE C
1 1 1 0 0 1 1 1 0 1 1 0 1 0 1 1
(EXPOSURE ON) 1
(EXPOSURE OFF) 0
t
t10
t20

# Fig. 22

EXPOSURE PERIOD PATTERN P
T
CODE C
(EXPOSURE ON) 1
(EXPOSURE OFF) 0
1 0 0 0 0 1 0 0 0 1 0 0 0 0 1 0
t
t10
t20

# Fig. 23

EXPOSURE PERIOD PATTERN P
T
CODE C
(EXPOSURE ON) 1
(EXPOSURE OFF) 0
1 1 1 0 0 1 1 1 0 1 1 0 1 0 1 1
t
t10
t20

# Fig. 24

(A)
EXPOSURE PERIOD PATTERN P
T
CODE C
0 0 0 0 0 1 1 1 1 1 0 0 0 0 0 0 0
(EXPOSURE ON) 1
(EXPOSURE OFF) 0
t
t10
t20
(B)
IMAGE DATA 5
8
SCENE
9
SUBJECT
Ht
Wd

# Fig. 25

(A)
EXPOSURE PERIOD PATTERN P
T
CODE C
1 0 0 0 1 0 0 0 1 0 0 0 1 0 0 0 1
(EXPOSURE ON) 1
(EXPOSURE OFF) 0
t
t10
t20
(B)
IMAGE DATA 5
8
SCENE
9
SUBJECT
9
SUBJECT
9
SUBJECT
9
SUBJECT
SUBJECT
9
Ht
Wd

Fig. 26

(A)
EXPOSURE PERIOD PATTERN P-1
T
CODE C-1
0 0 1 0 0 0 0 1 0 0 0 0 1 0 0 0 0 1 0
(EXPOSURE ON) 1
(EXPOSURE OFF) 0
t
t10
t20
(B)
EXPOSURE PERIOD PATTERN P-2
T
CODE C-2
0 0 0 1 1 0 0 0 1 1 0 0 0 1 1 0 0 0
(EXPOSURE ON) 1
(EXPOSURE OFF) 0
t
t10
t20

# Fig. 27

(A)
EXPOSURE PERIOD PATTERN P-1
T
CODE C-1
0 0 1 0 0 0 0 1 0 0 0 0 1 0 0 0 0 1 0
(EXPOSURE ON) 1
(EXPOSURE OFF) 0
t
t10
t20
(B)
EXPOSURE PERIOD PATTERN P-2
T
CODE C-2
0 1 1 1 0 0 1 1 1 0 0 1 1 1 0 0 1 1 1
(EXPOSURE ON) 1
(EXPOSURE OFF) 0
t
t10
t20

# Fig. 28

(A)
EXPOSURE PERIOD PATTERN P-1
IMAGE DATA 5-1
CODE C-1
··· 1 1 1 1 1 ···
(EXPOSURE ON) 1
(EXPOSURE OFF) 0
t
8
SCENE
SUBJECT
9
Ht
Wd
(B)
EXPOSURE PERIOD PATTERN P-2
IMAGE DATA 5-2
CODE C-2
··· 0 0 1 0 0 ···
(EXPOSURE ON) 1
(EXPOSURE OFF) 0
t
8
SCENE
SUBJECT
9
Ht
Wd

Fig. 29

(A)
KERNEL WEIGHT W
T
Wth
t10
t20
t
(B)
CODE C
(EXPOSURE ON) 1
(EXPOSURE OFF) 0
EXPOSURE PERIOD PATTERN P
T
0 1 0 0 1 0 0 1 0 0 1 0 0 1 0 0 1 0 0 1 0 0 1 0 0 1 0 0 1 0 0 1 0
t10
t20
t

Fig. 30
(A)
KERNEL WEIGHT W
T
t10
t20
t
(B)
EXPOSURE PERIOD PATTERN P
CODE C
(EXPOSURE ON) 1
(EXPOSURE OFF) 0
T
0 1 0 1 0 1 0 1 0 1 0 1 0 1 0 1 0 1 0 1 0 1 0 1 0 1 0 1 0 1 0 1 0
t10
t20
t

Fig. 31

(A)

KERNEL
WEIGHT W

T

t10

t20

t

(B)

EXPOSURE PERIOD PATTERN P

T

CODE C

(EXPOSURE ON) 1

(EXPOSURE OFF) 0

0 1 0 0 0 1 0 0 0 1 0 0 0 1 0 0 0 1 0 0 0 1 0 0 0 1 0 0 0 1 0

t10

t20

t

Fig. 32

| CODE | SN RATIO | SATURATION CHARACTERISTIC | MOVING BODY RECOGNITION |
| --- | --- | --- | --- |
| CODE Ci (T) | bad | very good | very good |
| CODE Cii (T) | very good | bad | bad |
| CODE Ciii (T) | good | good | good |
| CODE Civ (T) | good | good | good or very good |

Fig. 33

(A)
T
KERNEL
WEIGHT W
t
t10
t20
(B)
EXPOSURE PERIOD PATTERN P
T
CODE C
1 1 1 1 0 1 1 1 0 1 1 0 1 0 1 0 0 1 0 0 0 1 0 0 0 0 1 0 0 0 0 0 1
(EXPOSURE ON) 1
(EXPOSURE OFF) 0
t
t10
t20

Fig. 34
(A)
KERNEL
WEIGHT W
T
t
t10
t20
(B)
EXPOSURE PERIOD PATTERN P
T
CODE C
(EXPOSURE ON) 1
(EXPOSURE OFF) 0
1 0 0 0 0 0 1 0 0 0 0 1 0 0 0 1 0 0 1 0 1 0 1 1 0 1 1 1 0 1 1 1 1
t
t10
t20

Fig. 35
(A)
KERNEL
WEIGHT W
T
t
t10
t20
(B)
EXPOSURE PERIOD PATTERN P
T
CODE C
0 0 0 1 0 0 0 1 0 0 1 0 1 1 0 1 1 1 0 1 1 0 1 0 0 1 0 0 0 1 0 0 0
(EXPOSURE ON) 1
(EXPOSURE OFF) 0
t
t10
t20

# Fig. 36

(A)
KERNEL WEIGHT W
T
t10
t20
t
(B)
CODE C
(EXPOSURE ON) 1
(EXPOSURE OFF) 0
EXPOSURE PERIOD PATTERN P
T
0 0 0 0 0 1 0 1 1 0 1 1 1 1 0 1 1 0 1 0 0 0 0 0 0 0 0 0 0 0 0 0 0
t10
t20
t

Fig. 37

| EXAMPLE OF TRIGGER | CHANGE IN VELOCITY OF SCENE 8 |
|---|---|
| | CHANGE IN BRIGHTNESS OF SCENE 8 |
| | CHANGE IN VELOCITY OF SUBJECT 9 |
| | CHANGE IN BRIGHTNESS OF SUBJECT 9 |
| | CHANGE IN STATE OF PIXEL 3 |
| | CHANGE IN MODE |
| | ... |

Fig. 38

(A)
CODE C
(EXPOSURE ON) 1
(EXPOSURE OFF) 0
CODE C-1
EXPOSURE
PERIOD
PATTERN P-1
CODE C-2
EXPOSURE
PERIOD
PATTERN P-2
T
t10
t15
t20
(B)
ACCUMULATED
CHARGE AMOUNT
SATURATION LEVEL
ACCUMULATION RATE
t10
t15
t20
t

Fig. 39

VIEWING MODE

CODE C

t

SENSING MODE

CODE C

t

Fig. 40

7
STORAGE SECTION
60
60-1
60-2
60-3
EXECUTION NW
...

# Fig. 41

(A)
5-1
60-1
EXPOSURE PERIOD PATTERN P-1
(CODE C-1)
IMAGE DATA
EXECUTION NW
(B)
5-2
60-2
EXPOSURE PERIOD PATTERN P-2
(CODE C-2)
IMAGE DATA
EXECUTION NW
(C)
5-3
60-3
EXPOSURE PERIOD PATTERN P-3
(CODE C-3)
IMAGE DATA
EXECUTION NW

Fig. 42

(A)
EXPOSURE PERIOD PATTERN P-1
(CODE C-1)
5-1
IMAGE DATA
60
EXECUTION NW
(B)
EXPOSURE PERIOD PATTERN P-2
(CODE C-2)
5-2
IMAGE DATA
60
EXECUTION NW
(C)
EXPOSURE PERIOD PATTERN P-3
(CODE C-3)
5-3
IMAGE DATA
60
EXECUTION NW

Fig. 43

7
STORAGE SECTION
60
EXECUTION NW
64-2
64-3
CONVERSION NW

Fig. 44

(A)
EXPOSURE PERIOD PATTERN P-1 (CODE C-1)
5-1
IMAGE DATA
60
EXECUTION NW
(B)
EXPOSURE PERIOD PATTERN P-2 (CODE C-2)
5-2
IMAGE DATA
64-2
CONVERSION NW
60
EXECUTION NW
(C)
EXPOSURE PERIOD PATTERN P-3 (CODE C-3)
5-3
IMAGE DATA
64-3
CONVERSION NW
60
EXECUTION NW

Fig. 45

SCENE
8
SUBJECT
9
LIGHT
1A
SENSOR SYSTEM
1
SENSOR
3
2
PIXEL ARRAY SECTION
Ht
Wd
4
DRIVE UNIT
5
5-1 5-2 5-3 5-4
IMAGE DATA
Ht
Wd
6
PROCESSING UNIT
41
CODE GENERATION SECTION
7
STORAGE SECTION
40
BASE FILTER
60
EXECUTION NW

Fig. 46

100
10
1
INFORMATION PROCESSING DEVICE
11
ACQUISITION SECTION
12
DATA GENERATION SECTION
13
TRAINING SECTION
14
NW GENERATION SECTION
15
STORAGE SECTION
110
ORIGINAL DATA
• TIME-SERIES IMAGE DATA
• CG MATERIAL DATA
120
TRAINING DATA
• INPUT DATA 121
• GROUND TRUTH DATA 122
130
TRAINING TARGET NW
60
EXECUTION NW
150
INFORMATION PROCESSING PROGRAM
SENSOR
6
PROCESSING UNIT
2
PIXEL ARRAY SECTION
4
DRIVE UNIT
7
STORAGE SECTION
40
BASE FILTER
60
EXECUTION NW

# Fig. 47

(A)
130
TRAINING TARGET NW
131
FEATURE AMOUNT
132
FEATURE AMOUNT
…
TEMPORAL CONV
SPATIAL CONV
…
(B)
130
TRAINING TARGET NW
133
FEATURE AMOUNT
…
3D Conv
…

Fig. 48
13
TRAINING SECTION
12
DATA GENERATION SECTION
TRAINING STATUS
121
INPUT DATA
t
Ht
Wd
130
TRAINING TARGET NW
131
TEMPORAL Conv
132
SPATIAL Conv
FEEDBACK
122
GROUND TRUTH DATA
COMPARISON AND FEEDBACK
LOSS VALUE
OUTPUT DATA

# Fig. 49

| EXAMPLE OF GENERATION METHOD | ORIGINAL DATA 110 | DATA GENERATION SECTION 12 | INPUT DATA 121 | TRAINING TARGET NW 130 |
|---|---|---|---|---|
| GENERATION METHOD 1 | TIME-SERIES IMAGE DATA | UTILIZED AS IS | t Ht Wd | 131 132 130 |
| GENERATION METHOD 2 | CG MATERIAL DATA | CG RENDERER | t Ht Wd | 131 132 130 |
| GENERATION METHOD 3 | TIME-SERIES IMAGE DATA | NeRF | t Ht Wd | 131 132 130 |
| GENERATION METHOD 4 | LOW-FRAME -RATE TIME-SERIES IMAGE DATA | FRAME INTERPOLATION | t Ht Wd | 131 132 130 |
| ... | ... | ... | ... | ... |

Fig. 50
13
TRAINING SECTION
122
GROUND TRUTH DATA
COMPARISON AND FEEDBACK
LOSS VALUE
OUTPUT DATA
FEEDBACK
132
SPATIAL Conv
FEEDBACK
131
TEMPORAL Conv
130
TRAINING TARGET NW
121
INPUT DATA
Ht
Wd
12
DATA GENERATION SECTION
TRAINING STATUS

Fig. 51

| EXAMPLE OF GENERATION METHOD | ORIGINAL DATA 110 | DATA GENERATION SECTION 12 | INPUT DATA 121 | TRAINING TARGET NW 130 |
|---|---|---|---|---|
| GENERATION METHOD 11 | CG MATERIAL DATA | DIFFERENTIABLE CG RENDERER | Ht Wd | 131 132 130 |
| GENERATION METHOD 12 | TIME-SERIES IMAGE DATA | NeRF EDITING | Ht Wd | 131 132 130 |
| ... | ... | ... | ... | ... |

13
TRAINING SECTION
121
INPUT DATA
DATA AUGMENTATION
121a
INPUT DATA
130
TRAINING TARGET NW
OUTPUT DATA
FILTER REGULARIZATION
122
GROUND TRUTH DATA
COMPARISON AND FEEDBACK
LOSS VALUE

Fig. 52

Fig. 53

131
TEMPORAL Conv
FILTER REGULARIZATION
WEIGHT OF CONVOLUTION KERNEL
W
T
t
t10
t20
COST WEIGHTING
T
t
t10
t20
LOSS VALUE

# Fig. 54

(A)
SUBJECT MOTION PERIOD OF INPUT DATA 121
T
121a
INPUT DATA
t
t10
t20
(B)
SUBJECT MOTION PERIOD OF INPUT DATA 121
T
121a
INPUT DATA
t
t10
t20
(C)
SUBJECT MOTION PERIOD OF INPUT DATA 121
T
121a
INPUT DATA
t
t10
t20

# Fig. 55

(A)
T
121a
INPUT
DATA
t
t10
t20
(B)
T
121a
INPUT
DATA
t
t10
t20

Fig.56
14
NW GENERATION SECTION
130
TRAINING TARGET NW
131
TEMPORAL Conv
SPATIAL Conv
132
60
EXECUTION NW
SPATIAL Conv
62
41
CODE GENERATION SECTION
40
BASE FILTER
KERNEL WEIGHT W
t
EXPOSURE PERIOD PATTERN P
... 0 0 0 1 1 1 0 0 ...
CODE C
(EXPOSURE ON) 1
(EXPOSURE OFF) 0
t

Fig. 57

FILTER DURING
MACHINE LEARNING
BASE FILTER 40
CODE GENERATION SECTION 41
FILTER a
FILTER b
FILTER c
FILTER d
FILTER a+b
FILTER c+d

Fig. 58

| FILTER DURING MACHINE LEARNING | BASE FILTER 40 CODE GENERATION SECTION 41 |
|---|---|
| FILTER e | FILTER $e^{+}$<br>FILTER $e^{-}$ |
| FILTER f | FILTER $f^{+}$<br>FILTER $f^{-}$ |
| ⋮ | ⋮ |

# Fig. 59

14
NW GENERATION SECTION
130
TRAINING TARGET NW
133
3D Conv
TEMPORAL Conv
131
SPATIAL Conv
132
60
EXECUTION NW
SPATIAL Conv
62
41
CODE GENERATION SECTION
40
BASE FILTER

Fig. 60

INPUT DATA
121
130
133
3D Conv
OUTPUT DATA
132
SPATIAL Conv
131
TEMPORAL Conv
OUTPUT DATA
DISTILLATION

Fig. 61

START
S1
GENERATE EXECUTION NW 60
S11
ACQUIRE ORIGINAL DATA 110
S12
GENERATE TRAINING DATA 120
S13
PERFORM MACHINE LEARNING ON TRAINING TARGET NW 130
S14
GENERATE EXECUTION NW 60 ON THE BASIS OF TRAINING TARGET NW 130
END

Fig. 62

START
S2
GET IMAGE DATA 5
S21
DRIVE PIXEL ARRAY SECTION 2 SUCH THAT PIXELS 3 ARE EXPOSED WITH DESIRED EXPOSURE PERIOD PATTERN P
S22
GET IMAGE DATA 5 ON THE BASIS OF PIXEL SIGNAL FROM EACH PIXEL 3
S3
PROCESS IMAGE DATA 5 BY USING EXECUTION NW 60
END

Fig. 63

5
60
IMAGE DATA
EXECUTION NW
AUXILIARY INFORMATION

Fig. 64

5
60
IMAGE DATA
EXECUTION NW
AUXILIARY INFORMATION

Fig. 65

FRAME n
5
60
IMAGE DATA
EXECUTION NW
FRAME n + 1
5
60
IMAGE DATA
EXECUTION NW
t

Fig. 66

1000
COMPUTER
1100
CPU
1200
RAM
1300
ROM
1050
1400
HDD
1450
PROGRAM DATA
1500
COMMUNICATION INTERFACE
1600
INPUT/OUTPUT INTERFACE
1550
1650
INPUT/OUTPUT DEVICE

# INTERNATIONAL SEARCH REPORT

International application No.
**PCT/JP2024/029744**

**A. CLASSIFICATION OF SUBJECT MATTER**

***H04N 25/53***(2023.01)i; ***G06T 1/40***(2006.01)i; ***H04N 23/54***(2023.01)i; ***H04N 23/70***(2023.01)i; ***H04N 23/95***(2023.01)i; ***H04N 23/667***(2023.01)i; ***H04N 25/40***(2023.01)i; ***H04N 25/70***(2023.01)i
FI: H04N25/53; H04N23/95; H04N23/70; H04N23/667; H04N23/54; G06T1/40; H04N25/40; H04N25/70

According to International Patent Classification (IPC) or to both national classification and IPC

**B. FIELDS SEARCHED**

Minimum documentation searched (classification system followed by classification symbols)

H04N25/53; G06T1/40; H04N23/54; H04N23/70; H04N23/95; H04N23/667; H04N25/40; H04N25/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-56881 A (PANASONIC INTELLECTUAL PROPERTY MANAGEMENT CO., LTD.) 05 April 2018 (2018-04-05) paragraphs [0015]-[0019], [0028]-[0031], [0044]-[0045], [0083]-[0085], [0089]-[0090], fig. 1-4, 7-8, 12 | 1, 7-9, 11-12, 18 |
| Y | | 2-6, 14, 17 |
| A | | 10, 13, 15-16 |
| Y | US 2020/0007738 A1 (QUALCOMM INCORPORATED) 02 January 2020 (2020-01-02) paragraphs [0032]-[0033], fig. 3-4 | 2-3, 14, 17 |
| A | | 15-16 |
| Y | JP 2020-113809 A (SONY CORPORATION) 27 July 2020 (2020-07-27) paragraphs [0023]-[0031], fig. 1-2 | 2-3, 14, 17 |
| A | | 15-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 November 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/029744**

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2021-111413 A (BEIJING BAIDU NETCOM SCIENCE AND TECHNOLOGY CO., LTD.) 02 August 2021 (2021-08-02)<br>paragraph [0066] | 3<br><br>14-16 |
| Y<br><br>A | JP 2023-511630 A (DEEPMIND TECHNOLOGIES LTD.) 20 March 2023 (2023-03-20)<br>paragraphs [0046]-[0047] | 3<br><br>14-16 |
| Y<br><br>A | JP 2022-553749 A (ELLIPSIS HEALTH, INC.) 26 December 2022 (2022-12-26)<br>paragraphs [0032], [0036] | 3<br><br>14-16 |
| Y | JP 2019-29714 A (NAC IMAGE TECHNOLOGY INC.) 21 February 2019 (2019-02-21)<br>paragraphs [0013]-[0017] | 4-6 |

Form PCT/ISA/210 (second sheet) (July 2022)

**INTERNATIONAL SEARCH REPORT**

International application No.
**PCT/JP2024/029744**

**Box No. III Observations where unity of invention is lacking (Continuation of item 3 of first sheet)**

This International Searching Authority found multiple inventions in this international application, as follows:

Document 1: JP 2018-56881 A (PANASONIC INTELLECTUAL PROPERTY MANAGEMENT CO., LTD.) 05 April 2018 (2018-04-05) paragraphs [0015]-[0019], [0028]-[0031], [0044]-[0045], [0083]-[0085], [0089]-[0090], fig. 1-4, 7-8, 12 & US 2019/0219891 A1 paragraphs [0030]-[0035], [0048]-[0051], [0061]-[0084], [0105]-[0107], [0111]-[0112], fig. 1-4, 7-8, 12 & WO 2018/061427 A1 & DE 112017004948 B & CN 109792492 A

Claims are classified into four inventions below.

(Invention 1) Claims 1-3 and 14-18

Claim 1 lacks novelty in light of document 1, and thus does not have a special technical feature.

Claim 2 has the special technical feature in which the “image data is input into an execution neural network (NW) that performs spatial computation.” Claims 3 and 17 having the technical feature, and claims 14-16 having a technical feature corresponding to the technical feature are classified as invention 1. Claim 18 substantially identical to or similarly closely related to claim 1 is classified as invention 1.

Therefore, claims 1-3 and 14-18 are classified as invention 1.

(Invention 2) Claims 4-6

Claim 4 and claims 5-6 referring to claim 4 are dependent from claim 1 classified as invention 1, but the technical feature added to claim 1 in claim 4 in which a “plurality of pixels in the pixel array unit are grouped into a plurality of pixel groups, and the driving unit drives the pixel array unit such that one piece of the image data is obtained from one pixel group” has little technical relevance to the technical feature of claim 1 in which the “driving unit drives the pixel array unit such that the pixels are exposed in an exposure period pattern that includes a plurality of exposure periods within one frame period.” Therefore, claims 4-6 are not inventively related to claim 1.

Claims 4-6 are not substantially identical to or similarly closely related to any of the claims classified as invention 1.

Therefore, claims 4-6 cannot be classified as invention 1.

Claims 4-6 have the technical feature of claim 4, and are thus classified as invention 2.

(Invention 3) Claims 7-11

Claim 7 and claims 8-11 referring to claim 7 are dependent from claim 1 classified as invention 1, but the technical feature added to claim 1 in claim 7 in which the “driving unit drives the pixel array section such that the exposure period pattern switches in response to a trigger, and the trigger includes at least one of a change in the speed of at least one of the scene or the subject, a change in the brightness of at least one of the scene or the subject, a change in the state of the pixels, or a change in mode” has little technical relevance to the technical feature of claim 1 in which the “driving unit drives the pixel array unit such that the pixels are exposed in an exposure period pattern that includes a plurality of exposure periods within one frame period.” Therefore, claims 7-11 are not inventively related to claim 1.

Claims 7-11 are not substantially identical to or similarly closely related to any of the claims classified as invention 1, and invention 2. Therefore, claims 7-11 cannot be classified as any one of invention 1 and invention 2.

Claims 7-11 have the technical feature of claim 7, and are thus classified as invention 3.

(Invention 4) Claims 12-13

Claim 12 and claim 13 referring to claim 12 are dependent from claim 1 classified as invention 1, but the technical feature added to claim 1 in claim 12 in which the “driving unit includes a code generation unit that generates a code defining the exposure period pattern, and the driving unit drives the pixel array unit in accordance with the code generated by the code generation unit” has little technical relevance to the technical feature of claim 1 in which the “driving unit drives the pixel array unit such that the pixels are exposed in an exposure period pattern that includes a plurality of exposure periods within one frame period.” Therefore, claims 12-13 are not inventively related to claim 1.

Claims 12-13 are not substantially identical to or similarly closely related to any of the claims classified as invention 1, invention 2, or invention 3. Therefore, claims 12-13 cannot be classified as any one of invention 1, invention 2, and invention 3.

Claims 12-13 have the technical feature of claim 12, and are thus classified as invention 4.

INTERNATIONAL SEARCH REPORT

International application No.
**PCT/JP2024/029744**

**Box No. III Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2024/029744**

| Patent document cited in search report | Publication date (day/month/year) | Patent family member(s) | Publication date (day/month/year) |
|---|---|---|---|
| JP 2018-56881 A | 05 April 2018 | US 2019/0219891 A1 paragraphs [0030]-[0035], [0048]-[0051], [0061]-[0084], [0105]-[0107], [0111]-[0112], fig. 1-4, 7-8, 12 | |
| | | WO 2018/061427 A1 | |
| | | DE 112017004948 B | |
| | | CN 109792492 A | |
| US 2020/0007738 A1 | 02 January 2020 | WO 2020/005899 A1 | |
| | | TW 202007132 A | |
| JP 2020-113809 A | 27 July 2020 | US 2022/0094842 A1 paragraphs [0043]-[0051], fig. 1-2 | |
| | | WO 2020/145142 A1 | |
| JP 2021-111413 A | 02 August 2021 | US 2021/0216715 A1 paragraph [0072] | |
| | | EP 3852002 A1 | |
| | | CN 111274815 A | |
| | | KR 10-2021-0092147 A | |
| JP 2023-511630 A | 20 March 2023 | US 2023/0073326 A1 paragraphs [0051]-[0052] | |
| | | WO 2021/152515 A1 | |
| | | EP 4097643 A1 | |
| | | KR 10-2022-0130177 A | |
| | | CN 115280322 A | |
| JP 2022-553749 A | 26 December 2022 | US 2022/0328064 A1 paragraphs [0051], [0055] | |
| | | WO 2021/081418 A1 | |
| | | EP 4048140 A1 | |
| | | CA 3155809 A | |
| JP 2019-29714 A | 21 February 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014511531 A

### Non-patent literature cited in the description

- **DEJIA XU** ; **PEIHAO WANG** ; **YIFAN JIANG** ; **ZHIWEN FAN** ; **ZHANGYANG WANG**. Signal Processing for Implicit Neural Representations. Cornell University, 13 December 2022